# EUROPEAN PATENT SPECIFICATION

(11) **EP 3 779 273 B1**
(45) Date of publication and mention of the grant of the patent: **10.01.2024**
(21) Application number: 20189055.5
(22) Date of filing: 31.07.2020
(51) Int. Cl.: G03B 15/06, G02F 1/1334, H05B 45/22, H05B 47/11, F21V 14/00

(54) **LIGHTING SYSTEM AND CONTROL THEREOF**
BELEUCHTUNGSSYSTEM UND STEUERUNG DAVON
SYSTÈME D'ÉCLAIRAGE ET SA COMMANDE

(30) Priority: 31.07.2019 GB 201910944; 09.09.2019 GB 201912994; 09.09.2019 GB 201912995; 22.01.2020 GB 202000954
(43) Date of publication of application: 17.02.2021
(73) Proprietor: Rotolight Technologies Limited, Wooburn Green HP10 0PE (GB)
(72) Inventor: GAMMONS, Roderick Aaron, Iver Heath, Buckinghamshire SL0 0NH (GB); GAMMONS, Roderick Allen, Iver Heath, Buckinghamshire SL0 0NH (GB); FRANCIS, Andrew, Iver Heath, Buckinghamshire SL0 0NH (GB)
(74) Representative: Kramer, Dani

(56) References cited:
- US-A1- 2006 039 160
- US-A1- 2018 167 539
- US-A1- 2019 186 712

## Description

### Field of the disclosure

The present disclosure relates to a light containing an adjustable diffuser. The present disclosure further relates to a system containing the light as well as a method of adjusting the diffusion of a light containing an adjustable diffuser.

The present disclosure also relates to a lighting system comprising a user interface. In particular, the present disclosure relates to a lighting system comprising a user interface that is arranged to display a visualisation of the output of the lighting device.

This present disclosure also relates to a lighting system and attachments therefor. More specifically, the disclosure relates to an attachment mechanism for attaching a lighting device module, such as a power supply, to a lighting assembly, and to an attachment mechanism for attaching a light modification device, such as a barn door module, to a lighting assembly. In particular, the attachment mechanisms are easy to use and/or quick releasing.

### Background to the Disclosure

Diffusers are commonly used in the cinema, TV, broadcast and photographic industries to create soft natural lighting with no hard shadows. Typically, diffusers consist of a sheet of frosted glass, Perspex or gauze which is manually fitted in front of a light. A gel insert may also be placed in front of a light, or a matt reflective sheet can also be used to reflect diffuse light onto the subject.

Wide varieties of diffusion are required to create a specific 'look' for a scene and it is common for dozens or even hundreds of different diffusers to be used (on various lights) in a single set. Further, different diffusers are often necessary for different scenes, so that for each light the diffusers must be regularly changed.

This process currently requires a gaffer or lighting assistant to physically climb a ladder, or electronically lower a truss so as to manually adjust the diffuser on numerous lights; this has a high cost in terms of the time and effort required.

Further, the lighting assistant is typically unable to determine the effect of changing settings without extensive trial and error, which also incurs a high cost in terms of the time and effort required to configure a lighting system.

In addition, camera and photographic lights are known to have a number of different attachments, enhancements, augmentations, and other components. Means for mounting these different components generally are permanent or semi-permanent.

An increasing number of professional and amateur photographic and/or cinematography related equipment is available to the field. A need exists for versatile lighting systems and apparatuses such that users can easily and flexibly try new or different equipment. US2019186712A1 relates to providing a variable light beam from a light source. The light source can be an LED light source or other source. The light source includes basic collimation optics, such as reflector or Fresnel lens, an electrically controllable LC device, such as a polydisperse LC film, in front of the incident spotlight beam. Preferably the polydisperse LC film includes transparent flat uniform electrode layers. The LC device can be autonomous of the light source. The proposed solution relates to a dynamically controllable, preferably polarizer-free and pixelfree, beam shape light source module including a controllable light beam control module and a light source module providing the initial light beam in a scanner light source, a camera flash, an architectural, automobile or industrial lighting device.

US2006039160A1 relates to lighting systems that produce an optical beam. Moreover, in various embodiments, the beam may be altered to provide, for example, a narrow beam or a wide beam. One such lighting system includes a light source, a diffusing optical element, and a projection lens. The diffusing optical element is disposed between the light source and the projection lens and can be translated to provide zoom capability.

US2018167539A1 relates to a light source module including an array of illumination elements and a light diffusing material. The light source module is configured to receive a control signal for adjusting diffusion of light emitted from the light source module and in response adjust the amount of diffusion of light emitted from the light source module. A light source module may include a segmented light diffusing material where each segment is associated with an illumination element. And individual segments may have light diffusing properties that are different than other segments of the light diffusing material. Some illumination elements may emit light of a different colour spectrum than other illumination elements, and a light diffusing material may scatter the different coloured light to illuminate a scene with combinations of light of different colours. A light source module may be embedded in a mobile computing device.

### Summary of the Disclosure

The invention is defined by the appended claims.

According to at least one aspect of the disclosure herein, there is described: a lighting device comprising a user interface that is arranged to display a visualisation of an output of the lighting device. The visualisation may be an image and/or a direct graphical representation of the output.

Optionally, the visualisation is substantially a replication of the output of the lighting device and/or the visualisation has substantially the same colour and/or brightness as the output of the lighting device.

Optionally, the user interface is an integral part of the lighting device.

Optionally, the user interface is integral with, and/or removable from, the lighting device.

Optionally, the user interface is located on the rear of the lighting device.

Optionally, the user interface is remote from the lighting device.

Optionally, the user interface comprises a multi-colour display. Optionally, the user interface comprises a full-colour display. Optionally, the user interface comprises a liquid crystal display (LCD).

Optionally, the lighting device comprises a power supply arranged to power the user interface.

Optionally, the user interface comprises a touchscreen display.

Optionally, the user interface comprises quick-access touch buttons arranged to enable quick access to features of the user interface.

Optionally, the user interface comprises a tactile control means. Optionally, the user interface comprises rotatable dials.

Optionally, the user interface comprises means to record settings; and means to recall recorded settings.

Optionally, the lighting device comprises a sensor for measuring a property of the output of the lighting device and/or the environment of the lighting device. Optionally, the user interface is arranged to alter the graphical representation based on a measurement of the sensor.

Optionally, the user interface is arranged to display a graphical representation of special effects that can be produced by the lighting deice.

Optionally, the user interface is arranged to show a time profile of the output of the lighting device.

Optionally, the user interface is arranged to display a variation in space of the output of the lighting device. Optionally, the user interface is arranged to display a two dimensional graphical representation of the output of the lighting device. Optionally, the user interface is arranged to display a three dimensional graphical representation of the output of the lighting device.

Optionally, the lighting device comprises means for storing calibration information relating to the user interface. Optionally, the calibration information comprises information relating a desired output of the user interface to a required input signal.

Optionally, the calibration information comprises a characteristic chart and/or a look-up table.

Optionally, the user interface is arranged to display a graphical representation of the predicted output from a component being placed in front of the lighting device.

Optionally, the user interface is arranged to display a graphical representation of the predicted output of a component being placed in front of the lighting device, the component being selected from a database stored in the lighting device. Optionally, the component is a diffuser and/or filter.

Optionally, the lighting device comprises a database of components; wherein the user interface is arranged to display a visualisation in dependence on a selected component. Optionally, the components comprise filters, optionally industry-standard filters.

Optionally, the user interface is arranged to sort the components into groups; wherein groups of components are displayed on the user interface to enable selection of a component. Optionally, the user interface is arranged to sort the components by colour and/or manufacturer.

Optionally, the lighting device comprises an interface control unit arranged to adjust the properties of the user interface.

Optionally, the lighting device comprises: a light emitter; and a control unit; wherein the control unit is arranged to adjust the properties of the light emitter.

Optionally, the lighting device comprises an adjustable diffuser, wherein the control unit is arranged to adjust the properties of the adjustable diffuser.

Optionally, the control unit is arranged to adjust the properties of the user interface.

Optionally, the control unit is arranged to interact with an/the interface control unit.

Optionally, the control unit and the interface control unit are physically connected.

Optionally, the lighting device comprises an interface adjustable diffuser located in front of the user interface.

Optionally, the interface control unit is arranged to adjust the properties of the user interface in dependence on the properties of the light emitter and/or a/the adjustable diffuser.

Optionally, the lighting device comprises two component control units, being: the control unit arranged to adjust the properties of the light emitter and/or a/the adjustable diffuser; and an/the interface control unit arranged to adjust the properties of the user interface.

Optionally, the first component control unit and the second component control unit are arranged to communicate using a bi-directional handshake protocol.

Optionally, the lighting device comprises a power supply, wherein the power supply is arranged to power both of the user interface and the light emitter.

Optionally, the user interface is arranged to display the visualisation in a plurality of modes.

Optionally, each of the modes is arranged to display information relating to the output in a different format.

Optionally, the user interface is arranged to change between the modes in order to display the same graphical representation in a different format.

According to another aspect of the disclosure herein, there is described: a method of displaying a visualisation of the output of a lighting device on a user interface, comprising: providing a lighting device comprising a user interface; determining a desired output of the lighting device; and displaying a visualisation of the desired output on the user interface.

Optionally, displaying a visualisation of the desired output comprises substantially replicating the desired output.

Optionally, displaying a visualisation of the desired output comprises altering the user interface to have substantially the same colour and/or brightness as the output of the lighting device.

Optionally, the method comprises: selecting a characteristic using a first, coarse, selection; and refining the characteristic using a second, fine, selection.

Optionally, the method comprises displaying a visualisation based on use of a component, the characteristics of the component being stored in the lighting device. Optionally, the component is a filter.

According to at least one aspect of the disclosure herein, there is described: a lighting device comprising: a light emitter; a diffuser; and a control unit; wherein the control unit is capable of adjusting the properties of the diffuser.

Optionally, the control unit is an integral part of the lighting device.

Optionally, the lighting device further comprises a storage means for storing information relating to the light, preferably information relating to the diffuser and/or light emitter. The storage means may, for example, comprise a hard disk drive (HDD), a solid state drive (SSD), and random access memory (RAM).

Optionally, the control unit is capable of adjusting the properties of the light emitter. According to at least one aspect of the disclosure herein, there is described: a lighting device comprising: a light emitter; a diffuser; and a control unit; wherein the control unit is capable of adjusting the properties of the light emitter and the diffuser.

Optionally, the control unit is capable of adjusting the brightness and/or hue of the light emitter.

The control unit is arranged to adjust the properties of the light emitter in dependence on the diffusivity of the diffuser. Optionally, the control unit is arranged to continually alter the properties of the light emitter. Optionally, the control unit is arranged to continually alter the properties of the light emitter so as to maintain one or more characteristics of the output of the lighting device.

Optionally, the control unit is arranged to adjust the properties of the light emitter to maintain at least one of: a hue; a colour temperature; an intensity; and a luminance.

Optionally, the lighting device is arranged to adjust the properties of the light emitter in dependence on predetermined calibration information. Optionally, the predetermined calibration information relates to the performance of the diffuser.

Optionally, the control unit is arranged to adjust the properties of the diffuser based on predetermined calibration information.

According to at least one aspect of the disclosure herein, there is described: a lighting device comprising: a light emitter; a diffuser; and a control unit; wherein the control unit is capable of adjusting the properties of the diffuser based on predetermined calibration information.

Optionally, the calibration information comprises information relating a desired output property to a required input signal.

Optionally, the calibration information comprises information relating a desired output opacity to a required input voltage and/or current.

Optionally, the calibration information comprises a diffuser transparency characteristic and/or a diffuser chromaticity characteristic.

Optionally, the calibration information comprises information relating a change in the opacity of the diffuser to a change in one or more parameters of the output of the diffuser. Optionally, the one or more parameter comprises the hue, luminance, softness, and/or colour temperature of the output of the lighting device.

Optionally, the calibration information is capable of being updated in dependence on a measured output of the lighting device.

Optionally, the control unit is arranged to limit the voltage supplied to the diffuser based on adjustment properties of the diffuser, preferably wherein the control unit is arranged to limit the voltage to a range in which changes in voltage have a substantial change on the properties of the diffuser.

Optionally, the diffuser is an integral component of the lighting device.

Optionally, the lighting device further comprises a front cover; wherein the diffuser is mounted to the rear of the front cover.

According to at least one aspect of the disclosure herein, there is described: a lighting device comprising: a light emitter; a diffuser; and a control unit; wherein the control unit is capable of adjusting the properties of the diffuser; and wherein the diffuser is mounted to the rear of a front cover of the lighting device.

Optionally, the diffuser is mounted on the lighting device indirectly via the front cover.

Optionally, the lighting device further comprises a measurement sensor arranged to measure a property relating to the output of the lighting device.

Optionally, the measurement sensor is arranged to measure at least one of: the diffusivity; the luminance; the hue; and the colour temperature of an environment and/or an output of the lighting device.

Optionally, the control unit is arranged to adjust the properties of the diffuser and/or the light emitter based on an output of the measurement sensor.

According to at least one aspect of the disclosure herein, there is described: a lighting device comprising: a light emitter; a diffuser; a sensor and a control unit; wherein the sensor is arranged to measure a property relating to the output of the lighting device; and wherein the control unit is arranged to adjust the properties of the diffuser in dependence on a measurement of the sensor.

Optionally, the control unit is arranged to compare the measured property value to a desired property value and adjust the diffuser and/or the light emitter accordingly.

Optionally, the control unit is arranged to adjust the opacity of the diffuser.

Optionally, the control unit is arranged to adjust the properties of the diffuser so as to control the beam angle and/or softness of the lighting device.

Optionally, the diffuser comprises a polymer dispersed liquid crystal (PDLC).

Optionally, the diffuser is arranged to modify the colour of lighting device passing through the diffuser.

Optionally, the lighting device comprises a plurality of diffusers.

Optionally, the plurality of diffusers are arranged in series, so that light emitted by the light emitter passes through each of the plurality of diffusers.

Optionally, the plurality of diffusers are arranged in parallel, so that light emitted by the light emitter passes through only a single diffuser of the plurality of diffusers.

Optionally, the control unit is capable of separately adjusting the properties of each diffuser.

Optionally, each diffuser is arranged to differently alter colour of lighting device passing through the diffuser.

Optionally, the diffuser comprises a plurality of diffuser elements, wherein the control unit is capable of separately adjusting the properties of each diffuser element.

Optionally, the diffuser comprises a central diffuser element and one or more edge diffuser elements.

Optionally, the lighting device further comprises one or more lenses located between the light emitter and the diffuser, preferably wherein the lenses are arranged to narrow the beam of the light emitter.

According to at least one aspect of the disclosure herein, there is described: a lighting device comprising: a light emitter; a diffuser; a control unit; and one or more lenses; wherein the control unit is capable of adjusting the properties of the diffuser; and wherein the one or more lenses are located in between the light emitter and the diffuser.

Optionally, the lenses are linear planar lenses.

Optionally, the lighting device further comprises a texturing material located between the light emitter and the lenses.

Optionally, the lenses comprise a texturing material located proximate the light emitter.

Optionally, the light emitter comprises one or more light emitting diodes (LEDs), preferably surface mounted LEDs.

Optionally, the light emitter comprises a plurality of LEDs.

Optionally, the lighting device comprises a plurality of lenses, wherein each LED of the plurality of the LEDs is arranged to interact with one of the plurality of lenses.

Optionally, the light emitter comprises an array of LEDs.

Optionally, the plurality of LEDs are oriented differently

Optionally, the plurality of LEDs are arranged irregularly.

Optionally, each LED comprises a plurality of component LEDs, preferably wherein each component LED is arranged to output a different colour of light.

Optionally, the light emitter is spaced from the diffuser, preferably wherein the spacing is such that the lighting device incident on the diffuser is substantially continuous.

Optionally, the light emitter comprises a plurality of different lighting elements, preferably wherein the light emitter comprises lighting elements of different colour and/or intensity.

Optionally, two LEDs of the plurality of LEDs are oriented differently.

Optionally, two LEDs of the plurality LEDs are oriented at greater than 20 degrees, preferably greater than 80 degrees, more preferably greater than 150 degrees, yet more preferably approximately 180 degrees.

Optionally, the two LEDs are adjacent.

Optionally, each pair of adjacent LEDs is oriented differently.

Optionally, the control unit is capable of adjusting the properties of the diffuser using an electric signal.

Optionally, the control unit is arranged to provide to the adjustable diffuser an electric signal that is substantially a square wave.

According to at least one aspect of the disclosure herein, there is described: a light emitter; a diffuser; and a control unit; wherein the control unit is capable of adjusting the properties of the diffuser using an electric signal; and wherein the control unit is arranged to provide an electric signal that is substantially a square wave.

Optionally, the electric signal is provided using a steady electrode that provides substantially 0V and a driving electrode that provides variable voltage.

Optionally, the steady electrode is arranged to be outside of the steady electrode relative to the lighting device.

Optionally, the electric signal has a negligible DC component voltage.

Optionally, the electric signal has a frequency that is between 50Hz and 150Hz.

Optionally, the electric signal has a frequency of greater than 150Hz.

Optionally, the electric signal has a frequency that is a multiple of 50Hz.

Optionally, the electric signal is synchronised with a blackburst signal.

Optionally, the frequency and/or shape of the electric signal is arranged to change in dependence on a property of a camera.

Optionally, the frequency and/or shape of the electric signal is arranged to change in dependence on a shutter angle and/or a frame rate.

Optionally, the frequency and/or shape of the electric signal is adjustable by a user of the lighting device.

Optionally, the frequency and/or shape of the electric signal is adjustable by the control unit.

Optionally, the control unit is arranged to adjust the electric signal in dependence on a power supply.

Optionally, the control unit comprises a user interface.

Optionally, the user interface is an integral part of the lighting device.

Optionally, the user interface comprises an analog control.

Optionally, the user interface comprises at least one of: a demultiplexer; a touchscreen; a wireless user interface; a computer; a smartphone.

Optionally, the control unit is arranged to operate based on instructions received by a communications interface, preferably wherein the communications interface is arranged to receive signals from remote devices.

Optionally, the lighting device is capable of storing settings related to the adjustment of the diffuser.

Optionally, the lighting device is capable of recalling stored settings.

Optionally, the lighting device is arranged to store a selected setting in dependence on a user input.

Optionally, the control unit is capable of adjusting the diffuser based on a desired diffusion profile over a time period.

Optionally, the control unit is capable of adjusting the diffuser and/or the light emitter to provide special effects.

According to at least one aspect of the disclosure herein, there is described: a lighting device comprising: a light emitter; a diffuser; and a control unit; wherein the control unit is capable of adjusting the properties of the diffuser to provide special effects.

Optionally, the special effects include: a flame effect; a lightning effect; a strobe effect; a police lighting devices effect.

Optionally, the lighting device is portable.

Optionally, the lighting device is suitable for cinematographic, photographic, theatrical, film or television use.

Optionally, the control unit is arranged to adjust the diffuser in accordance with a second lighting device, preferably wherein the control unit is arranged to receive a signal from the second lighting device and/or to copy the behaviour of the second lighting device.

Optionally, the control unit is arranged to control a further lighting device, preferably wherein the control unit is arranged to control the further lighting device to copy the behaviour of the lighting device.

According to at least one aspect of the disclosure herein, there is described: a computer program product for operating the lighting device as aforesaid.

According to at least one aspect of the disclosure herein, there is described: a lighting system comprising one or more lighting devices as aforesaid.

Optionally, each lighting device comprises a diffuser with different properties.

According to at least one aspect of the disclosure herein, there is described: a lighting system for cinematographic, photographic, theatrical, film or television use comprising one or more lighting devices as aforesaid.

According to at least one aspect of the disclosure herein, there is described: a lighting system comprising a first lighting device and a second lighting device, wherein each of the first lighting device and the second lighting device comprises: a light emitter; a diffuser; and a control unit; wherein the control unit is capable of adjusting the properties of the diffuser.

Optionally, the control unit of the first lighting device is capable of controlling the control unit of the second lighting device.

According to at least one aspect of the disclosure herein, there is described: a lighting system comprising a first lighting device; a second lighting device and a control unit, wherein each of the first lighting device and the second lighting device comprises: a light emitter; a diffuser; and wherein the control unit is capable of adjusting the properties of the diffuser of the first lighting device and the diffuser of the second lighting device.

Optionally, the control unit is capable of adjusting the properties of the light emitter of the first lighting device and the light emitter of the second lighting device.

According to at least one aspect of the disclosure herein, there is described: a computer program product for operating a lighting system as aforesaid.

According to at least one aspect of the disclosure herein, there is described: a system comprising a lighting device as aforesaid and a camera.

According to at least one aspect of the disclosure herein, there is described: a computerimplemented method of controlling a lighting device, the method comprising: adjusting the properties of a control signal provided to a diffuser so as to alter the properties of the diffuser.

According to at least one aspect of the disclosure herein, there is described: a method of obtaining calibration information for an adjustable diffuser, the method comprising: providing a lighting device source with known properties to a first side of the adjustable diffuser; measuring a first set of properties of an environment on a second side of the adjustable diffuser; adjusting the properties of the diffuser; measuring a second set of properties of the environment; and determining a characteristic of the diffuser based on the measured sets of properties.

Optionally, determining a characteristic comprises selecting a characteristic from a preset list of characteristics.

Optionally, providing a lighting device to a first side of the adjustable diffuser comprises controlling a light emitter that is a part of a lighting device comprising the diffuser.

According to another aspect there is provided a diffuser assembly for a lighting device comprising: first and second support sheets; and an adjustable diffuser having adjustable properties, wherein the adjustable diffuser and the first and second support sheets are arranged in a sandwich structure.

Optionally, the adjustable diffuser is disposed between the first and second support sheets.

Optionally, the adjustable diffuser is adhered to the first support sheet.

Optionally, the adjustable diffuser is adhered by an optically approved adhesive.

According to another aspect there is provided a diffuser assembly for a lighting device comprising: first and second support sheets; an adjustable diffuser having adjustable properties; and a passive diffuser, wherein the first and second support sheets, the adjustable diffuser, and the passive diffuser are arranged in sandwich structure.

Optionally, the adjustable diffuser is disposed between the first and second support sheets.

Optionally, the passive diffuser is disposed between the first and second support sheets.

Optionally, the passive diffuser is disposed outside of the first and second support sheets.

Optionally, the adjustable diffuser is adhered to the first support sheet.

Optionally, the adjustable diffuser is adhered by an optically approved adhesive.

Optionally, one of the first or second support sheets is the passive diffuser.

Optionally, the diffuser assembly further comprises at least one spacer to space the adjustable diffuser from an adjacent layer in the sandwich structure.

Optionally, the first and second support sheets are fixed together via at least one fixing point on each of the first and second support sheets.

Optionally, the adjustable diffuser comprises at least one cut-out portion corresponding to the at least one fixing point.

According to another aspect there is provided a lighting device comprising the diffuser assembly as aforementioned.

According to another aspect there is provided a kit of parts comprising: a lighting device; and a diffuser assembly as aforementioned.

According to another aspect there is provided a kit of parts comprising: first and second support sheets; an adjustable diffuser having adjustable properties; and an adhesive for use in assembling the adjustable diffuser and the first and second support sheets into a sandwich structure.

Optionally, the adhesive is an optically approved adhesive.

According to another aspect there is provided a lighting device comprising: a light emitter comprising at least one of: a red light emitting diode; a green light emitting diode; a blue light emitting diode; or a white light emitting diode; and a diffuser; wherein at least one property of the light emitter is tuned to suit at least one property of the diffuser.

Optionally, the at least one property of the light emitter comprises: a hue; a colour temperature; an intensity; a luminance; a total brightness of the light emitter; a relative brightness of certain light emitting diodes within the light emitter; and/or a wavelength of light emitted by certain light emitting diodes within the light emitter.

Optionally, the at least one property of the diffuser comprises: a diffusivity; a transmissivity; a transmissivity as a function of position on the diffuser; and/or a chromaticity or wavelength shift caused by the diffuser.

Optionally, the at least one property of the light emitter is tuned in dependence on predetermined calibration information.

Optionally, the predetermined calibration information relates to a measurement of: the diffuser's diffusivity; the diffuser's transmissivity; the diffuser's transmissivity as a function of position on the diffuser; or a chromaticity or wavelength shift caused by the diffuser.

Optionally, the diffuser is an adjustable diffuser with adjustable properties.

According to another aspect there is provided a lighting device comprising: a light emitter; an adjustable diffuser with adjustable properties; means for storing a range of settings for the adjustable diffuser corresponding to previously measured diffusion effects; and means for recalling a diffusion setting from said range of stored settings such that the lighting device recreates the corresponding previously measured diffusion effect.

According to another aspect there is provided a method of manufacturing a diffuser assembly for a lighting device, comprising: providing a support sheet; and adhering an adjustable diffuser to the support sheet with an optically approved adhesive.

Optionally, the adhering comprises aligning cut-out portions of the adjustable diffuser with fixing points of the support sheet.

Optionally, the method further comprises assembling a cover sheet with the combined support sheet and adjustable diffuser.

Optionally, the assembling comprises securing the cover sheet to the support sheet via the fixing points.

Optionally, the assembling comprises positioning spacers between the support sheet and the cover sheet to space the cover sheet from the combined support sheet and adjustable diffuser.

Optionally, the method further comprises assembling a passive diffuser with the combined adjustable diffuser and support sheet.

Optionally, the environment in which the diffuser assembly is manufactured, the support sheet, the cover sheet, and/or the adjustable diffuser are/is cleaned to remove contaminants.

Optionally, the cleaning comprises use of an isopropanol alcohol wipe.

According to another aspect there is provided a lighting device comprising: means for storing a range of diffusion settings corresponding to previously measured diffusion effects; and means for recalling a diffusion setting from said range of stored settings thereby to recreate the corresponding diffusion effect.

Optionally, the stored diffusion settings correspond to the diffusion effect of using a particular passive diffuser in combination with a light of.

According to at least one aspect of the disclosure herein, there is described: a lighting assembly comprising: at least one quick release device, the at least one quick release device comprising a light modification device protrusion, the light modification device protrusion being configured to engage with a protrusion interfacing member of a light modification device.

Optionally, the light modification device protrusion is movable from a locked position to an unlocked position.

Optionally, the light modification device protrusion is biased towards the locked position.

Optionally, the light modification device protrusion is biased using a spring.

Optionally, the at least one quick release device comprises a button.

Optionally, the button is operatively coupled to the light modification device protrusion.

Optionally, the light modification device protrusion and button are an integral component.

Optionally, the movement of the button moves the light modification device protrusion.

Optionally, the depression of the button moves the light modification device protrusion from the locked position to the unlocked position.

Optionally, the light modification device protrusion has a substantially tab like shape, preferably the light modification device protrusion comprises an inclined leading face configured to interface with the light modification device.

Optionally, the light modification device protrusion has a substantially dome like shape.

Optionally, when attaching the light modification device to the lighting assembly, the light modification device slides across the quick release device and a body of the light modification device interfaces with the inclined leading surface of the light modification device protrusion such that the body of the light modification device depresses the light modification device protrusion.

Optionally, when the protrusion interfacing member of the light modification device aligns with the light modification device protrusion, the light modification device protrusion moves into the locked position, preferably, in this position, the light modification device is considered attached to the lighting assembly.

Optionally, when the lighting assembly is attached to the lighting assembly, an abutment surface of the light modification device protrusion abuts a surface of the light modification device and any force applied by the light modification device does not encourage the light modification device protrusion to move from the locked position to the unlocked position.

Optionally, the lighting assembly further comprises an interface configured to interface with a lighting device module, the lighting device module comprising: a first interface configured to removably couple to the lighting assembly, a second interface configured to removably couple to a lighting device mount or a further lighting device module, wherein the first and second interfaces are of an interface type, and wherein the one of the first interface and second interface is a male interface and the other of the first interface and second interface is a female interface complementary to the male interface.

Optionally, the quick release device further comprises colour gel tabs, wherein the colour gel tabs are configured to hold colour gels against the lighting device.

According to at least one aspect of the disclosure herein, there is described: a lighting assembly, comprising an interface configured to interface with a lighting device module, the lighting device module comprising: a first interface configured to removably couple to the lighting assembly, a second interface configured to removably couple to a lighting device mount or a further lighting device module, wherein the first and second interfaces are of an interface type, and wherein the one of the first interface and second interface is a male interface and the other of the first interface and second interface is a female interface complementary to the male interface.

According to at least one aspect of the disclosure herein, there is described: a light modification device releasably attachable to a lighting assembly, comprising: a body, the body comprising at least one protrusion interfacing member.

Optionally, the protrusion interfacing member is an aperture.

Optionally, the light modification device is a barn door module and the barn door module comprises at least one leaf attached to the body.

Optionally, the at least one leaf is pivotable relative the body.

Optionally, the at least one leaf is hingedly coupled to the body of the light modification device.

Optionally, the at least one leaf is manipulable
Optionally, the at least one leaf is manually manipulable.

Optionally, the manipulation of the at least one leaf is controlled by a control unit of the lighting device.

Optionally, the light modification device is configured to releasably attach to the lighting assembly of any one of the preceding lighting assemblies described above.

According to at least one aspect of the disclosure herein, there is described: a lighting device module comprising: a first interface configured to removably couple to a lighting assembly, a second interface configured to removably couple to a lighting device mount or a further lighting device module, wherein the first and second interfaces are of an interface type, and wherein the one of the first interface and second interface is a male interface and the other of the first interface and second interface is a female interface complementary to the male interface.

Optionally, the lighting device module is that of any as herein described.

Optionally, the interface type is such that when coupling the male and female interfaces of the interface type, insertion of one into the other and then rotation is required.

Optionally, the first interface is the male interface and the second interface is the female interface.

Optionally, the particular type of interface comprises: on the female interface: four opening and slot members, one central hole, and two distal holes; and on the male interface: four flanged posts, one central post, and at least one retractable post.

Optionally, the particular type of interface is a Kino Flo ^{®} mounting interface.

Optionally, the lighting device module is any one of: a power supply; a filter control module; a battery module; a DMX controller; a light modification device controller; a user interface module, a lighting device controller, a DMX interface; or a Bluetooth controller, preferably the power supply.

Optionally, the lighting device module is stackable with the further lighting device modules of any one of preceding lighting device modules described above by interfacing the male interface of one of the lighting device modules with the female interface of the other of the lighting device modules.

Optionally, the interface type is an easy to use interface such that the lighting device module and/or further lighting device module can be easily attached or removed.

According to at least one aspect of the disclosure herein, there is described: a modular lighting system, comprising: a lighting assembly as herein described; a light modification device as herein described; and a lighting device module as herein described, wherein the at least one quick release device is configured to allow quick release of the light modification device from the lighting assembly, and wherein the lighting assembly comprises a female interface configured to interface with the male interface of the lighting device module.

Optionally, the light modification device is a barn door module and the lighting device module is a power supply.

According to one broad aspect there is provided a lighting assembly comprising a quick release device adapted to releasably secure a light modification device to the lighting assembly.

According to another aspect there is provided a quick release device as herein described for use with a lighting assembly as herein described.

It can also be appreciated that the methods can be implemented, at least in part, using computer program code. According to another aspect of the present disclosure, there is therefore provided computer software or computer program code adapted to carry out these methods described above when processed by a computer processing means. The computer software or computer program code can be carried by computer readable medium, and in particular a non-transitory computer readable medium. The medium may be a physical storage medium such as a Read Only Memory (ROM) chip or a Hard Disk Drive (HDD). Alternatively, it may be a disk such as a Digital Video Disk (DVD-ROM) or Compact Disk (CD-ROM). It could also be a signal such as an electronic signal over wires, an optical signal or a radio signal such as to a satellite or the like. The disclosure also extends to a processor running the software or code, e.g. a computer configured to carry out the methods described above.

The disclosure also provides a computer program and a computer program product comprising software code adapted, when executed on a data processing apparatus, to perform any of the methods described herein, including any or all of their component steps.

The disclosure also provides a computer program and a computer program product comprising software code which, when executed on a data processing apparatus, comprises any of the apparatus features described herein.

The disclosure also provides a computer program and a computer program product having an operating system which supports a computer program for carrying out any of the methods described herein and/or for embodying any of the apparatus features described herein.

The disclosure also provides a computer readable medium having stored thereon the computer program as aforesaid.

The disclosure also provides a signal carrying the computer program as aforesaid, and a method of transmitting such a signal.

The disclosure extends to methods and/or apparatus substantially as herein described with reference to the accompanying drawings.

As used herein, "visualisation" preferably connotes a direct visual representation of an output. A visualisation enables immediate identification (e.g. picturing) of an output - this might comprise the use of an image and/or a graphical representation. For example, a visualisation may display the colour and/or intensity of a selected lighting output by changing the output brightness and hue of a separate user interface - a user observing the user interface can then immediately picture the effect of the selected lighting output. Indirect representation that requires interpretation to identify an output is not a visualisation. Text and numbers are examples of indirect representations; it is not possible for a user to picture the brightness output of a light merely from a numerical value.

The disclosure will now be described, by way of example, with reference to the accompanying drawings.

### Description of the Drawings

Figure 1 shows a system containing an object and a light;
Figure 2 is a component view of a light containing an adjustable diffuser;
Figure 3 is an illustration of a generic computer device on which components of the light can be implemented;
Figure 4a is an illustration of a section of the light of Figure 2 with a diffuser assembly;
Figure 4b is a cross section of a first example of the diffuser assembly;
Figure 4c is a cross section of a second example of the diffuser assembly;
Figure 4d is an exploded view of the diffuser assembly;
Figure 5a is a graph showing typical optical characteristics of a polymer dispersed liquid crystal (PDLC);
Figure 5b is a graph showing chromaticity coordinates of a polymer dispersed liquid crystal (PDLC);
Figures 6a and 6b show exemplary light emitters;
Figure 7 shows an exemplary flowchart for calibrating a light with an adjustable diffuser;
Figure 8 shows an exemplary flowchart for using an adjustable diffuser to vary the diffusivity of the output of a light;
Figure 9 shows a detailed exemplary flowchart for using an adjustable diffuser to vary the diffusivity of the output of a light; and
Figures 10a and 10b show an embodiment of user controls for controlling the light.
Figure 11a and 11b are schematic illustrations of a lighting assembly with a light modification device attached, the light modification shown in two different positions;
Figure 12a is a schematic illustration of a quick release device;
Figure 12b is an exploded schematic illustration of a quick release device;
Figure 13 is a schematic illustration of a light modification device;
Figure 14a is a schematic illustration of a lighting assembly with four attachment devices;
Figure 14b is a detail of the schematic illustration of the lighting assembly of Figure 4a;
Figure 14c is a detail of the schematic illustration of the lighting assembly of Figure 4a;
Figure 14d is a detail of the schematic illustration of the lighting assembly similar to that of 4c with a light modification device;
Figure 14e is a detail of the schematic illustration of the lighting assembly similar to that of 4c with a light modification device;
Figure 15 is a schematic illustration of a lighting device with a diffusion panel;
Figure 16 is a schematic illustration of a lighting device with an interface member;
Figure 17a and 17b are schematic illustrations of lighting assembly and lighting device module interface members;
Figure 18 is a schematic illustration of a lighting device with a lighting device module;
Figures 19a and 19b are schematic illustrations of a lighting device module;
Figure 20 is a schematic illustration of a lighting assembly with a lighting device module; and
Figure 21 is a component view of a lighting device.

### Description of the preferred embodiments

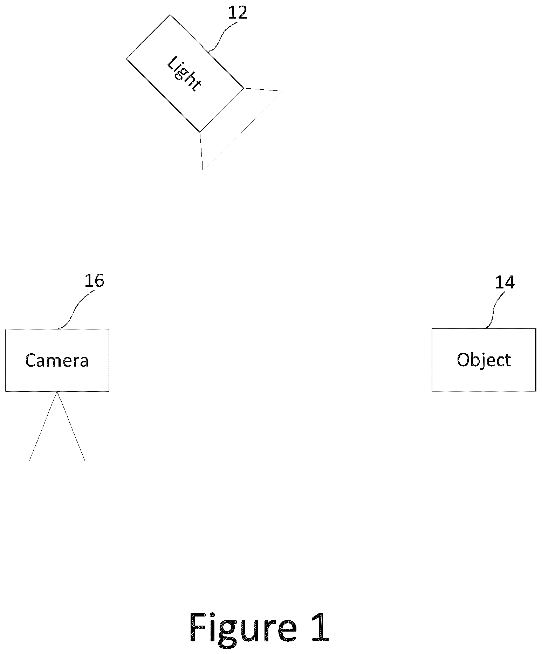

Referring to Figure 1, an exemplary system contains a light 12, an object 14 and a camera 16. Such a system is common in the film and photographic industries, where a director or photographer wishes to illuminate the object 14 in a specific way in order to capture an image with the camera 16. The camera 16 may be arranged to capture single images, e.g. photographs, and may for example be a digital single-lens reflex camera (DSLR). Equally, the camera 16 may be arranged to capture video; the camera 16 may for example be a digital movie camera.

While Figure 1 contains a single light, it will be appreciated that the light 12 may be a component of a lighting system that contains a plurality of similar (or different) lights. Typically, multiple lights are provided which have different lighting characteristics and/or different locations; each light is individually manipulated to interact with the object 14 in the desired way before the image is captured.

Often it is desirable to diffuse the output of the light 12 to create soft natural lighting with reduced shadows. To achieve this diffusion, a diffuser can be placed in front of the light 12 so that the output of the light 12 passes through the diffuser. Problematically, if it is desired to alter the characteristics of the diffusion, the diffuser must be manually replaced or moved. This can result in a multitude of diffusers being needed during filming, which requires a multitude of diffuser adjustments and changes.

The present disclosure relates to a light comprising an adjustable diffuser, the characteristics of which can be changed without removing the diffuser from the light. This enables the user of the light 12 to customise the lighting of the object 14 quickly and easily without manually adjusting a diffuser placed on the light 12.

The present disclosure further relates to an adjustable diffuser with a number of further features, for example: an adjustable diffuser with which the strength or optical characteristics (e.g. beam angle) of the diffusion can be adjusted without swapping or repositioning the diffuser.

Along with having increased functionality as compared to conventional diffusers, an adjustable diffuser as disclosed removes the need to store and transport a number of different diffusers. Further, an adjustable diffuser as disclosed typically does not burn or degrade over time in the manner of a conventional diffuser.

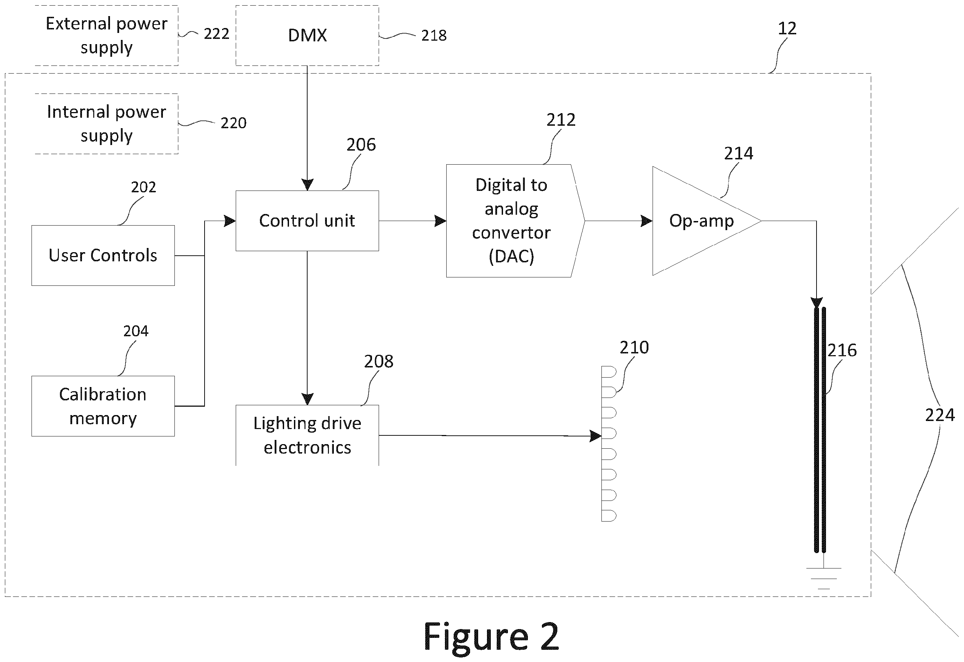

Referring to Figure 2, exemplary componentry for the light 12 of Figure 1 is shown.

The light 12 comprises user controls 202, a calibration memory 204, a diffuser control logic (master control unit) 206, LED drive electronics 208, a light emitter 210, a digital to analog converter 212, an op-amp 214, and an adjustable diffuser 216. Optionally, the light contains an input means for a demultiplexer 218, which enables multiple lights to be controlled by a single control system. The light 12 further comprises at least one of an internal power supply 220 and an external power supply 222.

The user controls 202 typically comprise input means, such as rotary knobs, buttons and/or a touchscreen, located on the outer, preferably rear, surface of the light 12. The user controls 202 enable the user to modify the characteristics of the output of the light 12, such as the amount of diffusion and the intensity and hue of the output of the light 12. In some embodiments, the user controls 202 comprise a remote user control means, for example the light 12 may be controllable using an application on a phone or a computer. In these embodiments, the light 12 comprises a communications interface; this interface may be a wired communication interface, such as a USB port, and/or may be a wireless interface, such as a WiFi interface, a 4G interface, a ZigBee interface, a LumenRadio^{™} interface, and/or a Bluetooth^{™} interface. Typically, the user controls 202 further comprise an output means and/or a display means that enables the user to view the present settings and view the input settings. The display means may be a local display, such as a screen, located on the light 12 and/or may be a remote display, such as the screen of a phone or a computer. The display means may also comprise a speaker and/or a tactile mechanism.

The calibration memory 204 is arranged to store information relating to the performance of a light emitter 210 and/or an adjustable diffuser 216. Typically, the calibration memory 204 relates a desired output, such as a desired diffusion percentage, to a control signal required to obtain this desired output, such as a voltage. This enables a user to enter a desired output characteristic in familiar units (such as a value of output Lux) and have this converted to the electronic units required to achieve the output characteristic (such as a current or voltage). Further, the calibration memory 204 enables consistency across lighting units. Where multiple lights are used, each light typically has slightly different characteristics, as may be caused by manufacturing tolerances; therefore, the same input provided to similar light emitters typically results in a slightly different output. The calibration memory 204 enables consistency across lights by relating a (same) desired output to the (different) required control signals for each light.

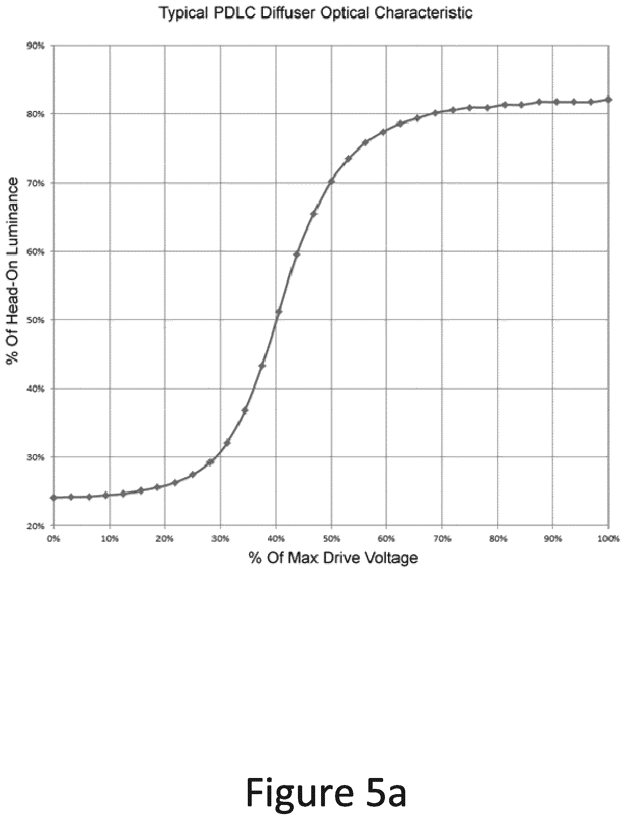

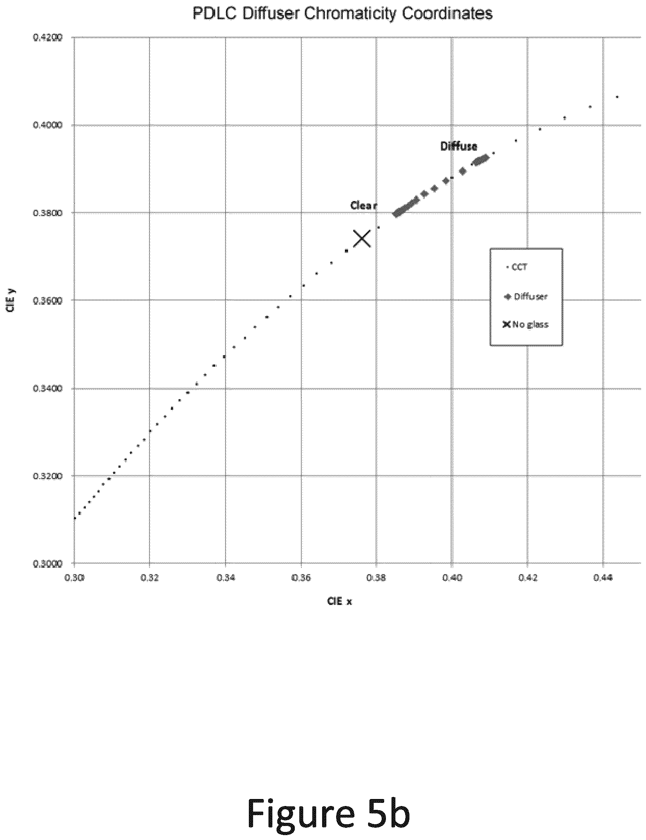

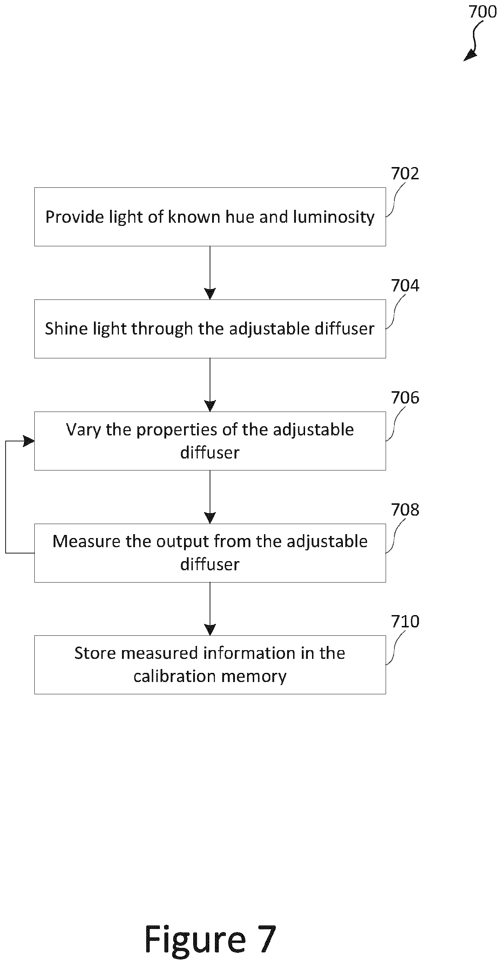

Typically, the information stored in the calibration memory 204 is determined during initial use of the light 12, where the settings (e.g. voltage) required to obtain given output characteristics are determined and stored - this is further described with reference to Figure 7. In some embodiments, the calibration memory 204 is pre-loaded in the light 12, where the required information may be obtained from, for example, another light and/or the manufacturer of the adjustable diffuser. In various embodiments, the calibration memory comprises at least one of: characteristic charts (as shown in Figures 5a and 5b), a database, lookup tables, and equations.

The control unit 206 combines the user input from the user controls 202 with the calibration details stored in the calibration memory 204 to determine and provide suitable control signals for the light emitter 210 and the adjustable diffuser 216. The control unit 206 typically implements algorithms in order to determine suitable control signals given a desired output.

The control unit 206 provides a lighting control signal to the lighting drive electronics 208. Based on this control signal, the lighting drive electronics 208 provides a voltage to the light emitter 210. The light emitter 210 produces light as a result of the provided voltage. Typically, the light emitter 210 comprises one or more light emitting diodes (LEDs); the light emitter may also comprise other lighting means, such as halogen lights.

The control unit 206 provides a diffusion control signal to a digital to analog converter 212, which then provides an analog signal to an operation amplifier (op-amp) 214; the op-amp is typically a high gain, AC coupled, op-amp. The amplified analog signal produced by the op-amp 214 is provided to the adjustable diffuser 216.

The adjustable diffuser 216 is arranged so that the diffusion properties change in response to changes in the amplified analog signal. Typically, an increase in the voltage provided to the adjustable diffuser 216 results in an increase in the opacity of the adjustable diffuser 216 leading to a reduced light intensity and increased diffusion.

In various embodiments, the light emitter 210 and/or adjustable diffuser 216 is arranged so that changes in the respective control signals vary the diffusion magnitude, the output beam angle, the hue of the output, the colour temperature of the output and the luminance of the output. It will be appreciated that other characteristics of the output light may also be varied by varying the characteristics of the adjustable diffuser 216.

Optionally, the light 12 comprises an input for a demultiplexer (DMX) 218 or a wireless demultiplexer (wDMX); this enables numerous lights to be controlled using a single lighting system control panel. The demultiplexer input may be in addition to or in place of the user controls 202. Typically, the light comprises both user controls 202 and a demultiplexer input, where one of these input means may be arranged to take priority. The demultiplexer input may be considered to be a part of the user controls 202.

The light 12 comprises at least one of an internal power supply 220 and a power input arranged to connect to an external power supply 222. In various embodiments, the light 12 comprises an integral battery, a connection suitable for receiving power from an external battery, and a connection for receiving power from a mains supply. In various embodiments, the internal power supply 220 and/or the external power supply 222 comprises a converter for converting a received power to a different type (e.g. converting AC voltage to DC voltage or *vice versa*) and/or comprises a converter for altering a property of the received power, e.g. stepping up or stepping down the voltage.

Typically, the light 12 further comprises external flaps, these are known in the lighting industry as barn doors 224. The barn doors are useable to shape the output of the light 12. The barn doors may be controlled manually, or may be connected to the control unit 206 and controllable electronically.

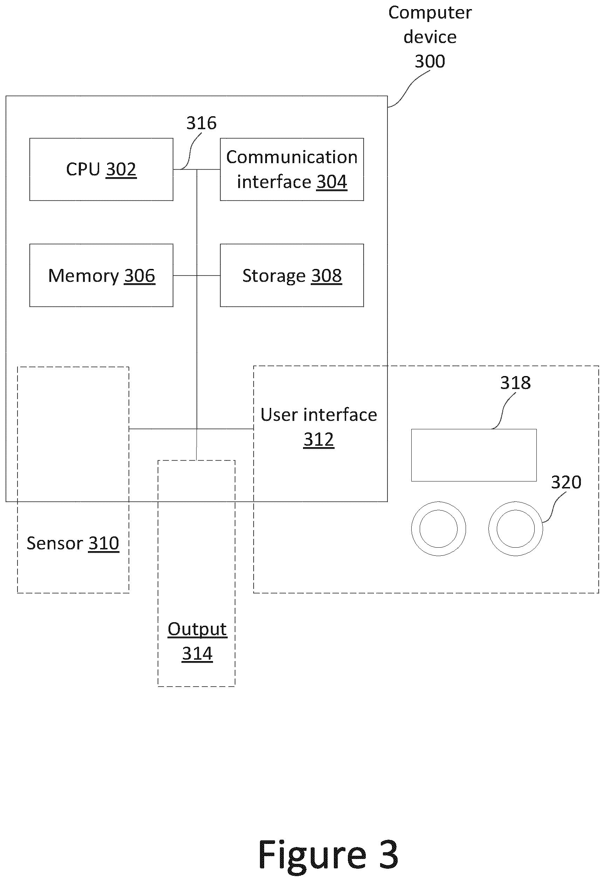

Referring to Figure 3, the light 12 comprises a computer device 300 on which components of the light 12, and aspects of the methods disclosed herein, are implemented.

The light 12 may be entirely implemented using a computer device 300; typically, some but not all of the components of the light are implemented using a computer device 300. The light 12 may comprise a plurality of computer devices on which different components of the light 12 are implemented.

The computer device 300 comprises a processor in the form of a CPU 302, a communication interface 304, a memory 306, storage 308, a sensor 310, a user interface 312, and an output 314 coupled to one another by a bus 316. The user interface 312 comprises a display 318 and an input/output device, which in this embodiment comprises rotary dials 320.

The CPU 302 is a computer processor, e.g. a microprocessor. It is arranged to execute instructions in the form of computer executable code, including instructions stored in the memory 306 and the storage 308. The instructions executed by the CPU 302 include instructions for coordinating operation of the other components of the computer device 300, such as instructions for controlling the communication interface 304 as well as other features of the computer device 300 such as the output 314. Typically, the control unit 206 is implemented using the CPU 302.

The memory 306 is implemented as one or more memory units providing Random Access Memory (RAM) for the computer device 300. In the illustrated embodiment, the memory 306 is a volatile memory, for example in the form of an on-chip RAM integrated with the CPU 302 using System-on-Chip (SoC) architecture. However, in other embodiments, the memory 306 is separate from the CPU 302. The memory 306 is arranged to store the instructions processed by the CPU 302, in the form of computer executable code. Typically, only selected elements of the computer executable code are stored by the memory 306 at any one time, which selected elements define the instructions essential to the operations of the computer device 300 being carried out at the particular time. In other words, the computer executable code is stored transiently in the memory 306 whilst some particular process is handled by the CPU 302.

The storage 308 is provided integral to and/or removable from the computer device 300, in the form of a non-volatile memory. The storage 308 is in most embodiments embedded on the same chip as the CPU 302 and the memory 306, using SoC architecture, e.g. by being implemented as a Multiple-Time Programmable (MTP) array. However, in other embodiments, the storage 308 is an embedded or external flash memory, or such like. The storage 308 stores computer executable code defining the instructions processed by the CPU 302. The storage 308 stores the computer executable code permanently or semi permanently, e.g. until overwritten. That is, the computer executable code is stored in the storage 308 non-transiently. Typically, the computer executable code stored by the storage 308 relates to instructions fundamental to the operation of the CPU 302. Typically, the calibration memory 204 is stored in the storage 308.

The storage 308 provides mass storage for the computer device 300. In different implementations, the storage 308 is an integral storage device in the form of a hard disk device, a flash memory or some other similar solid state memory device, or an array of such devices.

The communication interface 304 is configured to support short-range wireless communication, in particular Bluetooth^{®} and WiFi communication, long-range wireless communication, in particular cellular communication, and/or an Ethernet network adaptor. In particular, the communications interface is configured to establish communication connections with other computing devices. The DMX input 218 is typically implemented using the communication interface 304.

The sensor 310 is configured to obtain information relating to the environment surrounding the computer device 300. Typically the sensor comprises a light luminance detector, such as a light dependent resistor (LDR) and/or a light hue detector.

In some embodiments, there is provided removable storage, which provides auxiliary storage for the computer device 300. In different implementations, the removable storage is a storage medium for a removable storage device, such as an optical disk, for example a Digital Versatile Disk (DVD), a portable flash drive or some other similar portable solid state memory device, or an array of such devices. In other embodiments, the removable storage is remote from the computer device 300, and comprises a network storage device or a cloud-based storage device.

The output 314 typically comprises the light emitter 210 and/or the adjustable diffuser 216 and/or connections arranged to output a signal from the computer device 300 to the light emitter 210 and/or the adjustable diffuser 216
A computer program product is provided that includes instructions for carrying out aspects of the method(s) described below. The computer program product is stored, at different stages, in any one of the memory 306, storage device 308 and removable storage. The storage of the computer program product is non-transitory, except when instructions included in the computer program product are being executed by the CPU 302, in which case the instructions are sometimes stored temporarily in the CPU 302 or memory 306. It should also be noted that the removable storage 308 is removable from the computer device 300, such that the computer program product is held separately from the computer device 300 from time to time.

In typical embodiments, the light 12 is implemented using a single computer device where:
- the user interface 312 of the computer device 300 comprises the user controls 202 of the light 12;
- the storage 308 of the computer device 300 comprises the calibration memory 204 of the light 12;
- the CPU 302 of the computer device 300 comprises the control unit 206 of the light 12;
- the output 314 of the computer device 300 either comprises, or is arranged to interact with, the lighting drive electronics 208, the light emitter 210, the digital to analog converter 212, the op-amp 214, and the adjustable diffuser 216; and
- the communication interface 304 is arranged to receive instructions from a separate device, such as the demultiplexer 218.

### Diffuser structure

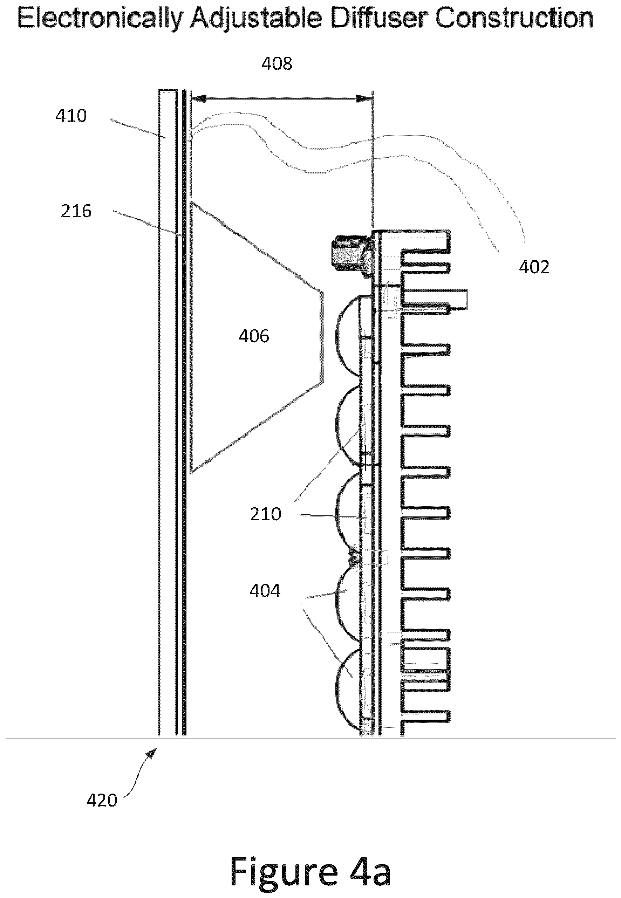

Figure 4a shows the arrangement of the light emitter 210 and a diffuser assembly 420 comprising the adjustable diffuser 216.

Control wires 402 are provided to transmit the diffusion control signal from the control unit 206 to the adjustable diffuser 216. This diffusion control signal is arranged to provide the diffusion control signal that causes an alteration of the characteristics of the adjustable diffuser 216. The light emitter 210, which in this embodiment comprises an LED array, receives the lighting control signal from the control unit 206 through either the control wires 402 or a separate set of lighting control wires (not shown).

Lenses 404 are located in front of the light emitter 210 to control the light provided by the light emitter 210; the lenses 404 are typically spaced from the adjustable diffuser 216 by a lighting gap 408 so that a light beam 406 is emitted from each component LED of the light emitter 210 (via a respective lens) and this light beam is incident on the adjustable diffuser 216. The lenses may, for example, be linear planar lenses.

Typically, the lenses 404 are arranged to focus the beam of each component LED of the light emitter 210 so that the "naked" (that is un-diffused) output of the light 12 is focused, e.g. it has a relatively narrow beam angle.

Typically, the light emitter 210 comprises an array of light emitting diodes (LED)s, such as surface mounted LEDs. Such LEDs have a relatively broad beam angle that can make them unsuitable for certain lighting tasks. The lenses 404 are arranged to focus the output of the LEDs to provide a focused, and relatively intense beam (compared to an arrangement without the lenses 404). The combination of LEDs, lenses 404, and adjustable diffuser 216 combine to enable a much wider range of achievable output intensities/diffusions than any of these components in isolation.

In some embodiments, the light emitter 210 comprises a textured surface that is located between the component units (e.g. LEDs) of the light emitter 210 and the lenses 404. This results in some diffusion of the output of the light emitter 210 before focusing by the lenses 404. Where the units comprise sources of differing colour (e.g. LEDs typically comprise different coloured strips), this textured surface results in some colour mixing before the focusing of the lenses 404.

The textured surface may be arranged, for example, on the rear of the lenses 404, or on the surface of the light emitter 210. In some embodiments, the texturing varies across the light emitter; for example, the centre of the light emitter 210 may be more textured than the edges of the light emitter 210.

Typically, the lighting gap 408 is arranged so that there is merging of each light beam 406 and the adjustable diffuser 216 receives a continuous (albeit focused) beam of light instead of discrete spot lights as would occur without the lighting gap 408. Typically, the gap is between 10mm and 100mm, for example a 40mm gap may be used.

A front cover 410 is located in front of the adjustable diffuser 216. Typically, the front cover 410 is a transparent plate made of Perspex^{®} or glass that provides protection for the adjustable diffuser 216. In some embodiments the front cover 410 comprises or may be replaced by a light changing means, such as a colour filter or a further diffuser.

The adjustable diffuser 216 typically comprises a sheet of electrochromic material, e.g. polymer dispersed liquid crystal (PDLC) that is affixed to the front of the light 12, behind the front cover 410; the front cover 410 provides protection for the adjustable diffuser 216 as well as a rigid mounting surface that prevents deformation of the adjustable diffuser 216. During construction of the light 12, an adhesive layer is applied to one side of the adjustable diffuser 216 allowing it to be fixed to the inner surface of the front cover 410 of the light 12. Equally, the adjustable diffuser 216 may be attached to another surface of the light 12. It will be appreciated that other attachment means are useable, for example the adjustable diffuser 216 can be sandwiched between two covers (e.g. two pieces of glass or Perspex^{®}) or attached using screws or clips. In some embodiments, a 65/110V sheet of PDLC is used as the adjustable diffuser 216.

In some embodiments, the front cover 410 is arranged to be affixed to the light 12 and the adjustable diffuser 210 is arranged to be mounted on the front cover 410. The combination of the adjustable diffuser 210 and the front cover 410 are then removable and/or attachable to the light 12 together, so that, for example, the combined adjustable diffuser and front cover may be shipped together, with the front cover 410 providing protection for the adjustable diffuser 210 while the adjustable diffuser 210 is in transit.

Where the adjustable diffuser 216 is sandwiched between two covers, the adjustable diffuser may be attached to one of the covers or both of the covers. This arrangement provides further protection. The sandwich structure of the two covers and the adjustable diffuser 216 may also comprise additional layers, such as additional support layers or gel/filter layers.

The term "sandwich structure" or "sandwiched" is used to denote a structure where at least two sheets are arranged in a layered structure, whether bonded together or not. The sheets could be in any order and need not be consecutive or directly adjacent one another. Equally, the sheets could be spaced apart within the sandwich structure.

Typically, the adjustable diffuser 216 is attached to the front cover 410 across the entire surface of the adjustable diffuser 216. In some embodiments, the adjustable diffuser 216 is attached to the front cover 410 over the entirety of the outer edges of the adjustable diffuser 216. Either of these arrangements prevents air bubbles from forming between the adjustable diffuser 216 and the front cover 410. Where the adjustable diffuser 216 is sandwiched between two covers, the likelihood of air bubbles forming is further reduced.

In some embodiments, the adjustable diffuser 210 is not in direct contact with the main body of the light 12, but is instead mounted to the front cover 410 and spaced from the main body of the light 12. This may protect the adjustable diffuser 210 from, for example, heat produced by the light emitter 210 and/or abrasive materials on the main body of the light 12.

In some embodiments, calibration is carried out for this combined adjustable diffuser and front cover to determine the characteristics of the combination.

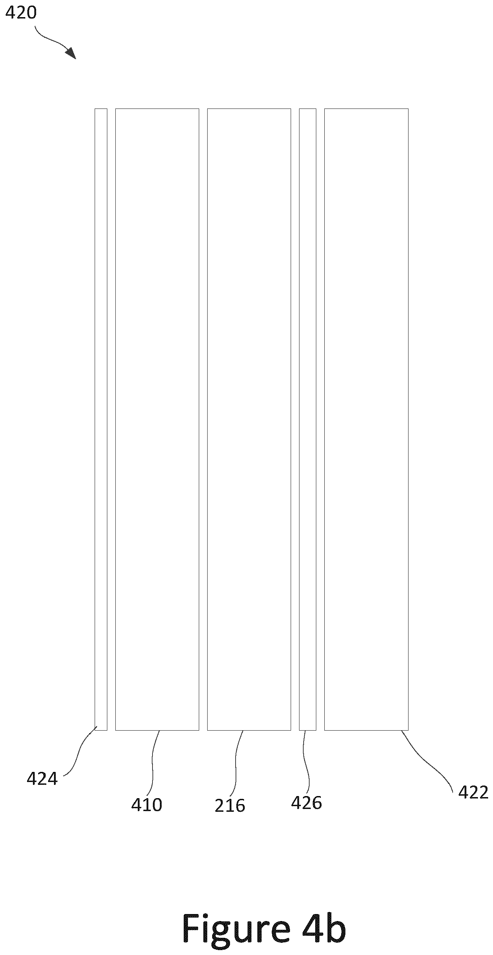

Figure 4b shows one example of the diffuser assembly 420 in cross section. The adjustable diffuser 216 is positioned between an acrylic front sheet 410 and an acrylic back sheet 422. The clear acrylic sheets 410 and 422 are preferably 2mm thick and act as support sheets to provide a rigid structure for the diffuser assembly. The front sheet 410 comprises a silk screen finish layer 424 on its front facing outer surface (that is, the surface that faces towards the subject of the lighting in use). The adjustable diffuser 216 is positioned between the two acrylic sheets 410 and 422 and is adhered in this example to the front facing surface of the back sheet 422 by an adhesive layer 426. Preferably, the adjustable diffuser 216 is 2mm thick.

Alternatively, the adhesive layer 426 may be between the back face of the front support sheet 410, such that the adjustable diffuser 216 is adhered to the back of the front support sheet 410. In this case, the back support sheet 422 is not present, so the diffuser assembly 420 comprises only one support sheet (the front sheet 410) as well as the adjustable diffuser 216. This arrangement can be advantageous because it prevents condensation building up (which can occur with a sandwich arrangement of the adjustable diffuser 216 between two support sheets) which would affect the light passing through the diffuser assembly 420.

The inventors have discovered that the adhesives that are typically used with PDLC films in their primary application (which is in privacy glass) are not actually suitable for use with a lighting device. This is because such adhesives tend to form prism-like structures at a microscopic level which diffract the light passing through the adhesive layer and split the light into its constituent spectral components. This effect is not particularly problematic when a PDLC film is used in, for example, privacy glass in an office, but becomes problematic when the film is incorporated into a light for photography/videography because the diffracted light distorts the colour across the photo/video. To solve this problem, the adhesive normally used with PDLC films has been substituted for a layer 426 of an optically approved adhesive, that is, an adhesive which does not diffract the light passing through it as described above. The adhesive layer 426 might be, for example, the adhesives typically used for 'sticky-back' or 'self-adhesive' passive diffusers.

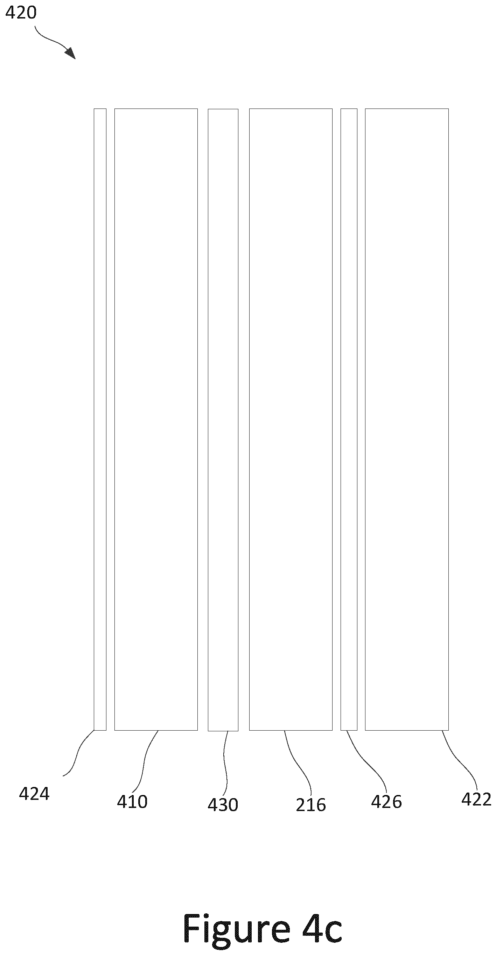

Figure 4c shows a second example of the diffuser assembly 420 in cross section. In this example, the adjustable diffuser 216 is again positioned between a clear acrylic front support sheet 410 and a clear acrylic back support sheet 422, and is adhered by an optically approved adhesive layer 426 to the inner, front facing surface of the back sheet 422. However, in this example there is an additional diffuser 430 positioned between the adjustable diffuser 216 and the clear acrylic front sheet 410. The additional diffuser 430 is a passive diffuser, in that it is a sheet of material, such as filter paper, having a fixed, nonadjustable diffusivity. The additional diffuser 430 may be for example a Lee Filter ^{®} 250 or 216.

Providing a passive diffuser 430 in combination with the adjustable diffuser 216 means that even when the diffusion level of the adjustable diffuser 216 is set at 0% (i.e. the adjustable diffuser 216 is completely clear) the lighting device will still emit a diffuse light at the level of diffusion of the passive diffuser 430. In effect therefore, the passive diffuser 430 provides a baseline level of diffusion, while the adjustable diffuser 216 provides additional diffusion above that baseline.

The passive diffuser 430 is positioned between the front and back sheets 410 and 422, and in front of the adjustable diffuser 216 so that light passes first through the adjustable diffuser 216 before passing through the passive diffuser 430. The passive diffuser 430 has a uniform transmissivity across its area, in that a certain percentage of incident light will not be transmitted through the passive diffuser 430. This has the effect of evening out any non-uniform transmission of light through the adjustable diffuser 216, which might have a higher transmissivity at its centre than at its margins. For this reason, it is preferable for the passive diffuser 430 to be in front of the adjustable diffuser 216.

In an alternative embodiment, the passive diffuser 430 could be outside of the front and back sheets 410 and 422, that is, not between the support sheets 410 and 422. In this case, the passive diffuser 430 could be disposed on the front surface of the front sheet 410 or on the back surface of the back sheet 422. In the latter case, the order of the diffusers would therefore be reversed.

In a further alternative embodiment, the front support sheet 410 itself acts as a passive diffuser. In this case, the front support sheet 410 is made from a translucent acrylic or glass layer, such as frosted acrylic or frosted glass. In this case, the passive diffuser 430 is not present as its function is performed by the front sheet 410.

In this arrangement, the adjustable diffuser 216 may instead be adhered to the back of the front sheet 410, in which case the adhesive layer 426 is positioned between the back surface of the front sheet 410 and the adjustable diffuser 216. Thus, the back sheet 422 is not required and so may not be present.

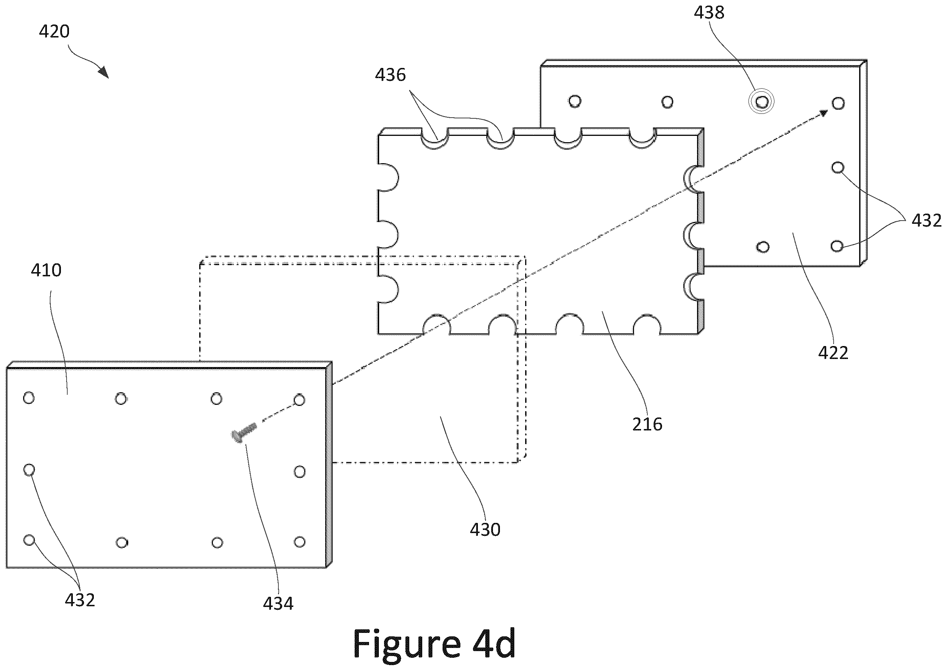

Figure 4d shows an exploded view of the diffuser assembly 420. The adjustable diffuser 216 is positioned between the front sheet 410 and back sheet 422. The front sheet 410 and back sheet 422 have a plurality of fixing points 432 distributed around their outer margins. The fixing points 432 are screw holes through which screws 434 can pass to secure the two sheets 410 and 422 together with the adjustable diffuser 216 (and, optionally, a passive diffuser 430) between them. The adjustable diffuser 216 has a number of cut-out portions 436 corresponding to the position of the fixing points 432. When the diffuser assembly 420 is assembled, the adjustable diffuser 216 is adhered to the front facing surface of the back sheet 422 by the optically approved adhesive (not shown) such that the fixing points 432 are not covered by the adjustable diffuser 216 and are accessible via the cut-out portions 436. Therefore, the screws 434 do not pass through the adjustable diffuser 216 so as not to put it under stress. This is advantageous because the PDLC adjustable diffuser 216 is itself made up of a number of layers and tends to delaminate under stress. The cut-out portions 436 may be formed from actually cutting away part of the diffuser 216, or instead the diffuser could simply be formed in the first place with the cut-out portions 436 present.

Spacers 438, which are preferably nylon washers, are optionally positioned over the fixing points 432. The spacers 438 are sized so as to fit within the cut-out portions 436 of the adjustable diffuser 216 when the diffuser is adhered to the back sheet 422. When the diffuser assembly 420 is assembled, the spacers 438 sit between the front sheet 410 (or, the passive diffuser 430 if present) and the surface of the back sheet 422 that is revealed by the cut-out portions 436 of the adjustable diffuser 216 so as to slightly space the front sheet 410 (or passive diffuser 430) away from the adjustable diffuser 216 so as to limit or prevent pressure being applied to the face of the adjustable diffuser 216. Thus, the spacers 438 should be at least at thick as the adjustable diffuser 216.

The diffuser assembly 420 is assembled according to the following steps:
- The area in which the diffuser assembly 420 is to be assembled in first cleaned to remove any dust, dirt or any other possible contaminants which could otherwise become trapped between the layers of the assembly 420. For the same reason, the back sheet 422 and the adjustable diffuser are cleaned. Cleaning is performed using an isopropanol alcohol (IPA) wipe.
- The adjustable diffuser 216 is then stuck down onto the cleaned surface of the back sheet 422 with the cut-out portions 436 aligned up with the fixing points 432 on the back sheet 422. The alignment of the adjustable diffuser 216 with the fixing points 432 must be carefully checked. The adjustable diffuser 216 should be stuck down from one side to the opposite side, so as to avoid trapping air bubbles under the adjustable diffuser 216.
- Once the adjustable diffuser 216 is applied onto the back sheet 422 the front facing surface is cleaned with an IPA wipe to prepare the surface for receiving the front sheet 410. Nylon washers are placed over the fixing points 436. The front sheet 410 is cleaned with an IPA wipe and placed over the front facing surface of the adjustable diffuser 216 such that the fixing holes of the front sheet 410 are aligned with those of the back sheet 422. Screws 434 are screwed through the fixing points 436 and washers to secure the diffuser assembly 420 together. The front sheet 410 may have sunken holes to conceal the screw head. The front face of the front sheet 410 is cleaned with an IPA wipe.
- Lastly, the wires 402 of the adjustable diffuser 216, which are left exposed throughout assembly, are connected to power and the lighting device is powered up to check the diffusion film works as required.

### Diffusion control signal

PDLCs comprise a dispersion of liquid crystals arranged throughout a solid polymer. When no voltage is applied to the PDLC, the liquid crystals are randomly arranged, resulting in scattering of the light passing through the PDLC; when a voltage is applied to the PDLC, the liquid crystals align, letting light pass through the PDLC. In this way, the PDLC can change from being effectively opaque to effectively transparent with the application of voltage. Further, applying an intermediate voltage results in some alignment of the liquid crystals, leading to a translucent PDLC. By controlling the voltage, the amount of alignment, and the amount of scattering can be controlled. In this way, the amount of diffusion can also be controlled.

The control unit 206 supplies a variable voltage to the adjustable diffuser 216 via the control wires 402 that controls the behaviour of the adjustable diffuser 216. Typically, the control wires 402 are connected to two different electrodes (not shown) of the adjustable diffuser 216. In some embodiments, one electrode of the adjustable diffuser 216 is held at 0V while the other alternates between the positive and negative drive voltage. In some embodiments, the adjustable diffuser is arranged so the 0V electrode forms the outer layer; this minimises electromagnetic emissions.

A PDLC sheet, as may be used for the adjustable diffuser 216, typically requires an alternating drive voltage in the range 50Hz - 150Hz. The combination of the control unit 206, digital to analog convertor 212 and op-amp 214 are arranged to supply such a voltage.

In some embodiments, these components are arranged to supply to the adjustable diffuser 216 a drive voltage that has a zero voltage DC component; this avoids damaging the PDLC sheet.

Typically, PDLCs are driven with a sine wave derived from the ac mains voltage. However, were such a sine wave to be used for the adjustable diffuser 216, a diffuser flicker would be generated since the applied voltage is continually changing giving a continually varying level of diffusion. In particular, as the control signal crosses from positive to negative voltage, the opacity of the adjustable diffuser 216 changes. This diffuser flicker may generate artefacts in the image captured of the object 14.

In some embodiments, to minimise diffuser flicker the adjustable diffuser 216 is driven with a square wave. This results in a substantially constant voltage being applied to the adjustable diffuser 216 over each half period of the square wave. This minimises the time period during which a varying voltage is applied.

In some embodiments, diffuser flicker is compensated for by applying an anti-phase flicker to the light emitter 210 that counteracts the flicker caused by the adjustable diffuser 216 so that the output of the light 12 is constant. Specifically, where the varying voltage causes an undesired increase in the opacity of the adjustable diffuser 216 the lighting control signal is altered such that the intensity output of the light emitter 210 is increased.

In some embodiments, the light emitter 210 comprises rows of lighting elements (e.g. LEDs); in these embodiments flicker can be reduced by alternating the drive polarity of each row (this may be done by powering every other row of lighting elements via an inverting op-amp). This turns (highly noticeable) area flicker into (less noticeable) line flicker.

To minimise the diffuser flicker a high frequency (e.g. 300Hz) control signal may be used - this minimises the duration of each instance of opacity. Additionally, or alternatively, a higher voltage may be applied during the transition periods.

In some embodiments, the diffusion control signal is arranged so that the transition period (where the signal changes from negative voltage to positive voltage or *vice versa*) is synced to an operating characteristic of a camera - for example the frequency of the diffuser control signal may be determined based on a camera shutter speed, a camera shutter angle, a frame rate, or a combination of camera operating characteristics.

In some embodiments, the diffusion control signal is arranged to have a frequency that is: 24Hz, 25Hz, 30Hz, 60Hz, or 120Hz. The user controls 202 may be arranged to enable the user to select an appropriate frequency from this range of frequencies.

Typically, the user controls 202 are arranged to enable the operator of the light 12 to input a camera characteristic, such as a frame rate. The control unit 206 is arranged to thereafter provide an appropriate diffusion control signal frequency. For example, the control unit may select a frequency such that the transition period occurs when the camera shutter is closed.

In some embodiments, the light 12 is arranged to allow a camera to be linked to the light 12, for example by the light 12 identifying nearby cameras based on mutual connection to a wireless network. The control unit 206 is thereafter arranged to automatically select an appropriate diffusion control signal frequency.

In video standards, it is known to use a black and burst signal to synchronise inputs from multiple cameras, the signal provided to the adjustable diffuser 216 may be arranged so that the transition period occurs during a non-critical point as determined by monitoring of such a black and burst signal.

In some embodiments, the inversion frequency is run at 50 - 150Hz so that the transition periods occur at 300Hz.

These control signal embodiments may each be combined; in particular, where a square control signal is used that runs at a multiple of 50Hz, there is a hugely reduced period of flicker that occurs in sync with a 50Hz camera shutter and so is not at all captured by the camera.

More generally, the diffusion control signal is typically arranged to be adjustable, e.g. so that it can be synchronised with a camera shutter. This may comprise the diffusion control signal being user adjustable and/or the control unit 206 being arranged to automatically adjust the diffusion control signal in dependence on a feature of a camera.

Equally, the control unit 206 may be arranged to automatically adjust the diffusion signal in dependence on a feature of the environment, such as a mains AC frequency. This feature may be a feature that other components also rely on - with the example of mains frequency, cameras will typically also be reliant on this frequency.

In some embodiments, a high frequency diffuser control signal is provided to the adjustable diffuser 216. This results in reduced diffuser flicker at the cost of there being a constant baseline opacity (e.g. the minimum diffusion value is increased).

### Light emitter compensation

The drive waveform for the adjustable diffuser 216 is generated using the control unit 206, digital to analog convertor 212 and op-amp 214. The control unit 206 generates an alternating digital value corresponding to the diffusion level requested by the user - taking account of the luminance characteristic of the adjustable diffuser 216, which is provided by the calibration memory 204. The digital to analog convertor 212 converts the digital value into a small amplitude analogue signal. This is then ac-coupled to remove any DC component before being fed into the op-amp 214 to boost the amplitude of the signal to the level required to operate the adjustable diffuser (typically ±30V max). In parallel, the control unit 206 may calculate an adjustment for the luminance and hue of the LED backlight - in order to maintain a constant output illumination brightness and colour from the entire assembly.

A side effect of increasing the amount of diffusion is that the intensity of the light produced is reduced, since more light is scattered/blocked as it passes through the adjustable diffuser 216. To offset this effect, the control unit 206 is typically arranged to increase the light supplied by the light emitter 210 to compensate for the intensity drop due to an increase in diffusion.

Similarly, a change in the diffusion may affect the hue or saturation of the output of the light 12; the control unit 206 is typically arranged to control the lighting drive electronics 208 (and hence the light emitter 210) to maintain a constant hue/intensity. In particular, the light emitter 210 can typically be controlled to maintain the green/magenta hue output by the light 12. In one example, this involves controlling the relative brightness of certain LED elements within an RGBWW light emitter (that is, a group of a red, green, blue and two white LEDs).

For example, increasing the amount of diffusion might cause more scattering or blocking of the red component of the light emitted from the RGBWW emitter compared to the scattering or blocking of the other colour components of the light. This means that the intensity of the red component of the light which has passed through the diffuser is reduced. To compensate for this effect, the RGBWW emitter is controlled to increase the brightness of the red light emitter relative to the other colours.

The amount by which the brightness of (for example) the red emitter is increased will depend on the amount of diffusion. Therefore, the lighting device has stored calibration data correlating the level of the diffusion to the amount by which the intensity of a particular light component is reduced at given diffusion level. This calibration data can be collected by carrying out comparative measurements of the spectral components of the light entering and the light leaving the diffuser having passed through it at different levels of diffusion. The light emitters are controlled using this data; for example if it is known from the calibration data that a 50% level of diffusion causes a 5% reduction in the transmission of the red light through the diffuser compared to the other colours, the brightness of the red light emitter is increased relative to the other colour emitted accordingly.

Alternatively, the lighting device may comprise a sensor to measure the spectral components of the light it outputs and compare that measurement to the spectral components of the light which enters the diffuser to find any difference. In this case, the brightness of individual colour LEDs in each RBGWW emitter is then adjusted based on the comparison. For example, if the sensor measures that the light which has passed through the diffuser comprises a reduced red component relative to the other colour components, as compared to the light incident on the diffuser, the intensity of the red LED is increased by an amount corresponding to the measured difference.

The light emitter 210 may also be varied to obtain a changing hue/intensity that depends on a change in diffusion; for example, as the diffusion is reduced, the light emitter 210 may be arranged to alter the hue separately to the alteration caused by the diffusion.

In practice, increasing the diffusion of the adjustable diffuser 216 typically increases the amount of green output by the light 12. This effect can be mitigated (or eliminated) by modifying the light emitter 210 to output more blue light. Typically, this is achieved by increasing the amount of a cool white output by the light emitter 210, e.g. by turning on additional cool white LED elements.

Alternatively or additionally to the compensation technique described above, the LED emitter 210 itself might be tuned so as to emit a wavelength of light that are slightly adjusted so as to take into account the effect of the diffuser 216. For example, if the diffuser 216 tended to shift the wavelength of the light emitted by the red LED to a slightly longer wavelength, the LED can be tuned so as to emit a slightly shorter wavelength that it otherwise would. Therefore, when the diffuser 216 is used, the light having passed through the diffuser will be shifted to the intended colour. Similarly, for an RGBWW emitter, the brightness of each of the red, green, blue and white LEDs relative to one another may be tuned and fixed to compensate for the effect of the diffuser 216. For example, if the diffuser 216 tends to block a higher proportion of red light than for other colours, the red LED will have a brightness that is fixed at a proportionally boosted level relative to the green, blue and white LEDs in the light emitter.

The adjustable diffuser 216 may have a non-uniform transmissivity, in that light can be more easily transmitted through the centre area of the diffuser than through the marginal areas of the diffuser. Therefore, when the diffuser is used in a lighting device comprising an array of light emitters, each of equal brightness, the centre of the lighting device might appear brighter than at its margins to a viewer. Therefore, the brightness of light emitters in the array can be controlled based on their locations within the array relative to the diffuser. For example, light emitters positioned in the array to illuminate the centre of the diffuser can be controlled to have a lower brightness whereas light emitters positioned to illuminate the margins of the array can be controlled to have a higher brightness.

### Adjustable diffusers

In some embodiments, a plurality of adjustable diffusers are provided, with each diffuser controlling a different feature of the light - as an example, each diffuser may be arranged to imbue the output light with a different colour. In this situation, increasing the diffusion of an adjustable diffuser will also result in the colour of the output of the light changing; by providing, for example, a red, green, and blue diffuser, any shade of colour of light can be provided by the light 12.

In some embodiments, differing portions of the adjustable diffuser 216 are controlled separately. For example, the adjustable diffuser 216 may comprise an inner section and an outer section that can be controlled separately. This allows for fine control over the distribution of the output of the light 12 and allows for, for example, beam shaping
In some embodiments, the light emitter 210 comprises a variety of lighting types (e.g. a variety of different colours of LEDs) that correspond to different sections of the adjustable diffuser 216. This allows the colour of the output of the light 12 to be varied by varying the opacity of different sections of the adjustable diffuser 216. By increasing the opacity of sections in front of red LEDs and reducing the opacity of blue LEDs, the output of the light can be modified to provide a predominantly blue light. By alternating between this arrangement and an opposite arrangement where the sections of the adjustable diffuser 216 in front of red LEDs are clear and the sections in front of blue LEDs are opaque a police lights effect can be produced.

The plurality of diffusers may be arranged in series, so that light passes through each diffuser in turn, or in parallel, where light passes through only one of a plurality of diffusers. It will be appreciated that a combination of series and parallel diffusers may be used.

Examples of user adjustable parameters and inputs to the light 12, which are obtained by varying one or both of the diffuser control signal and the lighting control signal, include:
- Diffusion level: this is variable from 0% (clear) to 100% (max diffusion). This may also be expressed as f-stops (the ratio of focal length to the diameter of the entrance pupil) or t-stops (transmission stops).
- Beam angle of the light 12: this is typically variable between a range of angles in degrees (e.g. 0° - 360°).
- Selection from a variety of in-built special effects (SFX): by altering the diffusion factor dynamically in real time it is possible to simulate various lighting effects such as fire, lightning, television, fireworks, gunshot etc. Equally, the light emitter 210 (or a combination of the adjustable diffuser 216 and the light emitter 210) may be adjusted to provide lighting effects. This also enables the provision of natural lighting effects.
- Selection of recallable diffusion presets: the light 12 is typically adapted to be able to save settings and recall these settings later. This is also useable to rapidly transition between settings. In some embodiments, the presets are provided by a manufacturer of the light 12 or another third party; in some embodiments, the user of the light 12 is able to save settings. Typically, this comprises the user operating the user controls 202 to record a presently active setting. At a later time, the user can operate the user controls 202 to return to this previously recorded (e.g. stored) setting.
- Frequency/shape of the diffusion adjustment: varying the frequency and shape of the diffusion control signal enables compensation for flicker that may otherwise be visible at high frame rates. In some circumstances, for example when using the light to produce special effects, some flicker is desirable and this can be controlled. In other circumstances a steady light is preferable, flicker can be minimised by shaping the diffusion control signal appropriately. The diffusion control signal may be controlled directly by the user or may be controlled automatically by the control unit 206 based on a desired flicker (e.g. none) set by the user.
- The luminance, hue, and or colour temperature incident of the output of the light 12.
- The softness of the output of the light 12.
- The luminance, hue, colour temperature, and/or softness of the light incident on the object 14. This may be altered by measuring a value measured near the object 14 and adjusting the properties of the light emitter 210 and/or adjustable diffuser 216 accordingly.

It will be appreciated that the above parameters are examples only; it is possible to vary a number of other parameters by controlling components of the lighting system 12.

Further, the above parameters may be combined. As an example, it is typically possible to vary the diffusion over time (e.g. during the filming of a scene) and thereafter save this diffusion profile as a recallable preset. This enables transitions during and between scenes to be recorded and later recalled if a scene needs to be reshot.

In some examples, the lighting device comprises means, such an in-built memory or remote memory, for storing a range of diffusion settings corresponding to previously measured diffusion effects; and means for recalling (from the in-built memory or via a connection to the remote memory) a diffusion setting from said range of stored settings thereby to recreate the corresponding diffusion effect. For example, an industry standard passive diffuser (such as a Lee Filter ^{®} 250) is fitted to the lighting device while the lighting device emits a certain colour (for example, a daylight colour temperature or 5500K) and the diffusion effect, including the diffusivity, is measured. Then, the passive diffuser is removed and the adjustable diffuser 216 settings are adjusted (while the lighting device maintains the same light output) until the lighting device produces light that has the same level of measured diffusivity as that which the passive diffuser produced. Then, those diffusion settings are stored on the device (together with the industry filter it replicates) as a pre-set which can be recalled by the user. Repeating this process for multiple industry standard filters builds up a 'electronic' diffuser library stored on the lighting device. Figure 5a shows an exemplary optical characteristic for a PDLC diffuser - which may be used as (or within) the adjustable diffuser 216.

As can be seen from the characteristic, the percentage of head-on luminance is variable between a low percentage and a high percentage by modifying the supplied voltage. By carefully controlling the supplied voltage an intermediate head-on luminance can be provided.

Based on the optical characteristic of the adjustable diffuser 216, the minimum and maximum drive voltages that may be provided to the adjustable diffuser 216 may be intentionally limited and rescaled. With the exemplary characteristic of Figure 4a, the drive voltage may be intentionally limited to between 20 - 70% so that an input control signal of 0% relates to a drive voltage of 20% and an input control signal of 100% relates to a drive voltage of 70%; this intentional limiting enables more precise control within a specified range. The limiting is typically arranged to encompass a `sensitive' range (e.g. that where a change in drive voltage results in a certain change in head-on luminance).

Figure 5b shows exemplary chromaticity coordinates for a PDLC diffuser.

As the voltage supplied to the diffuser is altered, the output hue and the correlated colour temperature (CCT) changes according to the chromaticity coordinates.

Typically, a calibration operation is carried out for the light 12 and/or the adjustable diffuser 12. This may comprise shining a light of known luminance and chromaticity through the adjustable diffuser 12 and measuring the output.

The characteristics and coordinates are thereafter stored in the calibration memory 204 and used to convert user parameters to required input voltages.

For example, knowledge of the adjustable diffuser 216 characteristic allows the control unit 206 of the light 12 to:
- Identify the range of voltages over which the diffusion level can be usefully controlled.
- Translate the curved characteristic of the diffuser into a light-linear user control.
- Enable the luminance of the LED light to be adjusted in real-time to maintain a constant head-on luminance regardless of the diffuser setting.
- Enable other properties, such as the output hue, to be adjusted in real-time.

In particular, the characteristics and coordinates are used to enable alteration a single output parameter. As the magnitude of diffusion is altered, the hue and luminance of the output of the light 12 will also change. In many circumstances this is undesirable, it would be preferable to instead alter only a single parameter. In these circumstances, the characteristics are used to alter the lighting control signal appropriately (e.g. to alter the hue or intensity of the light emitter 12) so that the hue and luminance remain constant as the diffusion magnitude changes. Similarly, the hue may be altered, while the luminance and diffusion magnitude are held constant and the luminance may be altered while the hue and diffusion magnitude are held constant. This can be done automatically by the control unit 206 without the addition of further diffusers and/or films as would be necessary with a manual diffuser.

### LED arrangement

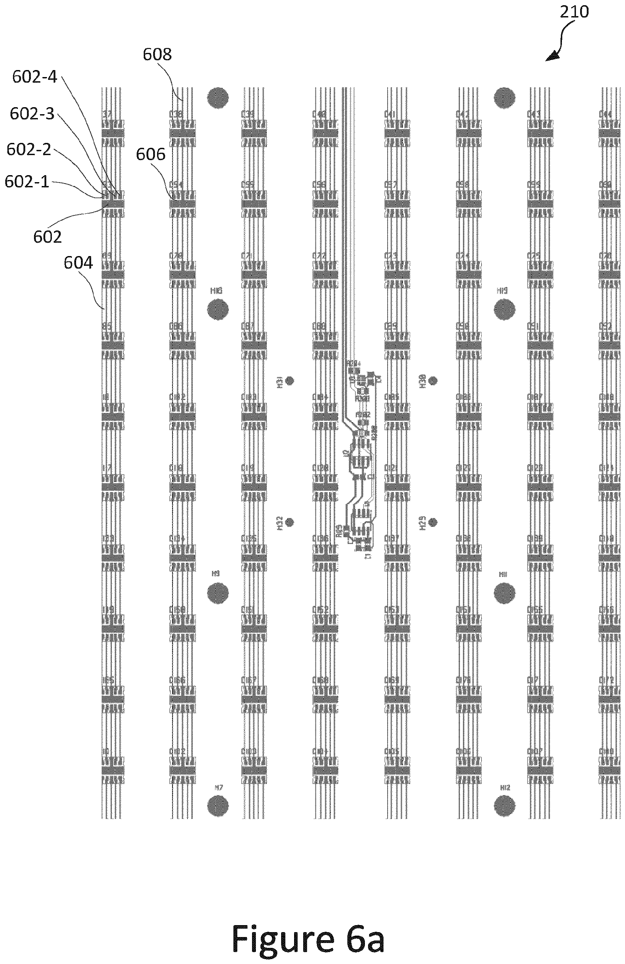

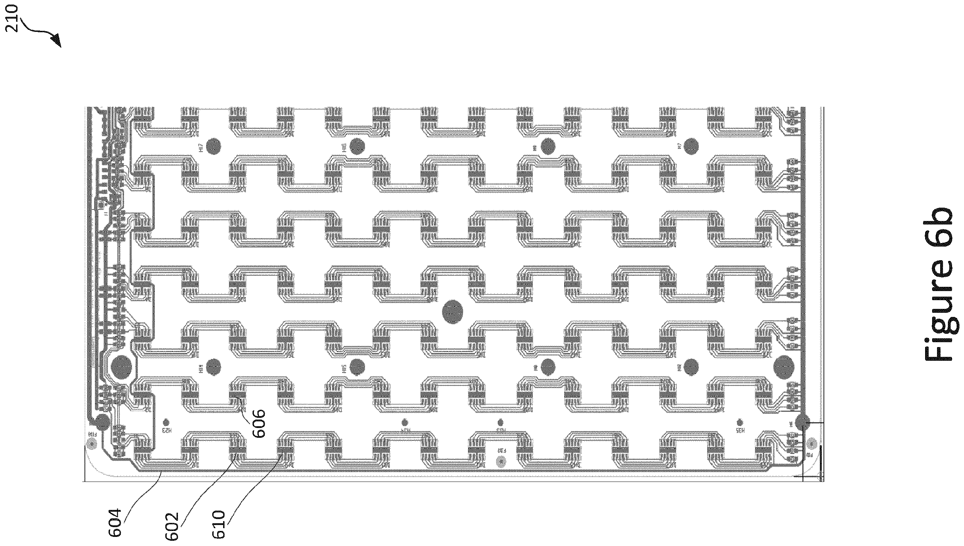

The light emitter 210 typically comprises one or more LEDs. Referring to Figures 6a and 6b, there are shown arrangements of LEDs that may be used in the light emitter 210.

Referring to Figure 6a, a first embodiment of the light emitter 210 comprises an LED 602 located on a strip 604 of electrically conductive material that provides power to the LED 602. Typically, there is provided a plurality of LEDs located on the strip 604 so that a row of LEDs is powered by the strip 604. When a current is passed through the strip 604, the current passes through each LED leading to the emission of light from the LED 602.

The properties of the light emitted by the LED 602 depend on the properties of the LED 602, so that the output of each LED 602, and of the light emitter 210, can be altered by altering these properties. As an example, different colours of LEDs can be provided.

Typically, each LED comprises a number of component LEDs that each output a different colour of light. In this embodiment, the LED 601 comprises four component LEDs 602-1, 602-2, 602-3, 602-4 that each output a different colour of light. The output colours may, for example, comprise red, green, blue, a 'warm' colour, and a 'cool' colour. By altering the power provided to each component LED, a range of colours may be output by the LED 602. The strip 604 is typically divided into separate component strips, with each component strip powering a series of different component LEDs, this enables separate control of each series of component LEDs.

In some embodiments, the light emitter comprises red-green-blue (RGB) or red-green-blue-warm white-white (RGBWW) LEDs. These enable the provision of a variety of colours, colour temperatures, and hues.

In some embodiments, a plurality of different LEDs are provided, where a second LED 606 of the light emitter 210 has different properties to the LED 602. Typically, a number of LEDs are provided each with different properties to broaden the range of possible outputs of the light emitter 210. Typically, the LEDs are arranged so that each different type of LED is separately controllable, e.g. so that the output of each blue LED is alterable and the output of each green LED is separately alterable. This enables simple control of the hue of the output of the light 12.

Problematically, providing LEDs in the arrangement described with reference to Figure 6a can result in non-uniform light being provided. For example, if blue light is emitted by a column of component LEDs to the 'left' of each LED and red light is emitted by a column of component LEDs to the 'right' of the LED emitter 210 then the colour of light provided to the object 14 may depend on whether the object 14 is to the left or right of the light 12.

This is a particular problem when using the lenses 404, since the lenses 404 reduce the beam angle of the LEDs of the light emitter, the beam of each component LED is more focused, so that the colour variance is more noticeable.

An arrangement that is useable to reduce the variance of emitted light is shown in Figure 6b, which illustrates a light emitter 201 that comprises an alternating arrangement of LEDs.

Specifically, the LEDs of the light emitter 210 of Figure 6b are arranged in alternating orientations. As an example, the LED 602 may be arranged to have a green component LED at the 'top' and a red component LED at the 'bottom'. A further LED 610, which is adjacent to the LED 602 is arranged to have a red component LED at the top and a green component LED at the bottom. Typically, each adjacent LED is arranged in this alternating orientation, so that the second LED 606 also has a red component LED at the top and a green component LED at the bottom. It will be appreciated that only a subset of adjacent LEDs may be oriented in this manner.

This alternating arrangement reduces the heterogeneity of the output of the light emitter 210. In other words, the arrangement results in a more constant light output than the arrangement of Figure 6a.

It will be appreciated that the second orientation need not be completely opposite to the first direction, any relative orientation can be used. That is, while typically each adjacent LED is rotated 180 degrees to neighbouring LEDs, there is also a benefit to other relative orientations. As an example, each LED may be rotated in 90-degree increments, so that LEDs alternate between being 'vertical' and being 'horizontal'.

While the embodiment of Figure 6b has been described as having adjacent LEDs being alternately oriented, there is benefit to having any two component LEDs of the light emitter 210 alternately oriented. There may be a plurality of adjacent LEDs with the same orientation, where the orientation may change each 2 LEDs, 3 LEDs, etc.

In some embodiment, the LEDs are not arranged in a regular array, but instead are irregularly arranged. This may further increase the constancy of the light output by the light emitter 210.

In the light 12, the adjustable diffuser 216 may be arranged in dependence on the arrangement of the LEDs. This dependence typically comprises the adjustable diffuser 216 having sections with differing properties, with the sections being located on the adjustable diffuser 216 based on the LED that each section is in front; there may also be provided a plurality of adjustable diffusers with differing properties, with each different adjustable diffuser placed in front of a different strip of LEDs.

In some embodiments, different adjustable diffusers are placed in front of component LEDs emitting different colours so that the diffusivity of each component colour of the output of the light 12 may be individually varied. In this way, a red light component of the output light can be heavily diffused while a green component is only lightly diffused.

### Diffuser calibration

Referring to Figure 7, there is shown an exemplary method 700 of calibrating the light 12. The method 700 may be implemented as an algorithm using the processor 302 of the computer device 300 on which the control unit 206 is implemented.

In a first step 702, a light of known hue and luminosity is provided.

In a second step 704, this light is shone through the adjustable diffuser 216.

In a third step 706, the properties of the adjustable diffuser 216 are varied. Typically, this comprises the control unit 206 varying a voltage supplied to the adjustable diffuser 216 so that the opacity of the adjustable diffuser 216 is altered.

In a fourth step 708, the output from the adjustable diffuser is measured 608. This enables the effect of the adjustable diffuser 216 on an input light to be determined; this is useable to obtain characteristic charts as shown in Figures 5a and 5b. Using these characteristic charts, the input control signal required to obtain a desired output can be determined.

In some embodiments, the output of the combination of the adjustable diffuser 216 and the front cover 410 is determined (e.g. by attaching the adjustable diffuser 216 to the front cover 410 before shining the light through the combination of adjustable diffuser 216 and front cover 410).

The third and fourth steps 706, 708 are repeated as necessary to obtain operating characteristic graphs. The number of calibration data points measured typically depending on the required accuracy of the output of the light 12.

In a fifth step 710, the measured calibration information is stored in the calibration memory 204 of the light, which is typically part of the storage 308 of the computer device 300. This enables the measured calibration information to be accessed once a desired output is entered via the user controls 202.

### Light adjustment

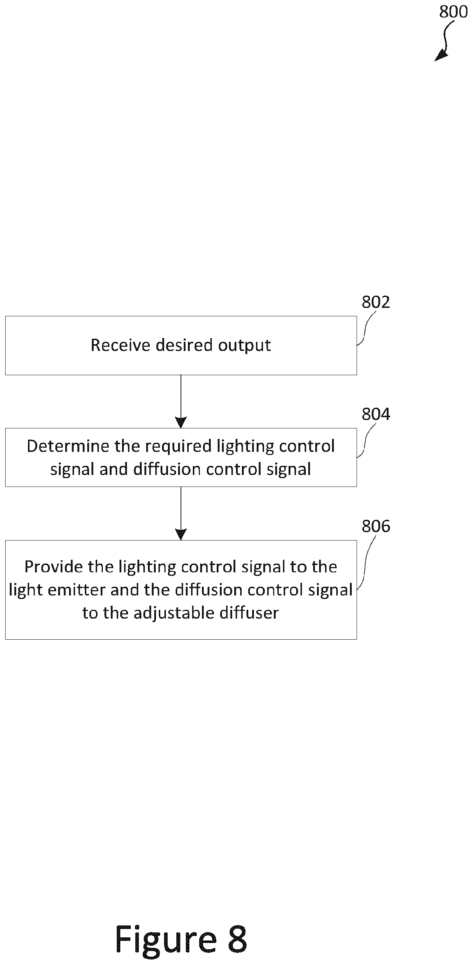

Referring to Figure 8, there is shown an exemplary method 800 of using the adjustable diffuser 216 to vary the diffusivity of the output of the light 12. The method 800 is typically performed as an algorithm by the processor 302 of the computer device 300 on which the control unit 206 is implemented.

In a first step 802, a desired output is received via the user controls 202 of the light 12 and/or from the demultiplexer 218.

In a second step 804, the required lighting control signal and diffusion control signal are determined by the control unit 206. This typically comprises the control unit 206 determining appropriate voltages from the input parameters and the characteristics stored in the calibration memory 204. In some embodiments, the desired signals are input by the user (e.g. a voltage and frequency for each signal may be input) and these are provided to the adjustable diffuser 216 and light emitter 210 without reference to the calibration memory 204. In these embodiments, the light 12 may be provided without a calibration memory 204.

In a third step 806, the determined lighting control signal is provided to the light emitter by the control unit 206 (optionally via the lighting drive electronics 208) and the diffusion control signal is provided to the adjustable diffuser (optionally via the digital to analog convertor 212 and/or the op-amp 214).

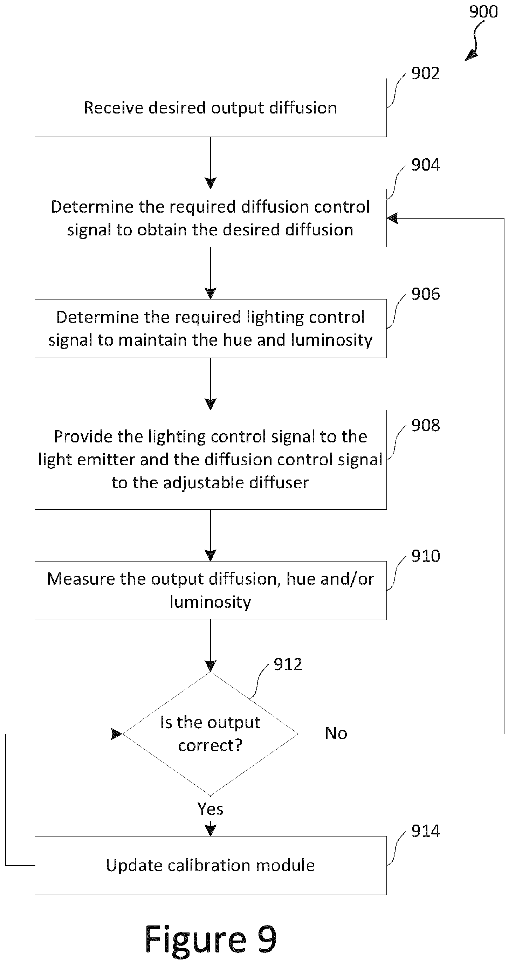

Referring to Figure 9, there is shown a detailed exemplary method 900 of using the adjustable diffuser 216 to vary the diffusivity of the output of the light 12. The method 900 is typically performed as an algorithm by the processor 302 of the computer device 300 on which the control unit 206 is implemented.

In a first step 902, a desired output diffusion is received by the control unit 206 via the user inputs 202 and/or the demultiplexer 218.

In a second step 904, the required diffusion control signal to obtain this desired output diffusion is determined by the control unit 206 using calibration information provided by the calibration module 204.

In a third step 906, the required lighting control signal to maintain the present hue and luminosity is determined by the control unit 206. Specifically, a change in the properties of the adjustable diffuser 216 as is required to alter the output diffusion will also affect the output hue and luminosity; this alteration to output hue and luminosity can be accounted for by altering the lighting control signal to alter the output of the light emitter 210. In the method 900 of Figure 9, the lighting control signal is altered to maintain an output hue and luminosity, it will be appreciated that the lighting control signal could also be altered to obtain a desired output hue and/or luminosity.

In a fourth step 908, the determined lighting control signal and diffusion control signal are provided by the control unit 206 to the light emitter 210 and the adjustable diffuser 216 respectively.

In a fifth step 910, the output diffusion, hue and/or luminosity of the light 12 are measured. This typically comprises using a sensing means (not shown) in conjunction with the light, where the measurements of the sensing means are provided to the light 12.

In a sixth step 912, the measured diffusion, hue and/or luminosity are compared to the desired diffusion, hue and/or luminosity. If the output is incorrect, the control unit 206 adjusts the provided control signals. For example if the output diffusion is lower than the desired diffusion, the diffusion control signal is modified to increase the opacity of the adjustable diffuser 216 and the third, fourth and fifth steps 906, 908, 910 are repeated.

In a seventh step 914, if the control signals have been adjusted and the output is thereafter measure to be equal to the desired output the calibration module 204 is updated by the control unit 206.

The sixth step 912 is thereafter repeated to ensure that the output of the light 12 remains equal to the desired output.

The monitoring and adjustment of the control signals in response to measured properties, and the related updating of the calibration module 914 enables the calibration module 204 to be updated throughout the life of the light 12. This enables changes in the properties of the light 12 to be accounted for without a complex recalibration process, for example the intensity of the light emitter 210 or the optical characteristic of the adjustable diffuser 216 may change with age.

It will be appreciated that while the method 900 of Figure 9 has been described with reference to a desired output diffusion, the method is equally applicable to any desired output. As an example, the user may input any or all of a desired output diffusion, hue and luminosity and the control unit 206 is arranged to determine the required control signals to obtain these desired properties.

### User controls

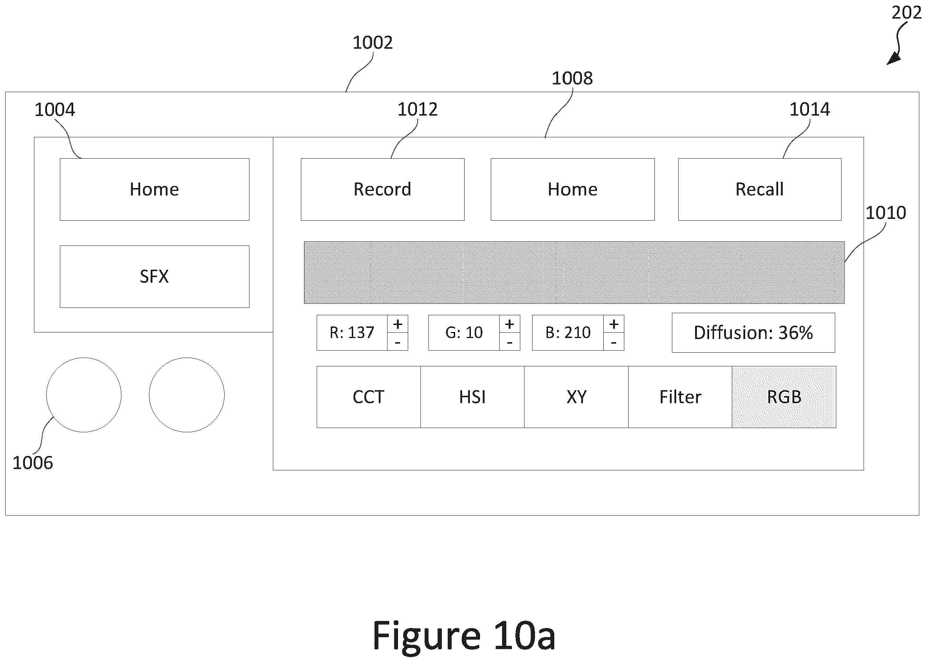

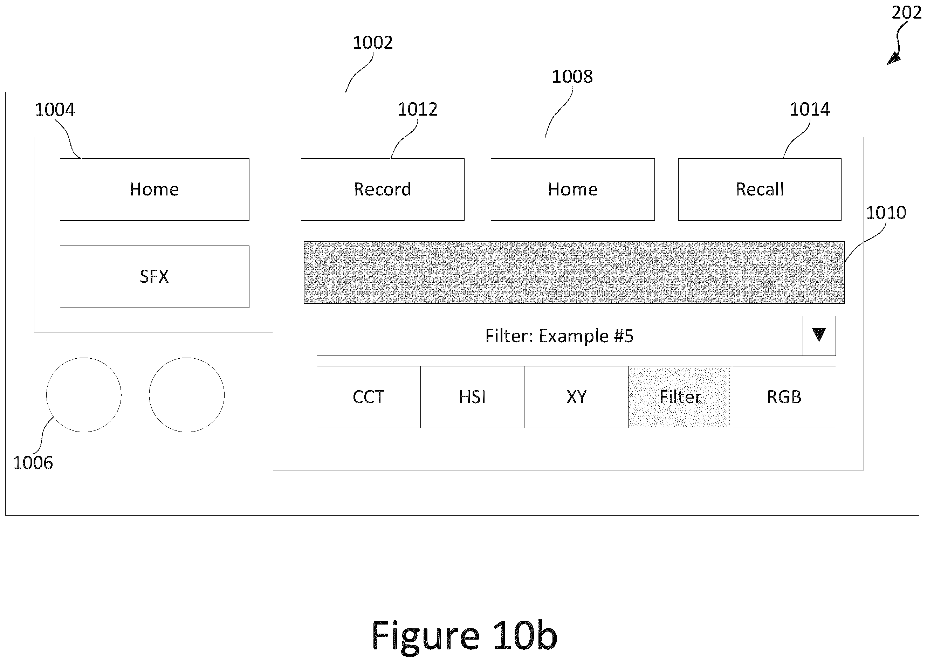

Referring to Figures 10a and 10b, there is shown an embodiment of the user controls 202 for controlling the light 10.

Specifically, in the embodiment of Figures 10a and 10b, the user controls 202 comprises a user interface 1002 that enables the user of the light 12 to input desired settings into the light 12 and to preview the output of the light 12.

Typically, the user interface 202 comprises a touchscreen; the user is able to interact with the touchscreen by pressing a touch button 1004 on the touchscreen. It will be appreciated that using a touchscreen the touch button 1004 is not fixedly located; by changing the display of the touchscreen, the location of the touch button 1004 is alterable.

In this embodiment, there is also provided a fixed dial 1006 that is not a part of the touchscreen. Instead, the fixed dial 1006 is a tactile dial that is operated by physical rotation. Providing a combination of virtual touch buttons and physical tactile dials enables selection of a wide variety of operations using the touchscreen, with the user still being able to access rapidly certain operations through the fixed tactile dials. Further, this enables coarse control of an input using the touchscreen and thereafter fine control of the input using the fixed dials 1006. It will be appreciated that while this embodiment uses a combination of a touchscreen and fixed dials, it is possible to implement the user interface 1002 using either or both of these control means.

The user interface 1002 is arranged to display a preview 1010 of the selected output, so that the user of the light 12 can view the output before setting the light 12. Where multiple lights are used, a single user interface is typically arranged to display a preview of the output of each light. More generally, the user interface 1002 of the light 12 may be arranged to display and alter the output of a plurality of similar lights. The user interface 1002 may be arranged to display a preview of the output of the combination of lights at a given point in space (e.g. where there are two similar lights outputting different colours of light, the user interface 1002 may display the combination at a given point, along a 2 dimensional line, or as a 3 dimensional representation).

The user interface 1002 is a graphical user interface (GUI) and the preview 1010 displays a visualisation of the output of the light 12. The visualisation may, for example, comprise an image that represents the output of the light 12. In some embodiments, the preview 1010 is substantially a replication of the output of the light, e.g. the preview 1010 is a part of the user interface 1002 that has substantially the same colour and intensity as the output of the light 12. In this embodiment, the preview 1010 comprises a bar on the user interface 1010 that has substantially the same colour and intensity as the output of the light 12. The user interface 1002 and the light emitter 216 may use different lighting means (e.g. the user interface may be an LCD, while the light emitter 216 may be an LED). Therefore, the user interface 1002 may not show a perfect replication of the output of the light 12. Nevertheless, the user interface typically substantially replicates the output of the light 12, e.g. it provides an accurate representation that enables the user of the light 12 to determine the output of the light 12.

Specifically, the visualisation of the preview 1010 is a direct graphical representation of the output of the light 12. A direct graphical representation enables a user to immediately picture the output. This is in contrast to an indirect graphical representation (e.g. a percentage, or a numerical or textual representation) that requires interpretation to identify the output. Therefore, the visualisation enables a user to immediately identify the effect of changing a setting; on the contrary, a textual representation requires interpretation and so does not enable immediate identification of the effects of a change (e.g. a bar that shows a selected shade of red is much easier to picture than a numerical RGB value).

While the preview 1010 is arranged to enable the user to view the output before setting the light 12, the preview is also typically arranged to display the output of the light 12 during use. This enables the user to view a representation of the output of the light 12 without being in front of the light 12.

In various embodiments, the user interface 1002 and/or the preview 1010 is arranged to display one or more of:
- A predicted colour and/or diffusivity of the light 12.
- A profile of the output against time - for example a user may select a time profile of diffusion suitable for an entire scene and the user interface is arranged to allow the user to scan through the time profile.
- A combined output from multiple lights - where more than one light is being used, the user interface may show the effect of the combination of the outputs of each light.
- The RGB or RGBWW setting of the predicted output of the light 12 (a colour bar or colour wheel).
- The HSI setting of the predicted output of the light 12 - e.g. degrees of colour.
- A comparable filter - e.g. industry standard gels may be compared on screen. Specifically, the user is able to select a filter for the light 12 to imitate through control of the light emitter 210 and the adjustable diffuser 216.
- XY co-ordinate colours.
- Colour Temperature - a preview of Colour temperature from warm to cool.
- Green/Magenta correction.

The choice of which of these parameters to view is made by selecting a mode of operation using the user interface 1002. The user is able to alter any of these parameters using the touch button 1004 and/or fixed dial 1006 of the user controls 202.

In order to preview a certain setting, the user interface 1002 is arranged to vary its colour and intensity, typically by varying the operation of constituent light emitting components. As an example, to display the effects of a change in the opacity of the adjustable diffuser 216, the user interface 1002 may alter the output of the user interface 1002 so as to reduce the brightness and alter the hue of the output of the user interface 1002 to obtain the correct colour.

Typically, the user interface is integrated with the light 12, for example the user interface 1002 may be located on the rear of the light 12. In some embodiments, the user interface 1002 is removable from the light 12 and/or is remote from the light 12, so that a user is able to preview and alter the settings of the light 12 even if the light 12 is located in a hard to access location.

In such embodiments, the light 12 typically comprises a structure for receiving the user interface 1002, such as a recess, a notch, and/or a mounting point. This enables the user interface 1002 to easily be removed from and returned to the light 12. In particular, there may be provided a recess that corresponds to the shape of the user interface 1002 to allow simple removal and replacement of the user interface 1002.

The control unit 206 is arranged to communicate with the user interface 1002 such that once the control unit 206 has determined an appropriate diffusion control signal and an appropriate lighting control signal, the control unit 206 is arranged to determine a suitable user interface signal that results in the output of the light 12 being accurately displayed in the form of the preview 1010. A change in the diffusion control signal, as may occur due to feedback from a sensor, is then mirrored by the user interface 1002.

In some embodiments the behaviour of the light emitter 210 and/or the adjustable diffuser 216 is arranged to change based on environmental changes and/or time; in order to effect this change the control unit 206 is arranged to alter the lighting control signal and the diffusion control signal. By connecting the user interface 1002 (directly or indirectly) to the control unit 206, the user interface 1002 is able to update the preview 1010 as the output of the light 12 changes. Further, the user interface 1002 may be arranged to update the preview 1010 before the control unit 206 alters either control signal. The user is then able to accept or reject the upcoming alteration or to select a different alteration.

In some embodiments, there is provided an interface control unit (not shown) for the user interface 1002 that is separate from the control unit 206 for the light emitter 210 and/or the adjustable diffuser 216. In these embodiments, a bus runs between the interface control unit and the control unit 206; the bus transfers data so that the preview 1010 shown on the user interface and the output of the light 12 are the same. Specifically, the transferred information enables the user interface to present as a preview the output of the light 12 using calibration information for the user interface, the light emitter 210, and the adjustable diffuser 216. The interface control unit is implemented using a computer device as described with reference to Figure 3.

The user interface 1002 and the interface control unit are typically integral parts of the light 12. This enables the interface control unit to interact with the control unit 206; this also provides a common power supply - typically mains voltage - for the user controls 202 and the user interface 1002 (e.g. the user interface 1002 and the light 12 are typically arranged to be powered by the same power source). The interface control unit and the control unit 206 both being integrated in the light 12 enables the two control units to be connected using a wire (e.g. the user interface 1002 and the light 12 are typically arranged to be connected by a wire, e.g. during operation of the user interface 1002)); this reduces the risk of an error in transmission as compared to a wireless transmission means.

In some embodiments, the user interface 1002 is removable and/or comprises a battery power source. In these embodiments the user interface 1002 may still be arranged to receive power from the power source of the light 12, where this power may be used to charge the battery of the user interface 1002.

In some embodiments, the user interface 1002 is remote from the light 12; in these embodiments, the interface control unit may still be an integral part of the light 12. This enables the provision of a sleek remote user interface, since the majority of the processing can be performed by the interface control unit.

So that the preview 1010 of the user interface 1002 accurately represents the output of the light 12, the user interface 1002 is typically arranged to access calibration information relating to the user interface, the light emitter 210, and/or the adjustable diffuser 216.

As has been described with reference to the calibration memory 204, calibration information comprises data that relates a desired input to a desired output. In some embodiments, the user interface 1002 comprises calibration memory that relates the desired input to the output of the light 12 and further relates this to a required output of the user interface to obtain an accurate preview. The calibration information may be stored in the calibration memory 204 or may be stored separately in an interface calibration memory.

As for the calibration information for the light emitter 210 and the adjustable diffuser 216, the calibration information for the user interface 1002 may comprise characteristic charts and/or look-up tables.

Calibration of the user interface takes place in a similar manner to calibration for the light emitter 210 and the adjustable diffuser 216 - as has been described already with reference to Figure 8, specifically:
1. In a first step, a desired output is selected by a user;
2. In a second step:
   a. the actual output of the user interface 1002 is measured, for example using a spectrometer;
   b. the difference between the input colour and the measured output is determined and the input is varied accordingly until the desired output is achieved, and
   c. the input required to obtain the output is recorded; and
3. In a third step, this process is repeated for a range of outputs to obtain a characteristic chart and/or a look up table.

The calibration information for each of the light emitter 210, the adjustable diffuser 216, and the user interface 1002 is considered when a desired output is selected to ensure that the display of the user interface 1002 is comparable to the output of the light 12. As an example, an increase in the desired diffusion results in an increase in the opacity of the adjustable diffuser 216 as well as a hue change of the light emitter 210. A preview of this output is achieved by dimming the user interface 1002 and, if appropriate, changing the colour of the output of the user interface 1002.

In some embodiments, the user controls 202 comprise an additional adjustable diffuser (not shown) that is placed in front of the user interface 1002. In these embodiments, the control unit 206 is arranged to alter the properties of the additional adjustable diffuser in dependence on a change in the properties of the adjustable diffuser 216. The use of an additional adjustable diffuser can assist with the provision of an accurate preview.

As shown in Figures 10a and 10b, the user interface 1002 typically comprises a number of 'quick start' icons, such as a home button and a special effects (`sfx') button. In various embodiments, there is also provided a DMX button for accessing a demultiplexer options menu; a flash button; and/or an adjustable diffusion ('sys') button. These 'quick start' icons are provided in the form of touch buttons, which are arranged to remain on the user interface 1002 of the touchscreen while the user interacts with menus and the remainder of the user interface 1002 changes.

Within the user interface 1002, there is a main display 1008, which displays the preview 1010 of the output of the light 12 to the user and offers options for changing this output. A subset of these options has been described above with reference to the preview capability. Further options for controlling the light are also accessible via the touchscreen, for example the touchscreen typically enables access of a settings overview for the light 12 that enables the alteration of numerous aspects of the light.

Referring to Figures 10a and 10b, an exemplary aspect of the operation of the user interface is now explained.

Referring to Figure 10b, the user interface 1002 is arranged to allow selection of a filter, e.g. by colour. In this embodiment, selection is achievable using a drop-down menu. Typically, the user interface also enables selection by reference to a database of filters - for example a database of industry standard filters is typically stored on the computer device 300 on which the user controls 202 (and thereby the user interface 1002) are implemented. A selection of a desired filter colour then brings up a list of industry standard filters available for selection.

Typically, selection using a filter is performed in two steps. First, a coarse search, e.g. for a colour or for a filter from a database, is performed. Second, a fine selection is performed, where the settings are fine-tuned.

Specifically, once a filter has been selected, the user is able to switch the mode of the user interface 1002, for example the user may select a HSI (Hue-Saturation-Intensity) input mode. The user interface 1002 is arranged to convert the selected settings between each mode so that the chosen filter setting is displayed using a HSI representation. The user is then able to further fine-tune the settings using the HSI mode. The preview 1010 is continuously updated to display a visualisation of the selected settings.

While this example considers switching between the filter and HSI modes, it will be appreciated that the user is able to switch between each mode in order to select a desired output.

The components (e.g. filters) are typically sorted into groups; for example, the filters may be grouped by colour and/or manufacturer. This enables a user with a non-specific need to identify an optimal filter. The user might know that a red filter is needed, but not know which specific filter is optimal; the user is able to select the group of red filters and search through these to find an optimal filter. In some embodiments, the component database stored by the light 12 is arranged to be updatable, e.g. via the communication interface 304 of the computer device 300 on which the user controls 202 are implemented. This enables up-to-date industry-standard filters to be searched for and selected.

Once a setting is selected, the user interface 1002 is arranged to enable storage of the setting, for example by the provision of a "record" touch button 1012. The setting is stored in the storage 308 of the relevant computer device 300 and can be recalled later by the user selecting a "recall" button 1014.

In some embodiments, there is provided a `seek' function where, upon the selection of a colour of filter, the user interface is arranged to cycle through each filter having this colour. Similarly, the user interface may be arranged to cycle through a range of colours, brightnesses and/or diffusions so that the user is able to see different options for providing an output. Specifically, the user interface is arranged to show a possible output and then, after a certain time interval has passed, the user interface is arranged to change the display to show another possible output. The time interval may be user selected or set by the manufacturer of the light 12. The user is able to stop the cycling by interacting with the user interface 1002.

In some embodiments, the preview 1010 is arranged to display a visualisation of special effects that can be achieved using the light 12. Similarly, in some embodiments the user interface 1010 is arranged to display a visualisation of the behaviour of the light 12 over time, so that there may be provided a play/pause button (e.g. via a touch button) that enables the user to view effects that vary with time. The fixed dial 1006 enables fine control for previewing a time profile (e.g. rotation of the dial may move forwards/backwards through a video).

In some embodiments, the user interface 1002 is arranged to receive firmware updates via a network connection, such as the communication interface 304 of the computer device 300 on which the user controls 202 are implemented. This ensures that the user interface 1002 can be updated.

In some embodiments, the user interface 1002 is arranged to interact with a sensor that measures the output of the light 12. In these embodiments, the sensor may be the sensor that communicates with the control unit 206 or may be a different sensor. In these embodiments, the user interface 1002 is arranged to modify the display based on the sensor to obtain a more accurate representation of the output of the light 12.

In some embodiments, the user interface 1002 is arranged to modify the display based on the environment of the user interface 1002. Conditions in front of and behind the light 12 might be different, so that the same output would appear differently (e.g. the front of the light may be in darkness, while the back of the light is well lit). In these situations, the user interface 1002 is arranged to modify the preview 1010 to compensate for different environmental conditions.

The user interface 1002 comprises a multi-colour display, typically a full colour display.

The user interface 1002 is typically a Liquid Crystal Display (LCD) screen. Such an LCD may have a colour gamut that is comparable, or greater than, the colour gamut of the light (that is the colours obtainable as an output of the light), or the user interface 1002 may have a smaller colour gamut. Where the user interface 1002 has a smaller colour gamut, the user interface 1002 typically 'clips' the colour, so that it achieves as close a value as possible.

Obtaining an LCD screen with a high colour gamut is expensive; therefore, in some circumstances it is advantageous to provide a single user interface for a plurality of lights. The single user interface is typically of high quality and is arranged to display and alter the settings of each of the plurality of lights. The single user interface contains calibration information relating to the display of the user interface, e.g. the LCD screen. The single user interface is arranged to use this calibration information when providing a preview of the output of each light.

Where a RGBWW light emitter is used, it is possible to provide any colour using only 3 of the constituent colours, that is: three of red, green, blue, warm white, and cool white.

The control unit 206 and/or the interface control unit is typically arranged to determine three suitable colours and to use these three colours to provide an output. The colours used may be shown to the user via the user interface 1002.

### Attaching light modification devices and lighting device modules

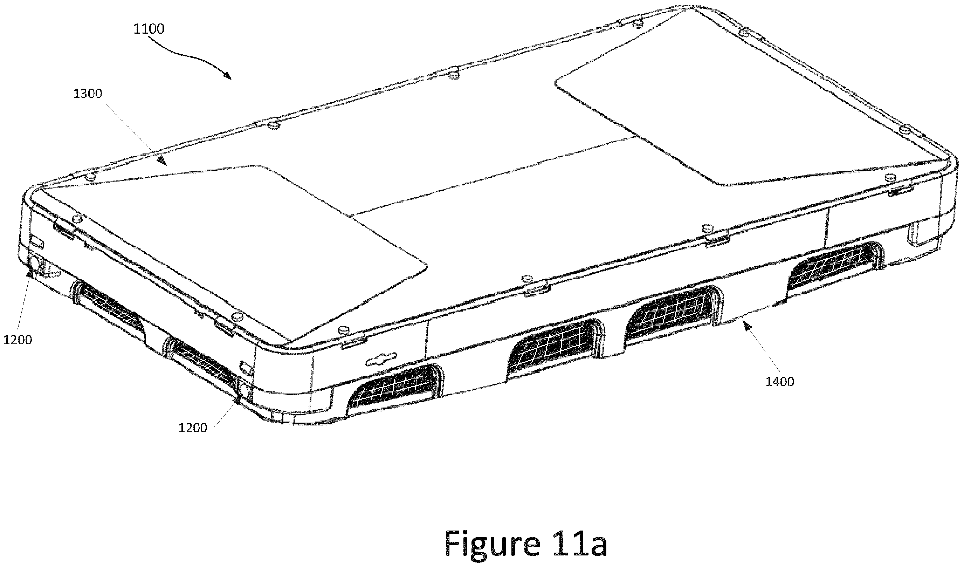

Referring to Figures 11A, 11B, 16, and 20 a light assembly 1100, 1600, 2000 is shown in two positions. Light assemblies generally are used in film and photographic industries where a director or photographer wishes to illuminate an object in a specific way in order to capture an image with a camera (not shown). The camera may be arranged to capture single images, e.g. photographs, and may for example be a digital single-lens reflex camera (DSLR). Equally, the camera may be arranged to capture video; the camera may for example be a digital movie camera.

Multiple light assemblies 1100, 1600, 2000 may be used. The light assembly 1100, 1600, 2000 may be a component of a lighting system that contains a plurality of similar or different lighting assemblies.

Often it is desirable to attach different light modification devices 1300 or different lighting device modules 1800 to create different lighting effects, modify the function of the light assembly and/or augment the function of the light assembly. Problematically, if it is desired to routinely switch the different light modification devices 1300 or lighting device modules 1800, this can be a laborious and time intensive task. This can result in wasted time and can result in increased wear and tear on the different lighting assemblies, light modification device, and lighting device modules.

The present disclosure further relates to a modular lighting assembly 1100 and system for attaching and releasing different light modification devices 1300. The present disclosure further relates to a modular lighting assembly 1600 and system for attaching and releasing different lighting device modules 1800. The present disclosure further relates to a modular lighting assembly 2000 and system for attaching and releasing different light modification devices 1300 and lighting device modules 1800.

These examples of the present disclosure enable the user of the lighting assembly 1100, 1600, 2000 to easily and quickly customise different aspects of the lighting assembly 1100, 1600, 2000 providing greater flexibility in lighting options as the friction of changing the features of the lighting assemblies 1100, 1600, 2000 is reduced.

Crosshatching is used throughout the figures to indicate grills. Grills are configured to allow air to pass through them. The grills are primarily used for airflow management within the lighting assembly 1100, 1600, 2000.

Referring to Figure 11A, according to a first example, the lighting assembly 1100 is shown in a first position comprising four quick release devices 1200 (two shown, two occluded), a light modification device 1300, a lighting device 1400, and a diffuser (occluded by the light modification device 1300). In this particular example, the lighting assembly 1100 is substantially rectangular with rounded corners. Preferably, the lighting assembly 1100 is substantially oblong. In alternative examples, the lighting assembly 1100 is substantially circular or ellipsoidal.

In this example, the diffuser 1500 is a diffuser panel. The diffuser 1500 may be a passive diffuser such as a Lee Filter ^{®} 250, or the diffuser 1500 may be a diffuser assembly such as the diffuser assembly 420 described above with reference to figures 4a to 4d.

The quick release devices 1200 are in pairs and are attached to opposite sides of the lighting device 1400. In this oblong example, each pair is placed on the shorter side of the oblong. The two occluded quick release devices 1200 are similarly placed on the opposite short side of the lighting assembly 1100 from the two quick release devices that are shown in Figure 11A.

Preferably, the lighting assembly 1100 comprises at least one quick release device 1200.

In this example, the light modification device 1300 is a barn door module. The barn doors are in a closed position such that substantially no light can escape from the lighting device 1400. The quick release devices 1200 are in a locked position as shown by the button and protrusions of the quick release devices 1200 protruding outward and not being depressed.

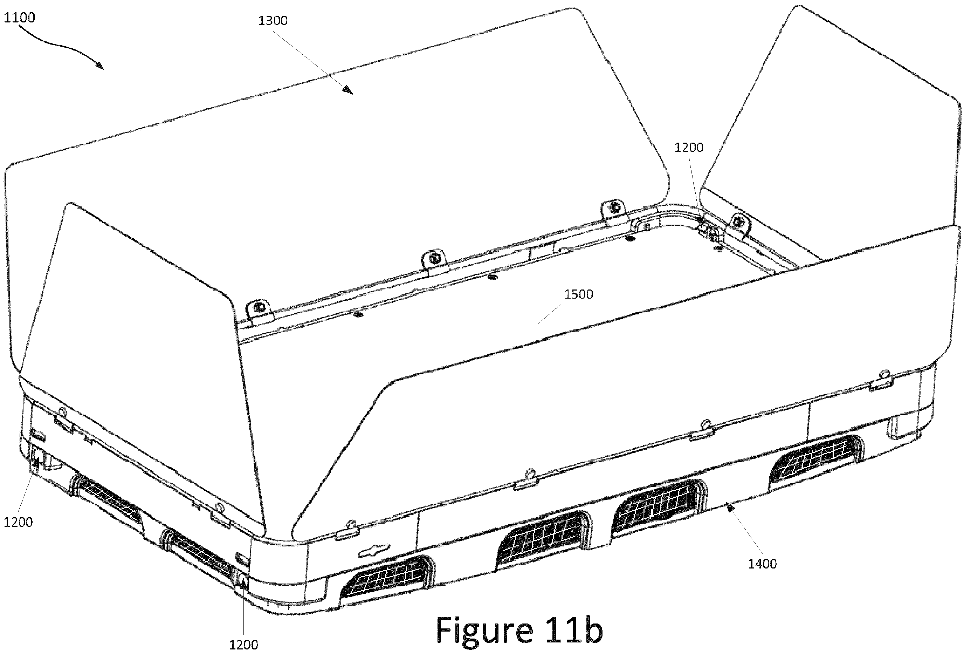

Referring to Figure 11B, according to the same example, the light assembly 1100 is shown in a second position comprising the same components. The second position shows the barn doors in an open position and a third quick release device 1200 (the fourth still being occluded by the light modification device 1300). The quick release devices 1200 are in an unlocked position as shown by the buttons and protrusions of the quick release devices 1200 being depressed.

While in this example four quick release devices 1200 are used, in an alternative example only two quick release devices are used. In a further alternative, four quick release devices 1200 are used; however one is placed on each side of the substantially rectangular lighting assembly 1100.

In a further alternative example, the lighting assembly 1100 is substantially circular. In this alternative example, the lighting assembly 1100 comprises any number of quick release devices 1200 and the quick release devices 1200 are equally spaced around the perimeter of the circular lighting assembly 1100. Preferably in this example, the lighting assembly 1100 comprises two quick release devices 1200 that are on opposite sides of the circular perimeter with 180 degrees rotation between them. Alternatively, the lighting assembly 1100 comprises three quick release devices 1200 which have 120 degrees of space between them.

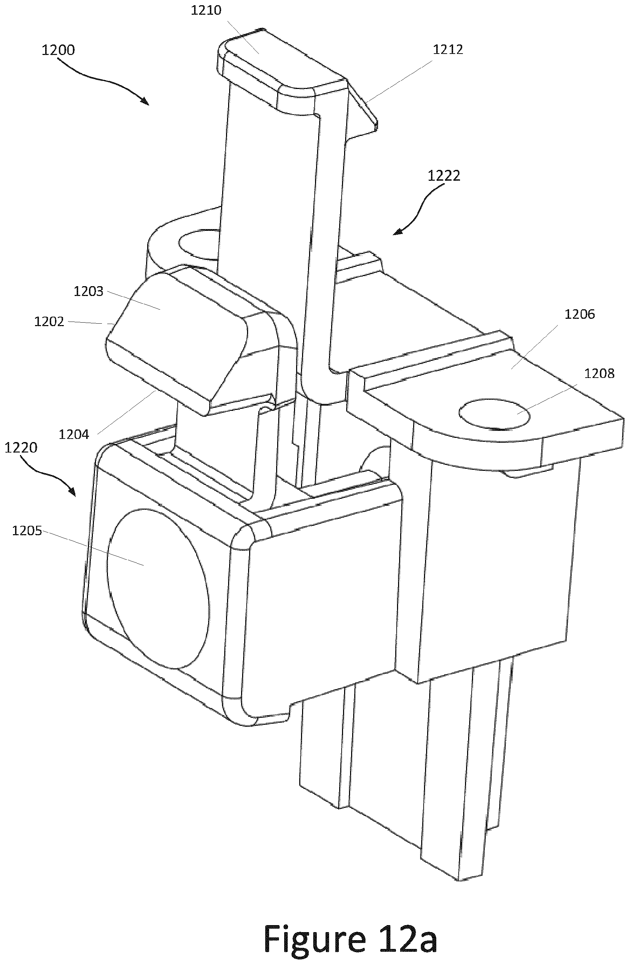

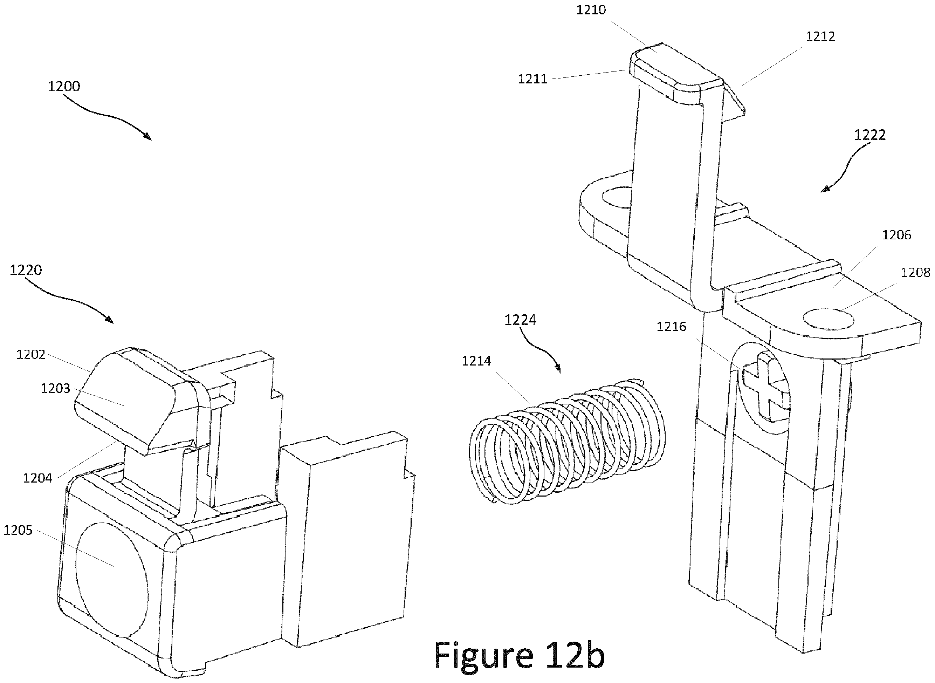

Referring to Figure 12A and 12B, detailed views of the quick release device 1200 are shown. Figure 12A shows the assembled quick release device. Figure 12B shows an exploded view of the quick release device. The quick release device comprises a light modification device protrusion 1202, a button 1205, a lighting device attachment member 1206 comprising a mounting aperture 1208, a light device attachment protrusion 1210, a colour gel/filter protrusion 1212, a spring 1214, and a spring receiving member 1216.

The quick release device 1200 is considered unlocked when the light modification device protrusion 1202 is recessed and/or in the depressed position.

The colour gel/filter protrusion 1212 is for holding colour gels/filters against the lighting device 1400 and/or diffuser 1500 (which may by the diffuser assembly 420 described above) in front of the lighting device 1400. The colour gel/filter protrusion 1212 is optional. In an alternative example, the colour gel/filter protrusion 1212 is part of the lighting device body 1402. In a further alternative example, there is no colour gel/filter protrusion 1212.

In this example, the quick release device 1200 can be considered as being made up of three components: the first component 1220 that comprises the light modification device protrusion 1202 and the button 1205; the second component 1222 that comprises at least the members arranged to attach to the light device 1400; and a biasing member 1224 that is a spring 1214 in this example. The second component 1222 comprises at least the lighting device attachment member 1206. In this example, the three components 1220, 1222, 1224 are distinct and separable. Alternatively, the three components could be integral to each other and/or a single moulded component. In a further alternative, the second component 1222 is integral to the lighting device 1400.

The first component 1220 is biased, using the biasing component 1224, to extend away from the second component 1222. This "away" position is considered the locked position. When the first component 1220 is closer or against the second component 1222, this position is considered the unlocked position. This unlocked position is such that the light modification device protrusion 1202 does not extend outwards of the body of the lighting device 1400.

The button 1205 is configured for use by a user to move the light modification device protrusion 1202 from the locked position to the unlocked position.

The light modification device protrusion 1202 and button 1205 are operatively coupled such that when the button 1205 is depressed, the light modification device protrusion 1202 also is depressed and vice versa. In this example the light modification device protrusion 1202 and button 1205 are integral. In an example alternative, they are made from two separate components that are operatively coupled.

In an alternative example, the button 1205 and light modification device protrusion 1202 are the same member such that when a user wants to depress the light modification device protrusion 1202, the user presses the light modification device protrusion 1202 as if it were the button 1205.

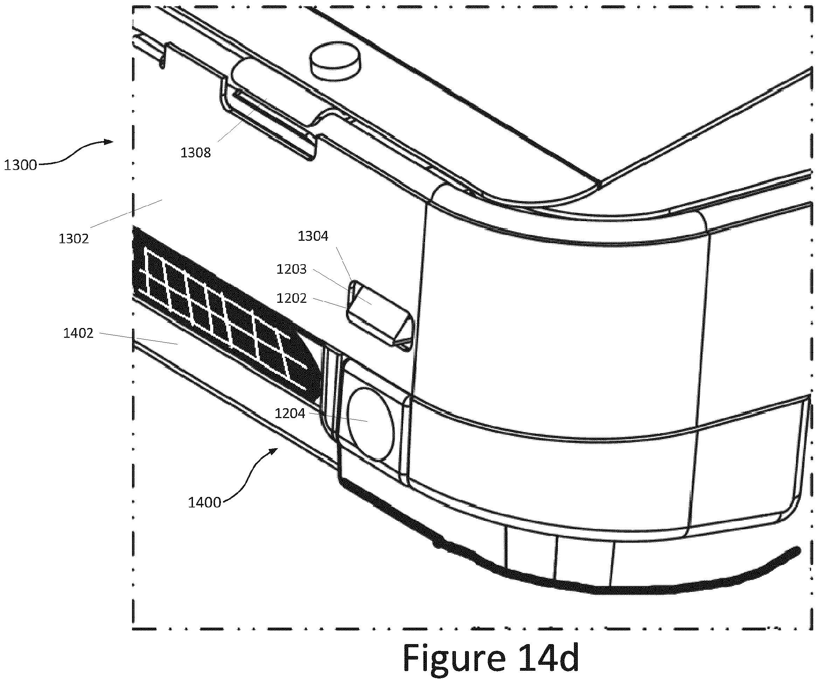

In the present example, the light modification device protrusion 1202 comprises an inclined leading surface 1203 suitable for interacting with the light modification device 1300 (the interaction of which is described with reference in Figure 14D below). The light modification device protrusion 1202 also comprises an abutment surface 1204. The abutment surface 1204 is configured to abut against the light modification device 1300. In particular, the abutment surface 1204 is configured to abut the protrusion interfacing member 1304 of the light modification device 1300. Preferably and in this example, the light modification device protrusion 1202 has a substantially tab like shape. In an alternative example, the light modification device protrusion 1202 is a dome and the inclined leading surface 1203 for interacting with the light modification device 1300 is the upper half of the hemisphere of the dome. As a further alternative to the dome example, the dome functions as the button 1205 also.

In the dome example, the dome is spring loaded with a force such that the weight of the light modification device 1300 will not move the dome from the locked position to the unlocked position. In particular, the user is still required to depress (via applying more force to the top of the dome) the dome in order to remove the light modification device 1300 from the lighting assembly 1100.

Returning to the example of Figures 12A and 12B, the second component 1222 is configured to attach or be attached to the light device 1400 and retain the first component 1220 such that it cannot move out of the locked position, unlocked position, or any intermediary position between the two. The second component 1222 comprises the lighting device attachment member 1206 which in this example is a flange with an aperture 1208. The flange and aperture 1208 are configured to receive a screw or post to retain the second component 1222 and therefore the entire quick release device 1200 in or with the body of the lighting device 1400. A person skilled in the art will appreciate that alternative fixing devices may be used to attach the second component 1222 to the lighting device 1400 such as an interference fit, snap fit, glue, sonic welding and/or heat sealing.

The light device attachment protrusion 1210 is optionally used to assist in locating and arranging the second component 1222 into the correct place of the lighting device 1400. The light device protrusion 1210 has a lip 1211.

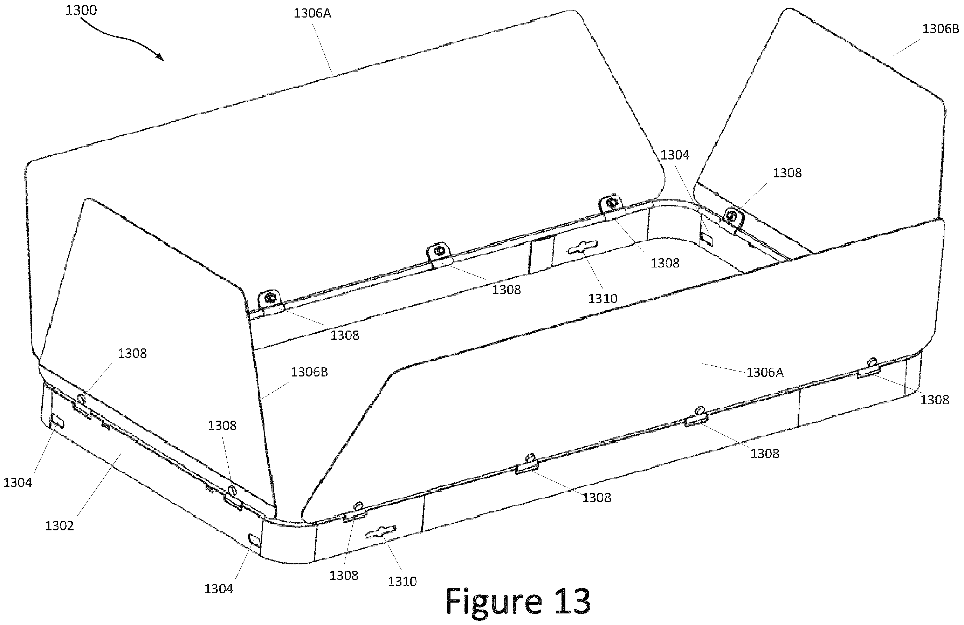

Referring to Figure 13, an example light modification device 1300 is shown comprising a body 1302 and four protrusion interfacing members 1304 (three are shown, one is occluded by one of the leaves 1306A), and two hole and slot apertures 1310. By way of example, the light modification device 1300 is a barn door module and the light modification device 1300 further comprises four leaves 1306A, 1306B, and at least one hinge 1308 per leaf.

The body 1302 and protrusion interfacing members 1304 are features of the generic light modification device 1300 while the leaves 1306A, 1306B and hinges 1308 are features specific to this specific example of a barn door module.

The body 1302 comprises at least one protrusion interfacing members 1304. The number of protrusion interfacing members 1304 is equal to the number of quick release devices 1200 of the light assembly 1100. In this example, four protrusion interfacing members 1304 are used to correlate with the four quick release devices 1200 of the light assembly 1100. Alternatively, the body 1302 comprises a different number of protrusion interfacing members 1304 compared with the number of quick release devices 1200. In this alternative case some protrusion interfacing members 1304 may go unused or some quick release devices 1200 may go unused.

In this example embodiment, the protrusion interfacing members 1304 are apertures. Alternatively, the protrusion interfacing members 1304 are blind holes that do not go all the way through the body 1302. In a further alternative, the protrusion interfacing members 1304 are shaped to substantially match the shape of the protrusions they are designed to interface with. In particular the protrusion interfacing members 1304 are shaped to substantially match that if the light modification device protrusion 1202 of the quick release device 1200 (having an internal inclined face 1203 to complement the inclined face of the light modification device protrusion 1202).

The light modification device 1300 of this example comprises at least one leaf. In particular, two different sets of leaves 1306A, 1306B are used. The longer leaves 1306A are used for the longer side of the oblong shaped lighting assembly 1100 and the shorter leaves 1306B are used for the shorter side of the oblong shaped lighting assembly 1100. A person skilled in the art will appreciate that different sizes and shapes of leaves 1306A, 1306B can be used or changed depending on the size or shape of the lighting assembly. If a circular shaped lighting assembly 1100 is used, then four leaves of equal size are used.

The leaves 1306A, 1306B are movable relative to the body 1302 of the light modification device 1300. In particular, the leaves 1306A, 1306B are pivotable about the at least one hinge 1308 connecting each leaf 1306A, 1306B to the body 1302. The hinges are stiff such that when the leaves 1306A, 1306B are pivoted, they remain in substantially the same location without further force needing to be applied to keep them there.

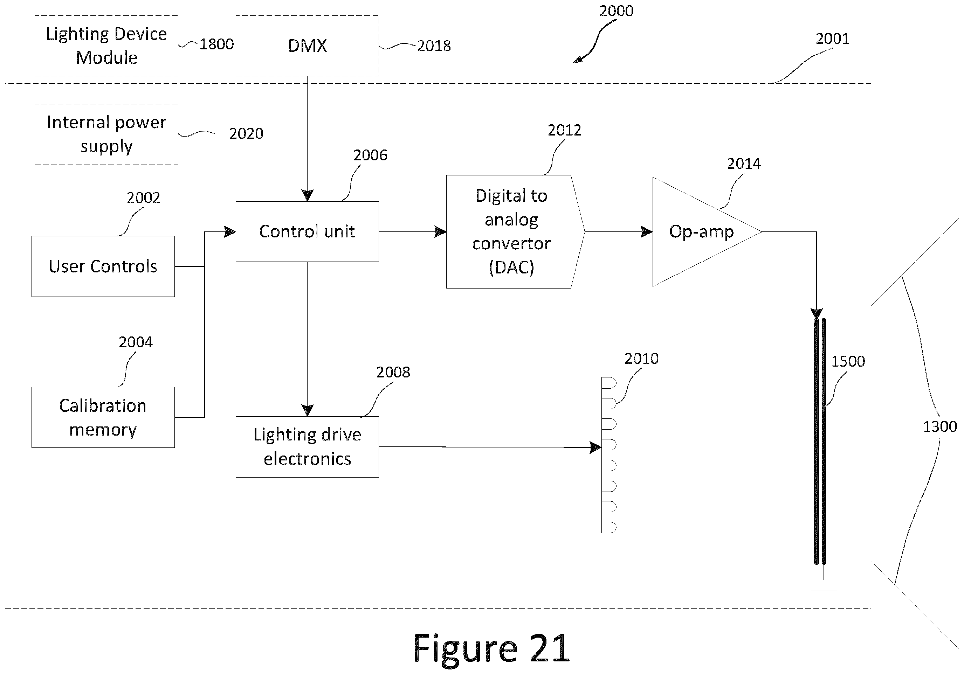

The leaves 1306A, 1306B are manipulable. In the present example the leaves 1306A, 1306B are user manipulable or manually manipulable. In an alternative example, the manipulation of the leaves 1306A, 1306B is controlled by a control unit 2006 of the lighting device 1400. The control unit 2006 is described in greater detail with reference to Figure 21.

Preferably, the inner surface of the leaves 1306A, 1306B is a reflective surface. In an alternative embodiment, the inner surface of the leaves 1306A, 1306B are non-reflective.

The hole and slot apertures 1310 are optional and are used for attaching further devices to the body 1302 of the light modification device.

The light modification device 1300 can be any one or more of the following devices:
- a barn door (which is the depicted example),
- a window,
- a gobo,
- a mirroring device,
- a polarizing filter,
- an iris,
- a shutter
- a lens or lenses, and/or
- a colour filter, in particular a colour correction filter.

Various functions of the light modification devices 1300 are controllable by a control unit 2006 of the lighting device 1400 and/or the light device module 1800 (if present).

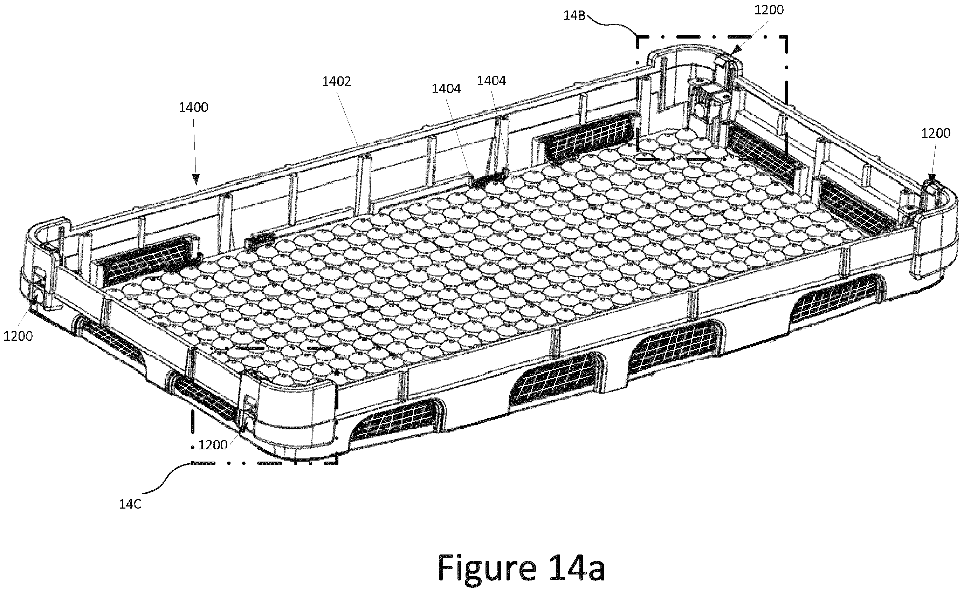

Referring to Figure 14A, the light assembly 1100 is shown without the light modification device 1300 or the adjustable diffuser. The lighting device 1400 comprises a body 1402, and a plurality light emitting devices 1404, in particular Light Emitting Diodes (LEDs).

At least one quick release device 1200 (four in the present example) is attached to the lighting device 1400. In an alternative example, the at least one quick release device 1200 is integrally formed with the lighting device 1400.

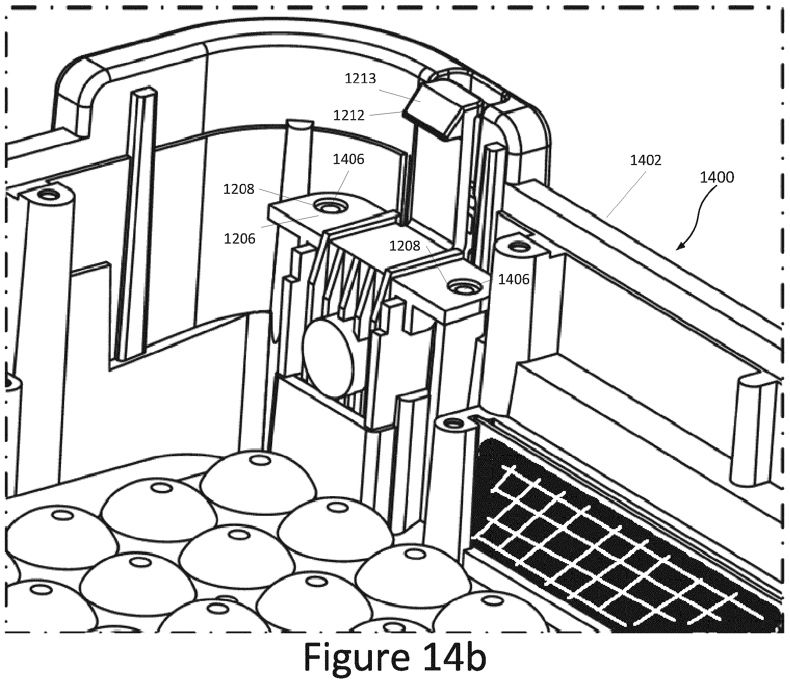

Figure 14B shows a detail of the lighting device 1400 and quick release device 1200. The detail is of the section marked "14B" on Figure 14A. This example shows in more detail the quick release device 1200 attached the body 1402 of the lighting device 1400. In particular, the second component 1222 of the quick release device 1200 is attached to the body 1402 of the lighting device 1400. The inner facing features of the quick release device 1200 are shown; in particular the inclined leading surface 1213 of the light device attachment protrusion 1210 is shown. The lighting device attachment members 1206 of each of the four quick release devices 1200 provide four substantially flat platforms upon which a panel, for example a diffusion panel 1500 (such as the diffuser assembly 420 described above), can be mounted.

The posts 1406 of the lighting device 1400 is sitting within the aperture 1208 of the lighting device attachment member 1206 and the light device attachment protrusion 1210 (occluded in this view) is sitting on the body 1402 of the lighting device 1400.

As previously discussed with reference to Figures 12A and 12B, other methods of attaching the quick release device 1200 to the lighting device 1400 are possible.

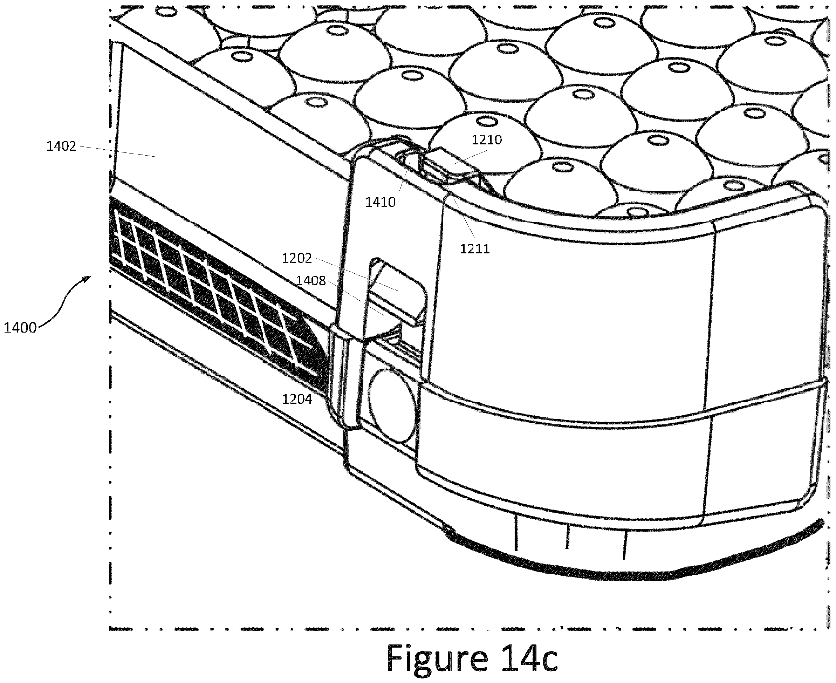

Figure 14C shows a detail of the lighting device 1400 and quick release device 1200. The detail is of the section marked "14C" on Figure 14A. This example shows in more detail the quick release device 1200 attached the body 1402 of the lighting device 1400. In particular, a light modification device protrusion aperture 1408 is shown as a part of the body 1402 of the lighting device 1404. This light modification device protrusion aperture 1408 allows at least the light modification device protrusion 1202 to extend out from the body 1402 of the light device 1400. In this example, the button 1205 also is accessible by the light modification device protrusion aperture 1408. Alternatively, a separate aperture is used to access the button 1205.

The button 1205 and the light modification device protrusion 1202 are shown in the unlocked or depressed position as is shown by the fact the light modification device protrusion 1202 is not extending beyond the body 1402 of the lighting device 1400.

The light device attachment protrusion 1210 is shown resting in a cut-out 1410 of the body 1402 of the lighting device 1400. This may provide a further alternative means of fastening the quick release device 1200 to the lighting device 1400 by gluing, welding, or otherwise fixing permanently or semi-permanently the light device attachment protrusion 1210 to the cut-out 1410.

When attaching a colour gel/filter to the light, the gel/filter is slid over the quick release device 1200. The gel/filter interfaces with the inclined leading surface 1213 of the colour gel/filter protrusion 1212 so as to force the protrusion 1212 to bend backwards into the cut-out 1410. The protrusion 1212 is made from an inherently resilient material so that once the gel/filter has been slid over the surface 1213, the protrusion 1212 will return to its upright position so as to retain the gel/filter under the tab. The lip 1211 of the protrusion 1212 limits the extent to which the protrusion 1212 can be bent backwards into the cut-out 1410 (since the lip 1211 will abut the lighting device body 1402) for example to prevent the protrusion 1212 bending so far as to break. The lip 1211 could be longer or shorter depending on the extent to which the protrusion 1212 can bend without breaking.

Figure 14D shows a detail of the lighting device 1400, quick release device 1200, and the light modification device 1300. The detail is taken from the same angle as that of Figure 14C however with the light modification device 1300 installed and the quick release device 1200 in the locked position.

In this example, the light modification device protrusion 1202 is shown inserted through the protrusion interfacing member 1304. In this example, the light modification device 1300 is in an installed position such that it is able to modify the light produced by the lighting device 1400.

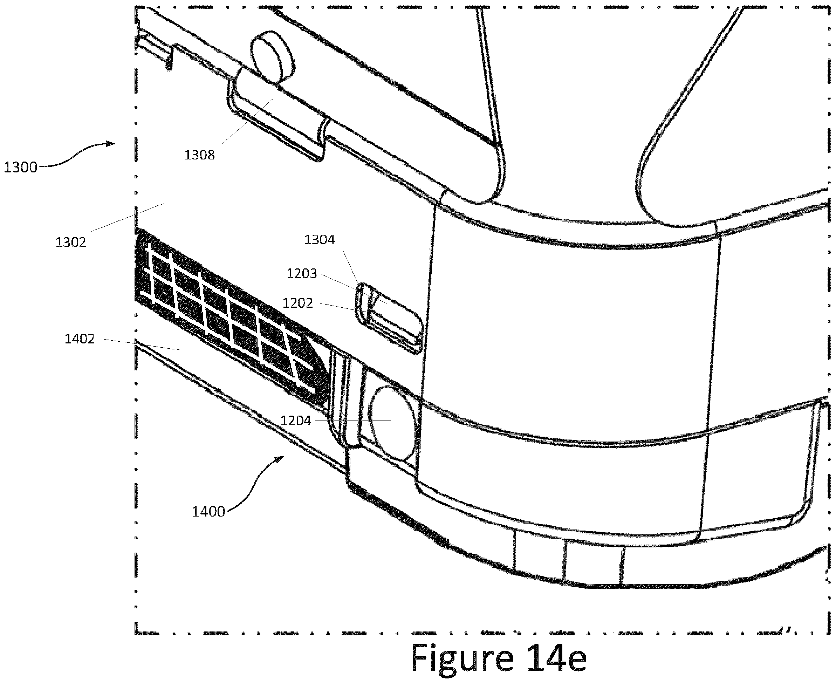

Figure 14E shows a detail of the lighting device 1400, quick release device 1200, and the light modification device 1300. The detail is taken from the same angle as that of Figure 14C however with the light modification device 1300 installed and the quick release device in the depressed or unlock position ready for the light modification device 1300 to be quickly removed.

In this example, the light modification device protrusion 1202 is shown not inserted through the protrusion interfacing member 1304. This means that the (presuming either there are no other quick release devices 1200 or all other quick release devices are in the unlocked position) light modification device 1300 can be removed without the light modification device protrusion 1202 interfering with the light modification device 1300.

When attaching the light modification device 1300 the light modification device 1300 is slid over the quick release device 1200. The body 1302 of the light modification device 1300 interfaces with the inclined leading surface 1203 of the light modification device protrusion 1202 such that body 1302 of the light modification device 1300 gradually depresses the light modification device protrusion 1202 of the quick release device 1200.

When the complementary protrusion interfacing member 1304 of the light modification device 1300 aligns with the light modification device protrusion 1202, the light modification device protrusion 1202 is able to move back into the locked position thereby holding the light modification device 1300 in place.

The abutment surface 1204 is shaped such that any force applied in the direction of removing the light modification device 1300 will not encourage the light modification device protrusion 1202 to move from the locked position to the unlocked position. Therefore, once in the locked position, without the button 1205 or the light modification device protrusion 1202 being interacted with, the light modification device 1300 is locked onto the light assembly 1100.

The quick release device 1200 is named as such for the quick and simple process of releasing the light modification device from the light assembly 1100.

When removing the light modification device 1300, the user depresses the button 1205 such that the light modification device protrusion 1202 is moved from the locked position to the unlocked position. In this position, the light modification device 1300 can freely move without the abutment surface 1204 of the light modification device protrusion 1202 (or any other part of the quick release device 1200) interfering with the body 1302 or the protrusion interfacing member 1304 of the light modification device 1300.

Depending on the number and positioning of the quick release device(s) 1200 on the light assembly 1100, some or all of the quick release device(s) 1200 may need to be pressed at the same time to release the light modification device 1300.

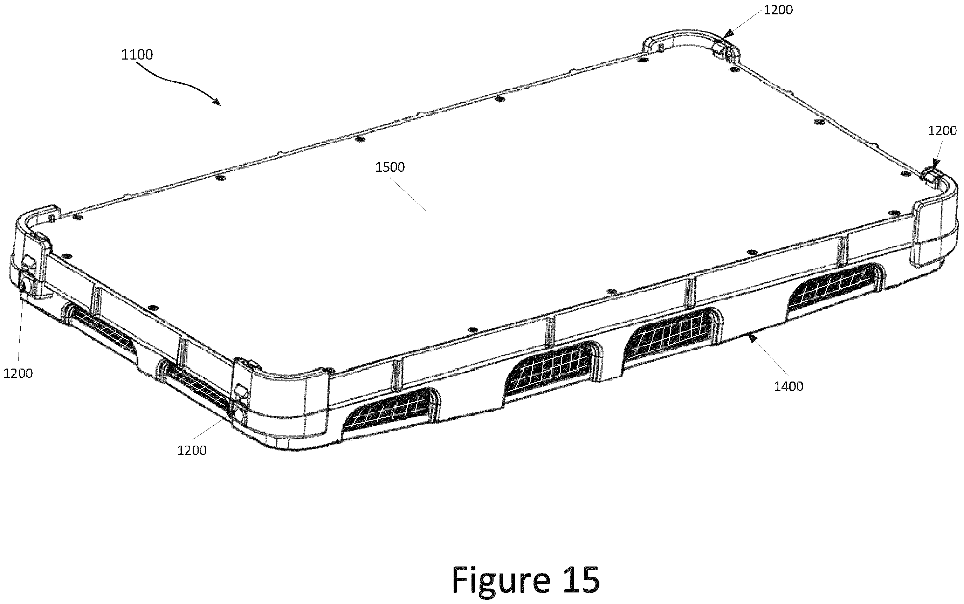

Referring to Figure 15, the lighting assembly 1100 is shown comprising four quick release members 1200, the lighting device 1400, and the diffuser 1500. The light modification device 1300 has been removed from the assembly 1100 and is not shown. The diffuser 1500 is positioned so as to sit on the platform provided by the lighting device attachment members 1206 of the quick release devices 1200.

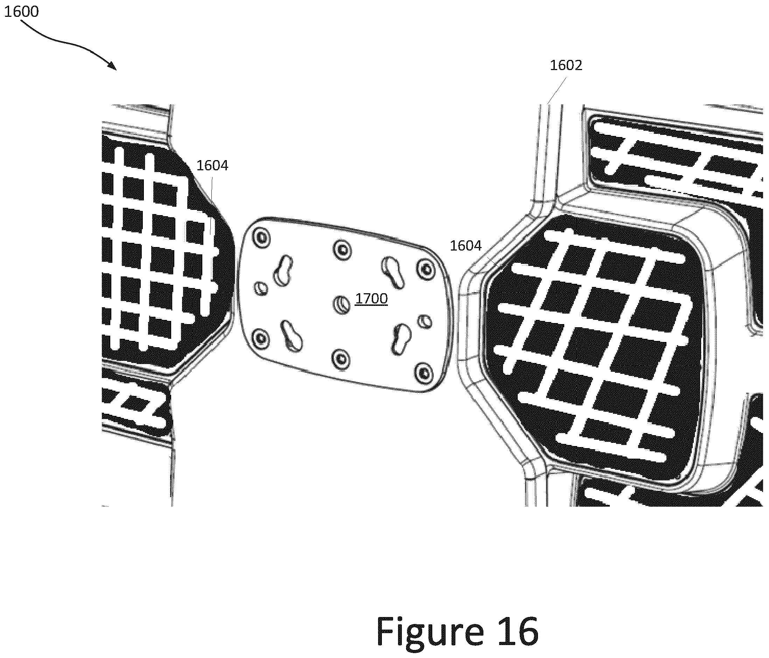

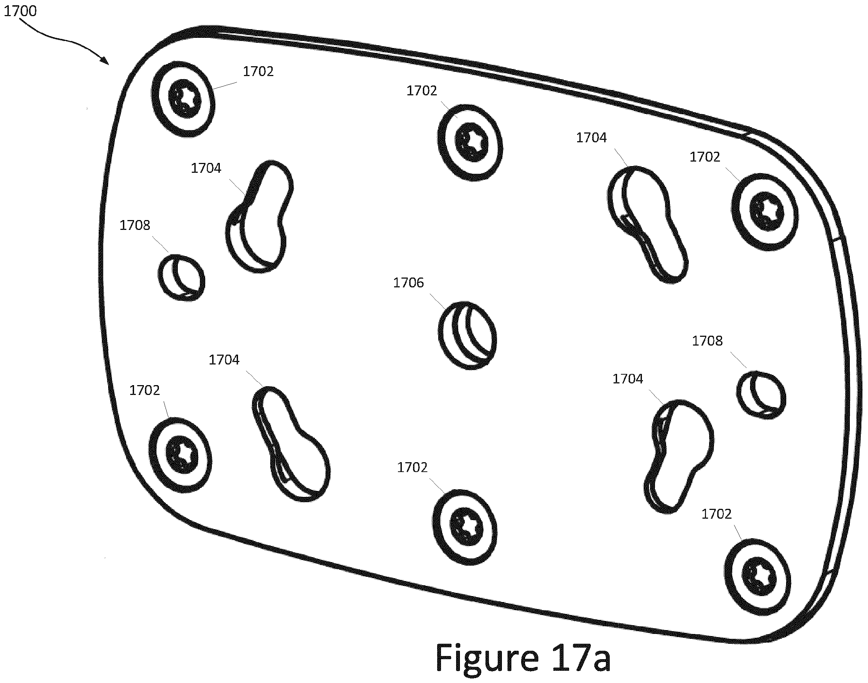

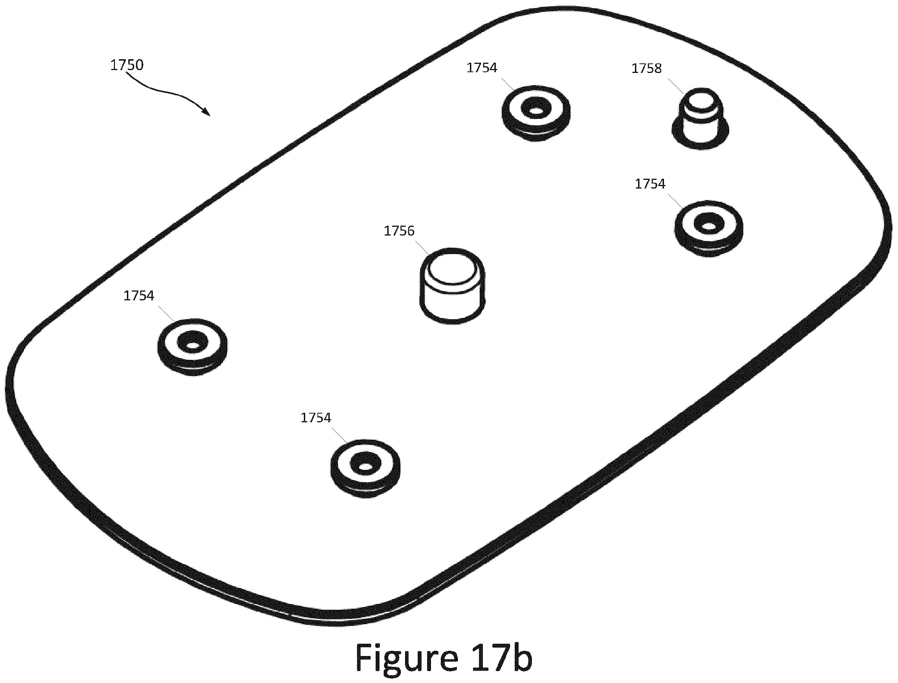

Referring to Figure 16, a light assembly 1600 of a further embodiment is shown comprising a light device 1602. The lighting device 1602 comprises a female interface member 1700, a pair of fans (located beneath the fan grills 1604 and not visible in this view) and a pair of complementary fan grills 1604. The female interface member 1700 and complementary male interface member 1750 (described in greater detail with reference to Figures 17A and 17B respectively) are of a particular type such that complementary male and female interfaces are configured to releasably couple with each other. In this example, the interface type is a Kino Flo ^{®} mounting plate developed by Kino Flo Lighting Systems. The interface 1700 is shown in greater detail in Figure 17. The fans and fan vents 1604 are configured to draw in air in through the back of the device. Alternatively, the fans and fan vents 1604 are configured to expel air out of the fan vents 1604 such that the air is drawn in from other air vents on the light device 1602. In this example, two fans are used. Alternatively, more fans are used. The number and power of the fans used will depend on the heat dissipated by the LEDs of the light device 1602 and the operating temperature of the LEDs. If a large amount of heat is generated, then a large number of fans and/or a high-powered fan are required to keep the LEDs within their safe operating temperature. The control unit 2006 is configured to control the speed/power of the fans

In an alternative example, the male and female interfaces 1700, 1750 are switched around and the lighting device 1602 comprises a male interface 1750.

The lighting assembly 1600 is shown in Figure 16 with nothing attached to the lighting device 1602. The interface type is an easy to use interface. The male and female interfaces 1700, 1750 are configured to provide easy but secure connection and disconnection from one member to another. In this example, the interfaces are arranged such that lighting device modules 1800 can be easily added or removed from the lighting assembly 1600.

The interface member 1700 of the light assembly 1600 is a female interface member configured for use with a male interface member. Alternatively, the light assembly 1600 comprises the male version of the interface member 1700.

Referring to Figure 17A, the female Kino Flo ^{®} mounting plate is shown comprising six permanent mounting holes 1702, four opening and slot members 1704, one central hole 1706, and two distal holes 1708. The permanent mounting holes 1702 are to mount the interface 1700 to the lighting device 1602 or another component permanently.

The holes 1702, 1704, 1706, 1708 here can be either apertures or blind holes. In the present example the holes are apertures such that they extend all the way through the other side of the member they are on. Alternatively, the holes are blind holes. In a further alternative, the holes 1702, 1704, 1706, 1708 are a mixture of blind holes and apertures.

Referring to Figure 17B, the male Kino Flo ^{®} mounting plate is shown four flanged posts 1754, one central post 1756, and at least one retractable post 1758. The four flanged posts 1754 are configured to interface with the four opening and slot members 1704 of the female interface 1700.

Referring to Figure 17A and 17B, the opening of the opening and slot members 1704 are big enough to allow the flange of the flanged post 1754 to pass through however the slots are too narrow such that the flange cannot pass through them but the posts can. The central post 1756 is configured to be received in the central hole 1706 and centre the interfaces relative to each other. The at least one retractable post 1758 is configured to retract when force is applied to the top of the post downward and/or the post is retracted from the other side of the interface by pulling it up. The at least one retractable post 1758 is configured to interface with one of the two distal holes 1708 of the male interface 1750.

In use, coupling the male interface 1750 with the female interface 1700 requires insertion of one interface into the other, then the rotation of one relative to the other. In particular, the male interface 1750 is inserted to the female interface 1700. In the present example, when connecting a lighting device module 1800 to the lighting device 1602, the lighting device module 1800 is generally the one rotated about the lighting device 1602, as such, generally, the male interface 1750 is rotated about the female interface 1700.

Preferably, the at least one retractable post 1758 biased towards an extended position (i.e. not retracted). More preferably, the at least one retractable post 1758 is spring loaded.

More specifically, when coupling the male interface 1750 and female interface 1700, the male interface 1750 and female interface 1700 are brought into contact such that the flanged posts 1752 passed through the opening and slot members 1704. In this orientation, the at least one retractable post 1758 is retracted by it being pressed against the body of the female interface 1700. The female interface 1700 and/or male interface 1750 are rotated such that the posts of the flanged posts 1752 move along the path defined by the slot of the opening and slot members 1704. While the interfaces 1700, 1750 rotate relatively, the at least one retractable post 1758 will move over one of the two distal holes 1708 and be inserted into tone of the distal holes 1708. This will stop the rotation movement of the two interfaces 1700, 1750 relative to each other. The flanges of the flanged posts 1752 provide a supportive force to retain the interfaces 1700, 1750 together.

To remove the interfaces 1700, 1750 from each other, the at least one retractable post 1758 is retracted and the rotation is made in reverse such that the flange of the flanged posts 1752 are aligned with the holes of the opening and slot members 1704 then the interfaces 1700, 1750 can be removed from one another.

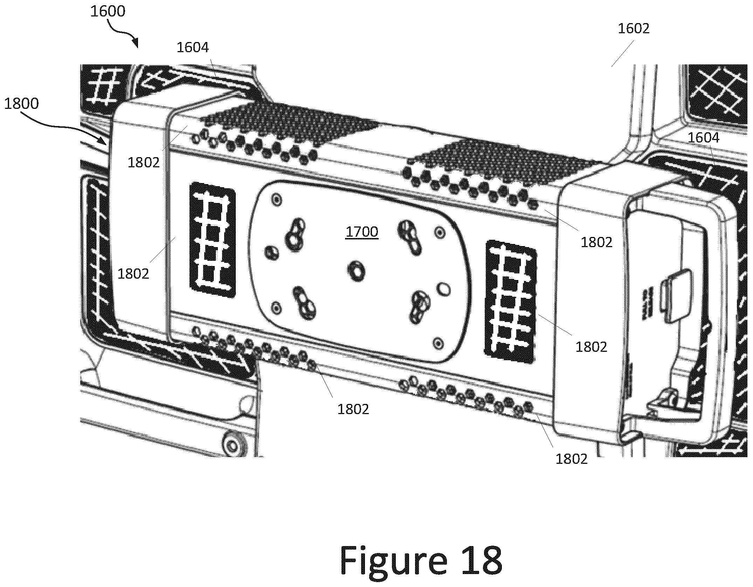

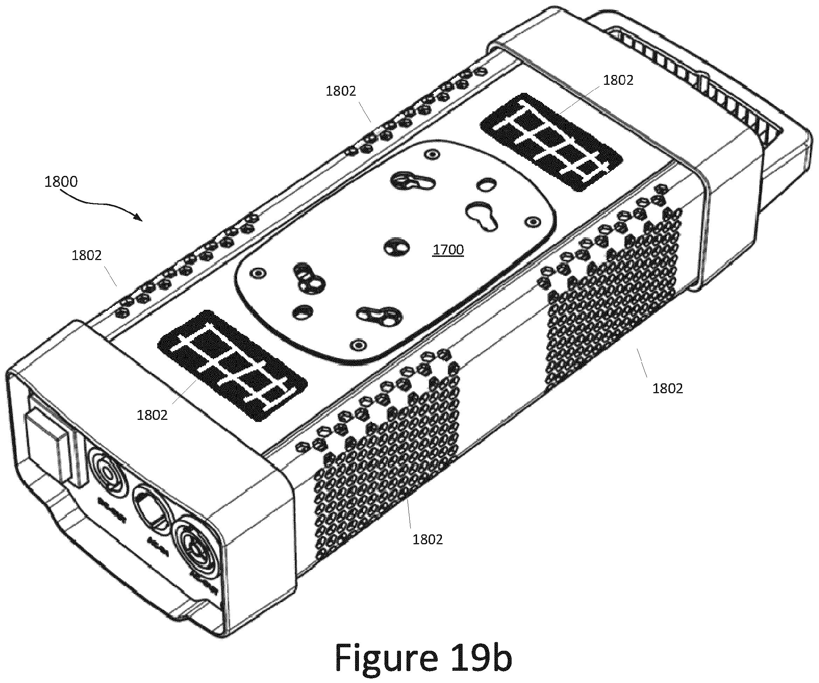

Alternative to the six permanent mounting holes 1702, four permanent mounting holes 1702 are used as shown in the lighting device module's female interface 1700 as shown in Figure 18 and Figure 19B. Different numbers of permanent mounting holes 1702 are used depending on the weight of and forces applied to the lighting assembly 1600. In a further alternative, the interface 1700 may be integral to the lighting device 1602 or other component, as shown with the male interface 1750 of the lighting device module 1800. In a further alternative, adhesive is used to attach the interface.

Referring to Figure 18, the lighting assembly 1600 is shown with a lighting device module 1800 attached via the interface 1700. The lighting device module 1800 comprises a male interface 1750 complementary to the female interface 1700 of the lighting device 1602. The lighting device module 1800 further comprises air vents 1802. The air vents 1802 are configured to allow air to pass in and out of the lighting device module 1800 for cooling purposes. In the present example the lighting device module 1800 is an active device and generates heat. The heat will need to be dissipated. The heat is dissipated by air flow moving through the lighting device module 1800.

Notably, the lighting device module 1800 is presenting (for further interfacing) the same type of interface 1700 (a female interface) that the lighting device 1602 presented for the lighting device module 1800 to interface with.

In this example, when the lighting device module 1800 is attached to the lighting assembly 1600 as shown in Figure 18, the air vents 1802 of the lighting device module 1800 are aligned with the fan vents 1604 of the lighting device 1600. This way, in use and when the fans of the lighting device 1600 are in operation and drawing air through the lighting device 1600, some air will also be drawn through the lighting device module 1800. As such, the lighting device module 1800 will be actively cooled even if the lighting device module 1800 does not contain any fans itself.

If further lighting device modules 1800 are stacked on each other, the air vents 1802 of the lighting device modules 1800 will align such that an air channel is made through the lighting device modules 1800 and all of them can be cooled.

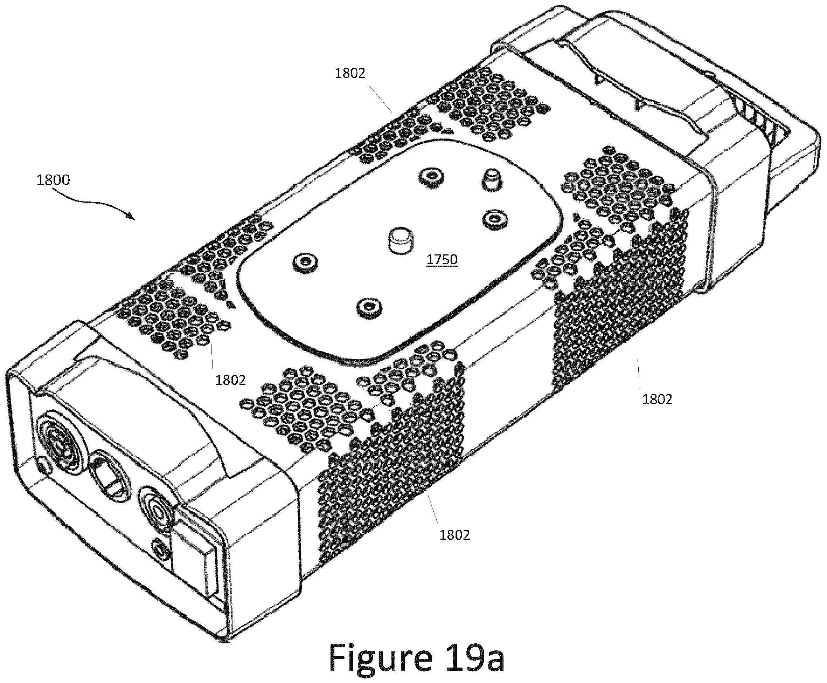

Referring to Figure 19A and 19B, two sides of a lighting device module 1800 is shown comprising a female interface 1700 on one side and a male interface 1750 on the other side.

In this example, the lighting device module 1800 is a power supply. The power supply comprises a converter for converting a received power to a different type (e.g. converting AC voltage to DC voltage or vice versa) and/or comprises a converter for altering a property of the received power, e.g. stepping up or stepping down the voltage. By way of an example, the internal power supply 2020 of the lighting device 1602 wants 12VDC and voltage coming out of the wall is 240VAC. The power supply rectifies and steps down the voltage coming out the wall to match that required by the internal power supply 2020.

The lighting device module 1800 optionally includes an electrical connection to the lighting device 1602 such that it can control, modify, and/or enhance features of the lighting device 1602 and/or other aspects of the lighting assembly 1600 such as other attachments and/or other modules. The electrical connection includes a power interface and/or a data communication interface such as SPI or I2C, Ethernet, parallel port, USB, and/or DMX.

By way of example, the lighting device module 1800 can be any one of the following non-exhaustive list of modules:
- filter control module,
- battery module,
- DMX controller,
- light modification device 1300 controller,
- user interface module,
- lighting device controller,
- DMX interface, and/or
- Bluetooth ^{®} controller.

If the lighting device module 1800 comprises a lighting device controller, some or all of the features of the control unit 2006 (as described with reference to Figure 21) may be included in this lighting device module 1800.

The female interface 1700 of the lighting device module 1800 is configured to interface with further male interfaces 1700 of the same type. This allows for stacking of modules 1800 such that the lighting assembly 1600 is configured to comprise at least one lighting device module 1800.

The final female interface 1700 of the last lighting device module 1800 (or of the lighting device 1602 itself if no lighting device modules 1800 are attached) is configured to receive a lighting assembly mount (not shown). The lighting assembly mount is used to mount the lighting assembly 1600.

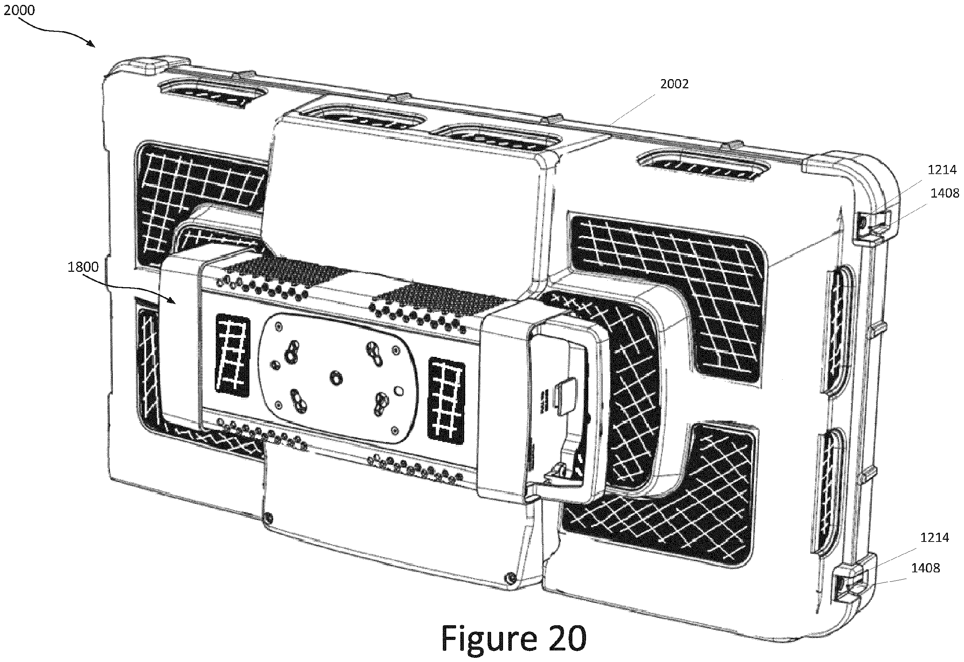

Referring to Figure 20, a further embodiment of the present disclosure is shown. A lighting assembly 2000 is shown comprising a lighting device 2002 and a lighting device module 1800. The lighting device 2002 may be the light 12 described with reference to Figures 1 to 10, and it should be understood that the attachment mechanisms for attaching light modification devices (such as barndoors) and lighting device modules (such as power supply units) can be used with the light 12 described with references to Figures 1 to 10b, and controlled via the user controls and user interface described with references to Figures 10a and 10b.

The lighting assembly 2000 of this embodiment comprises the quick release device 1200 (and associated features) of the embodiment described with reference to Figures 11A to 15 and the lighting device module 1800 (and associated interfacing features 1700, 1750) as described with reference to Figures 16 to 19B.

As can be seen in Figure 20, the body of the lighting device 2002 comprises light modification device protrusion apertures 1408 for use with the quick release device 1200. The first component 1220 is not shown and the second component 1222 is obscured however the spring 1214 can be seen.

The lighting assembly 2000 of this example shows a fully modular system that is capable of quickly and easily attaching light modification device(s) 1300 (not shown in Figure 20) and lighting device modules 1800 (shown as a power supply in Figure 20).

In an alternative example, the lighting device module 1800 is for use with the light modification device 1300, such as the light modification device 1300 is a barn door system (as described with reference to Figures 11A and 11B) and the lighting device module 1800 is a barn door controller. This way, with both of these peripherals attached, the barn doors can be controlled in an automatic and/or computer controlled manner, rather than a manual way without any modification to the lighting assembly 2000 controller system, electronic circuitry, or any other componentry (other than attaching the devices 1300, 1800).

As such, with attachable light modification device 1300 (via the quick release device 1200) and attachable and stackable lighting device module 1800, the lighting assembly 2000 is a highly modular, customisable, and flexible system. Further, as a result of the easy to user attachment mechanisms 1200, 1700, 1750, the modular, customisable, and flexible system is easy to use and encourages users to experiment with different lighting arrangements while only requiring the purchase of a single lighting assembly 2000.

Referring to Figure 21, exemplary componentry for the lighting assembly 2000 as described with reference to Figure 20 is shown. This example componentry of Figure 21 is similar to that of the componentry in the other example lighting assemblies 1100, 1600 as described with reference to Figures 11A to 19B and similar to the componentry of the light 12 described with reference to Figure 2. A person skilled in the art will appreciate that the example componentry specific to the light modification device 1300 are not present in the examples and embodiments described with reference Figure 16 to Figure 19B (as these examples don't comprise a light modification device 1300) and similar with the example componentry specific to lighting device module 1800 (an external power supply in this case) for the examples and embodiments described with reference Figure 11A to Figure 15.

The lighting assembly 2000 comprises the lighting device 2001. The lighting device 2001 comprises components user controls 2002, a calibration memory 2004, a control unit 2006, LED drive electronics 2008, a light emitter 2010, a digital to analog converter 2012, an op-amp 2014, and a diffuser 1500. In this example, the diffuser 1500 is an adjustable diffuser 216 as described above, preferably in the form of a diffuser assembly 420 as described above. Optionally, the light contains an input means for a demultiplexer 2018, which enables multiple lights to be controlled by a single control system. The lighting assembly 2000 further comprises at least one of an internal power supply 2020, a lighting device module 1800, and a light modification device 1300. In this example the lighting device module 1800 is an external power supply. In this example the light modification device 1300 is barn door module.

The user controls 2002 typically comprise input means, such as rotary knobs, buttons and/or a touchscreen, located on the outer, preferably rear, surface of the lighting assembly 2000. The user controls 2002 enable the user to modify the characteristics of the output of the lighting assembly 2000, such as the amount of diffusion and the intensity and hue of the output of the lighting assembly 2000. In some examples, the user controls 2002 comprise a remote user control means, for example the lighting assembly 2000 may be controllable using an application on a phone or a computer. In these examples, the lighting assembly 2000 comprises a communications interface; this interface may be a wired communication interface, such as a USB port, and/or may be a wireless interface, such as a WiFi interface, a 4G interface and/or a Bluetooth^{™} interface. Typically, the user controls 2002 further comprises an output means and/or a display means that enables the user to view the present settings and view the input settings. The display means may be a local display, such as a screen, located on the lighting assembly 2000 and/or may be a remote display, such as the screen of a phone or a computer. The display means may also comprise a speaker and/or a tactile mechanism. In this example, the user controls 2002 are the user controls 202 described above with reference to figures 10a and 10b, which comprises a user interface 1002 providing a preview (or 'visualisation') of the output of the lighting device.

The calibration memory 2004 is arranged to store information relating to the performance of a light emitter 2010 and/or an adjustable diffuser 1500. Typically, the calibration memory 2004 relates a desired output, such as a desired diffusion percentage, to a control signal required to obtain this desired output, such as a voltage. This enables a user to enter a desired output characteristic in familiar units (such as a value of output Lux) and have this converted to the electronic units required to achieve the output characteristic (such as a current or voltage). Further, the calibration memory 2004 enables consistency across lighting units. Where multiple lights are used, each light typically has slightly different characteristics, as may be caused by manufacturing tolerances; therefore, the same input provided to similar light emitters typically results in a slightly different output. The calibration memory 2004 enables consistency across lights by relating a (same) desired output to the (different) required control signals for each light.

Typically, the information stored in the calibration memory 2004 is determined during initial use of the lighting assembly 2000, where the settings (e.g. voltage) required to obtain given output characteristics are determined and stored. In some examples, the calibration memory 2004 is pre-loaded in the lighting assembly 2000, where the required information may be obtained from, for example, another light and/or the manufacturer of the adjustable diffuser.

The control unit 2006 combines the user input from the user controls 2002 with the calibration details stored in the calibration memory 2004 to determine and provide suitable control signals for the light emitter 2010 and the adjustable diffuser 1500. The control unit 2006 typically implements algorithms in order to determine suitable control signals given a desired output.

The control unit 2006 provides a lighting control signal to the lighting drive electronics 2008. Based on this control signal, the lighting drive electronics provides a voltage to the light emitter 2010. The light emitter 2010 produces light as a result of the provided voltage. Typically, the light emitter 2010 comprises one or more light emitting diodes (LEDs); the light emitter may also comprise other lighting means, such as halogen lights.

The control unit 2006 provides a diffusion control signal to a digital to analog converter 2012, which then provides an analog signal to an operation amplifier (op-amp) 2014; the op-amp is typically a high gain, AC coupled, op-amp. The amplified analog signal produced by the op-amp 2014 is provided to the adjustable diffuser 1500.

The adjustable diffuser 1500 is arranged so that the diffusion properties change in response to changes in the amplified analog signal. Typically, an increase in the voltage provided to the adjustable diffuser 1500 results in an increase in the opacity of the adjustable diffuser 1500 leading to a reduced light intensity and increased diffusion.

The light emitter 2010 and/or adjustable diffuser 1500 are arranged so that changes in the respective control signals vary the diffusion magnitude, the output beam angle, the hue of the output, the colour temperature of the output and the luminance of the output. It will be appreciated that other characteristics of the output light may also be varied by varying the characteristics of the adjustable diffuser 1500.

Optionally, the lighting assembly 2000 comprises an input for a demultiplexer (DMX) 2018 or a wireless demultiplexer (wDMX); this enables numerous lights to be controlled using a single lighting system control panel. The demultiplexer input may be in addition to or in place of the user controls 2002. Typically, the light comprises both user controls 2002 and a demultiplexer input, where one of these input means may be arranged to take priority. The demultiplexer input may be considered to be a part of the user controls.

The lighting assembly 2000 comprises at least one of an internal power supply 2020 and a power input arranged to connect to an external power supply 1800. In some examples, the lighting assembly 2000 comprises an integral battery, a connection suitable for receiving power from an external battery, and a connection for receiving power from a mains supply. In various examples, the internal power supply 2020 and/or the external power supply 1800 comprises a converter for converting a received power to a different type (e.g. converting AC voltage to DC voltage or vice versa) and/or comprises a converter for altering a property of the received power, e.g. stepping up or stepping down the voltage.

### Alternatives and modifications

It will be understood that the present invention has been described above purely by way of example, and modifications of detail can be made within the scope of the invention, which is defined by the appended claims.

While the detailed description has referred to the adjustable diffuser 216 being controlled using voltage, it will be understood that different types of adjustable diffusers 216 may be used, for example the adjustable diffuser 216 may be arranged to have characteristics that change in response to a change in temperature and/or light.

While the detailed description has described the control of the diffusion, hue and luminosity of the light 12, it will be understood that other output properties could also be controlled. For example, the correlated colour temperature (CCT), beam angle, and focus of the light 12 may also be controlled.

While the detailed description has described the adjustable diffuser 216 as being controlled (indirectly) by a user, it is also possible to automatically alter the characteristics of the adjustable diffuser 216, for example in response to a stimuli. This may comprise the adjustable diffuser 216 being altered in response to a change in ambient lighting and/or temperature.

In some embodiments, the control unit 206 is arranged to receive signals from sensors and control the adjustable diffuser 216 in response to these measurements. As an example, the control unit 206 may be arranged to alter the diffuser control signal (and the lighting control signal) in response to a change in the light, temperature, and/or ambiance of an environment without input from the user. The control unit 206 may be arranged to determine an optimal output based on the measured environmental properties; this optimal output may be based on previous settings used for the light 12 and may be based on a machine learning process for determining the optimal output.

In some embodiments, the control unit 206 sends signals directly to the light emitter 210 and/or the adjustable diffuser 216, e.g. there is no lighting drive electronics 208, digital to analog converter 212, op-amp 214.

In some embodiments multiple lights are used; in these embodiments the lights may be synchronized, for example via the demultiplexer 218. In some embodiments, one light is used as the 'master' controller and the remaining lights are used as 'slaves', for which the output diffusion is adjusted in accordance with the output diffusion of the master light. In these embodiments, the control unit 206 of the master light is typically used to determine the properties of the slave lights.

In some embodiments, a single control unit is used to control the light emitter 210 and/or adjustable diffuser 216 of multiple lights. The control unit may be contained in any one of the lights or may be a centralised control unit. The control unit may be a part of a computer device that is used to control multiple lights; the lights may be remote to the computer device.

In some embodiments, the control unit 206 is arranged to adjust the barn doors 224 to alter the output of the light 12. Similar to the alteration of the light emitter 210, the adjustment of the barn doors 224 may be arranged to maintain, for example, an output hue, 'softness', diffusion, and/or luminance.

The light 12 may be portable; this enables the light to be moved between sets.

While the user interface 1002 has been primarily described with the preview 1010 showing a colour and intensity of the output of the light 12, it will be appreciated that the preview 1010 may also show other features. As examples, the preview 1010 may be arranged to show a visualisation that is a 3D representation of a scene using the inputs from multiple lights; this can be used to, e.g. show the lighting conditions on a stage. This visualisation may, for example, show how the beams from each light interact. The visualisation may also, or alternatively, show how the output changes with time, or with space.

In some embodiments, the user interface 1002 is configured in dependence on the light 12. In particular, the user interface 1002 may be paired with the light to optimise the performance of the user interface with a specific light. This may comprise determining properties of the light 12 and/or the environment of the light 12 in order to ensure that an accurate representation of the light is shown to a user of the user interface 1002. In some embodiments, the operation of the user interface is dependent on the light 12 and/or the environment in which the light 12 is located. Where multiple lights are used for a scene, the user interfaces of each lights may operate differently in order to provide an optimal user experience for that light - for example the user interface of a light located in a bright are might be brighter than the user interface of a light located in a darker area.

The present disclosure relates in part to a controlling interface, such as an application on a computer or a smartphone, which is arranged to control a light with an adjustable diffuser. In some embodiments, an application is provided which allows a user to select an output diffusion, softness, luminance, or hue. This selection can be provided to the control unit 206 of the light 12 following which the control unit 206 adjusts the adjustable diffuser 216 accordingly. The controlling interface may be provided separately to the light 12 and may be provided by a party that is not related to a manufacturer of the light 12.

The controlling interface may operate in conjunction with, or as an alternative to, the user interface 1002. For example, a smartphone application may be used to control the interface control unit. In these embodiments, the interface control unit is typically still provided and performs computations related to the display of the preview 1010.

The interface control unit is typically a specialized component; for example, the interface control unit may contain one or more powerful graphical processing units (GPUs) that enable the provision of a range of graphical effects.

Reference numerals appearing in the claims are by way of illustration only and shall have no limiting effect on the scope of the claims.

## Claims

1. A lighting device (12) comprising:
a light emitter (210);
a diffuser (216);
one or more lenses (404) located between the light emitter (210) and the diffuser (216); and
a control unit (206);
wherein the control unit (206) is capable of adjusting the diffusivity of the diffuser (216) using an electric signal, and wherein the control unit (206) is configured to adjust the properties of the light emitter (210) in dependence on the diffusivity of the diffuser (216).

2. The lighting device (12) according to any preceding claim, wherein the lenses (404) are arranged to narrow the beam of the light emitter (210).

3. The lighting device (12) according to claim 1 or 2, further comprising a texturing material located between the light emitter (210) and the lenses (404).

4. The lighting device (12) of any preceding claim, wherein the control unit (206) is configured to adjust the properties of the light emitter (210) in dependence on the diffusivity of the diffuser (216) so as to maintain at least one of: a hue; a colour temperature; an intensity; a luminance; a relative brightness of certain light emitting diodes within the light emitter; and/or a wavelength of light emitted by certain light emitting diodes within the light emitter.

5. The lighting device (12) of any preceding claim, wherein the control unit (206) and/or diffuser (216) is an integral part of the lighting device (12).

6. The lighting device (12) of any preceding claim, wherein the lighting device (12) further comprises a storage means for storing information relating to the properties of the diffuser (216) and/or light emitter (210).

7. The lighting device (12) according to any preceding claim, wherein the control unit (206) is arranged to adjust the diffusivity of the diffuser (216) and/or the properties of the light emitter (210) based on predetermined calibration information.

8. The lighting device (12) according to any preceding claim, further comprising a measurement sensor arranged to measure a property relating to the output of the lighting device (12), wherein the measurement sensor is arranged to measure at least one of: the diffusivity; the luminance; the hue; and the colour temperature of an environment and/or an output of the lighting device (12), and wherein the control unit (206) is arranged to adjust the properties of the diffuser (216) and/or the light emitter (210) based on an output of the measurement sensor.

9. The lighting device (12) according to any preceding claim, wherein the diffuser (216) is mounted to the rear of a transparent front cover of the lighting device.

10. The lighting device (12) according to any preceding claim, wherein the diffuser (216) comprises a polymer dispersed liquid crystal (PDLC).

11. The lighting device (12) of any preceding claim, wherein the light emitter (210) comprises a plurality of LEDs, wherein at least two of the plurality of LEDs are oriented differently.

12. The lighting device (12) according to any preceding claim, wherein the control unit (206) is arranged to provide to the adjustable diffuser (216) an electric signal that is substantially a square wave and/or an electric signal that has a frequency that is a multiple of 50Hz, wherein the frequency and/or shape of the electric signal is controlled in dependence on a shutter angle and/or a frame rate of a camera.

13. The lighting device (12) according to any preceding claim, wherein the lighting device (12) is capable of storing settings related to the adjustment of the diffuser (216), and wherein the lighting device (12) is arranged to store a selected setting in dependence on a user input.

14. A lighting system comprising one or more lighting devices (12) according to any of claims 1 to 13, wherein each of the lighting devices (12) is arranged to be controlled using a single master control unit.

15. A computer program product for operating the lighting device (12) or lighting system of any of claims 1 to 14, the computer program comprising software code which, when executed by a processor, is configured to adjust the diffusivity of the diffuser (216) using an electric signal.

## Patentansprüche

1. Eine Beleuchtungsvorrichtung (12), die Folgendes umfasst:
einen Lichtsender (210);
einen Diffusor (216);
eine oder mehrere Linsen (404), die zwischen dem Lichtsender (210) und dem Diffusor (216) liegen; und
eine Steuerungseinheit (206);
wobei die Steuerungseinheit (206) fähig ist, die Diffusität des Diffusors (216) unter Verwendung eines elektrischen Signals zu verstellen, und wobei die Steuerungseinheit (206) dazu konfiguriert ist, die Eigenschaften des Lichtsenders (210) in Abhängigkeit von der Diffusität des Diffusors (216) zu verstellen.

2. Die Beleuchtungsvorrichtung (12) gemäß einem vorhergehenden Anspruch, wobei die Linsen (404) eingerichtet sind, um den Strahl des Lichtsenders (210) zu verengen.

3. Die Beleuchtungsvorrichtung (12) gemäß Anspruch 1 oder 2, die ferner ein texturierendes Material umfasst, das zwischen dem Lichtsender (210) und den Linsen (404) liegt.

4. Die Beleuchtungsvorrichtung (12) nach einem vorhergehenden Anspruch, wobei die Steuerungseinheit (206) dazu konfiguriert ist, die Eigenschaften des Lichtsenders (210) in Abhängigkeit von der Diffusität des Diffusors (216) zu verstellen, um mindestens eines von Folgendem aufrechtzuerhalten: einen Farbton; eine Farbtemperatur; eine Intensität; eine Leuchtkraft; eine relative Helligkeit von gewissen lichtemittierenden Dioden innerhalb des Lichtsenders; und/oder eine Wellenlänge von Licht, das von gewissen lichtemittierenden Dioden innerhalb des Lichtsenders emittiert wird.

5. Die Beleuchtungsvorrichtung (12) nach einem vorhergehenden Anspruch, wobei die Steuerungseinheit (206) und/oder der Diffusor (216) ein integraler Teil der Beleuchtungsvorrichtung (12) sind/ist.

6. Die Beleuchtungsvorrichtung (12) nach einem vorhergehenden Anspruch, wobei die Beleuchtungsvorrichtung (12) ferner ein Speicherungsmittel zum Speichern von Informationen bezüglich der Eigenschaften des Diffusors (216) und/oder des Lichtsenders (210) umfasst.

7. Die Beleuchtungsvorrichtung (12) nach einem vorhergehenden Anspruch, wobei die Steuerungseinheit (206) eingerichtet ist, um die Diffusität des Diffusors (216) und/oder die Eigenschaften des Lichtsenders (210) basierend auf vorherbestimmten Kalibrierungsinformationen zu verstellen.

8. Die Beleuchtungsvorrichtung (12) nach einem vorhergehenden Anspruch, die ferner einen Messsensor umfasst, der eingerichtet ist, um eine Eigenschaft bezüglich der Ausgabe der Beleuchtungsvorrichtung (12) zu messen, wobei der Messsensor eingerichtet ist, um mindestens eines von Folgendem zu messen: die Diffusität; die Leuchtkraft; den Farbton; und die Farbtemperatur einer Umgebung und/oder eine Ausgabe der Beleuchtungsvorrichtung (12), und wobei die Steuerungseinheit (206) eingerichtet ist, um die Eigenschaften des Diffusors (216) und/oder des Lichtsenders (210) basierend auf einer Ausgabe des Messsensors zu verstellen.

9. Die Beleuchtungsvorrichtung (12) gemäß einem vorhergehenden Anspruch, wobei der Diffusor (216) auf der Rückseite einer transparenten Vorderabdeckung der Beleuchtungsvorrichtung montiert ist.

10. Die Beleuchtungsvorrichtung (12) gemäß einem vorhergehenden Anspruch, wobei der Diffusor (216) ein polymerdispergiertes Flüssigkristall (polymer dispersed liquid crystal, PDLC) umfasst.

11. Die Beleuchtungsvorrichtung (12) nach einem vorhergehenden Anspruch, wobei der Lichtsender (210) eine Vielzahl von LEDs umfasst, wobei mindestens zwei der Vielzahl von LEDs unterschiedlich orientiert sind.

12. Die Beleuchtungsvorrichtung (12) nach einem vorhergehenden Anspruch, wobei die Steuerungseinheit (206) eingerichtet ist, um dem verstellbaren Diffusor (216) ein elektrisches Signal bereitzustellen, das im Wesentlichen eine Rechteckwelle ist und/oder ein elektrisches Signal, das eine Frequenz aufweist, die ein Vielfaches von 50 Hz ist, bereitzustellen, wobei die Frequenz und/oder die Form des elektrischen Signals in Abhängigkeit von einem Verschlusswinkel und/oder einer Frame-Rate einer Kamera gesteuert werden/wird.

13. Die Beleuchtungsvorrichtung (12) gemäß einem vorhergehenden Anspruch, wobei die Beleuchtungsvorrichtung (12) fähig ist, Einstellungen bezüglich der Verstellung des Diffusors (216) zu speichern, und wobei die Beleuchtungsvorrichtung (12) eingerichtet ist, um eine ausgewählte Einstellung in Abhängigkeit von einer Benutzereingabe zu speichern.

14. Ein Beleuchtungssystem, das eine oder mehrere Beleuchtungsvorrichtungen (12) gemäß einem der Ansprüche 1 bis 13 umfasst, wobei jede der Beleuchtungsvorrichtungen (12) eingerichtet ist, um unter Verwendung einer einzelnen Hauptsteuerungseinheit gesteuert zu werden.

15. Ein Computerprogrammprodukt zum Betreiben der Beleuchtungsvorrichtung (12) oder des Beleuchtungssystems gemäß einem der Ansprüche 1 bis 14, wobei das Computerprogramm Softwarecode umfasst, der, wenn er von einem Prozessor ausgeführt wird, dazu konfiguriert ist, die Diffusität des Diffusors (216) unter Verwendung eines elektrischen Signals zu verstellen.

## Revendications

1. Dispositif d'éclairage (12) comprenant :
un émetteur de lumière (210) ;
un diffuseur (216) ;
une ou plusieurs lentilles (404) situées entre l'émetteur de lumière (210) et le diffuseur (216) ; et
une unité de commande (206) ;
l'unité de commande (206) étant en mesure de régler la diffusivité du diffuseur (216) au moyen d'un signal électrique, et l'unité de commande (206) étant configurée pour régler les propriétés de l'émetteur de lumière (210) en fonction de la diffusivité du diffuseur (216).

2. Dispositif d'éclairage (12) selon la revendication précédente, dans lequel les lentilles (404) sont agencées de manière à réduire le faisceau de l'émetteur de lumière (210).

3. Dispositif d'éclairage (12) selon la revendication 1 ou 2, comprenant en outre un matériau de texturation situé entre l'émetteur de lumière (210) et les lentilles (404).

4. Dispositif d'éclairage (12) selon l'une quelconque des revendications précédentes, dans lequel l'unité de commande (206) est configurée pour régler les propriétés de l'émetteur de lumière (210) en fonction de la diffusivité du diffuseur (216) de manière à maintenir au moins l'un des paramètres suivants : une teinte ; une température de couleur ; une intensité ; une luminance ; une luminosité relative de certaines diodes électroluminescentes à l'intérieur de l'émetteur de lumière ; et/ou une longueur d'onde de la lumière émise par certaines diodes électroluminescentes à l'intérieur de l'émetteur de lumière.

5. Dispositif d'éclairage (12) selon l'une quelconque des revendications précédentes, dans lequel l'unité de commande (206) et/ou le diffuseur (216) font partie intégrante du dispositif d'éclairage (12).

6. Dispositif d'éclairage (12) selon l'une quelconque des revendications précédentes, le dispositif d'éclairage (12) comprenant en outre un moyen de stockage pour stocker des informations relatives aux propriétés du diffuseur (216) et/ou de l'émetteur de lumière (210).

7. Dispositif d'éclairage (12) selon l'une quelconque des revendications précédentes, dans lequel l'unité de commande (206) est conçue pour régler la diffusivité du diffuseur (216) et/ou les propriétés de l'émetteur de lumière (210) sur la base d'informations d'étalonnage prédéterminées.

8. Dispositif d'éclairage (12) selon l'une quelconque des revendications précédentes, comprenant en outre un capteur de mesure conçu pour mesurer une propriété relative à la sortie du dispositif d'éclairage (12), le capteur de mesure étant conçu pour mesurer au moins un des paramètres suivants : la diffusivité ; la luminance ; la teinte ; et la température de couleur d'un environnement et/ou d'une sortie du dispositif d'éclairage (12), et l'unité de commande (206) étant conçue pour régler les propriétés du diffuseur (216) et/ou de l'émetteur de lumière (210) sur la base d'une sortie du capteur de mesure.

9. Dispositif d'éclairage (12) selon l'une quelconque des revendications précédentes, dans lequel le diffuseur (216) est monté à l'arrière d'un couvercle avant transparent du dispositif d'éclairage.

10. Dispositif d'éclairage (12) selon l'une quelconque des revendications précédentes, dans lequel le diffuseur (216) comprend un cristal liquide dispersé dans un polymère (PDLC).

11. Dispositif d'éclairage (12) selon l'une quelconque des revendications précédentes, dans lequel l'émetteur de lumière (210) comprend une pluralité de LED, au moins deux LED de la pluralité de LED étant orientées différemment.

12. Dispositif d'éclairage (12) selon l'une quelconque des revendications précédentes, dans lequel l'unité de commande (206) est conçue pour au diffuseur réglable (216) un signal électrique qui est sensiblement une onde carrée et/ou un signal électrique dont la fréquence est un multiple de 50 Hz, la fréquence et/ou la forme du signal électrique étant commandées en fonction d'un angle d'obturateur et/ou d'une fréquence d'image d'un appareil photo.

13. Dispositif d'éclairage (12) selon l'une quelconque des revendications précédentes, le dispositif d'éclairage (12) étant en mesure de stocker des paramètres relatifs au réglage du diffuseur (216), et le dispositif d'éclairage (12) étant conçu pour stocker un paramètre sélectionné en fonction d'une entrée d'utilisateur.

14. Système d'éclairage comprenant un ou plusieurs dispositifs d'éclairage (12) selon l'une quelconque des revendications 1 à 13, chacun des dispositifs d'éclairage (12) étant conçu pour être commandé au moyen d'une seule unité de commande maîtresse.

15. Produit-programme informatique permettant de faire fonctionner le dispositif d'éclairage (12) ou le système d'éclairage selon l'une quelconque des revendications 1 à 14, le programme informatique comprenant un code logiciel qui, lorsqu'il est exécuté par un processeur, est configuré pour régler la diffusivité du diffuseur (216) au moyen d'un signal électrique.
